# EUROPEAN PATENT APPLICATION

(11) **EP 4 818 551 A1**
(43) Date of publication of application: **07.10.2026**
(21) Application number: 26160422.7
(22) Date of filing: 24.02.2026
(51) Int. Cl.: F16H 9/16, F16H 61/662, F16H 7/12

(54) **BELT DRIVE SYSTEMS AND METHODS**

(30) Priority: 31.03.2025 US 202563780588 P; 03.10.2025 US 202519349443
(71) Applicant: Deere & Company, Moline, IL 61265 (US)
(72) Inventor: Trueblood, Logan K., 68163 Mannheim (DE); Rohlfing, Thomas J., 68163 Mannheim (DE)
(74) Representative: Holst, Sönke

(57) **Abstract**

An example method for controlling an adjustable pulley system may include rotating an input shaft of the adjustable pulley system to a selected rotation speed; altering an effective diameter of a driver pulley of the adjustable pulley system connected to the input shaft; altering an effective diameter of a driven pulley of the adjustable pulley in response to alteration of the effective diameter of the driver pulley; measuring a rotational speed of the output shaft of the pulley system; comparing a rotational speed of an output shaft of the adjustable pulley system to a selected criterion; determining whether the rotational speed of the output shaft satisfies the selected criterion; and altering a relationship between an idler pulley and the input shaft or the output shaft in response to the rotational speed of the output shaft not satisfying the selected criterion. The driven pulley is connected to the output shaft.

## Description

The present disclosure relates generally to belt drive systems and, particularly, to belt drive systems for adjusting a drive ratio.

### Background

Equipment, such as agricultural equipment, utilizes pulley systems to transfer forces and rotation from one location to another. Pulley systems may include pulleys with adjustable grooves to alter a speed ratio between coupled shafts. Altering a size of the grooves of the pulleys allows for an input shaft spinning at a defined rotational speed to alter a speed of an output shaft coupled to the input shaft via an endless belt.

### Summary

A first example of the present disclosure is directed a method for controlling an adjustable pulley system to detect a fault condition of the adjustable pulley system that includes a driver pulley, a driven pulley, and an endless belt wrapped around the driver pulley and the driven pulley. The method may include rotating an input shaft of the adjustable pulley system to a selected rotation speed; altering an effective diameter of the driver pulley of the adjustable pulley system connected to the input shaft; altering an effective diameter of the driven pulley of the adjustable pulley in response to alteration of the effective diameter of the driver pulley; measuring a rotational speed of the output shaft of the pulley system; comparing a rotational speed of an output shaft of the adjustable pulley system to a selected criterion; determining whether the rotational speed of the output shaft satisfies the selected criterion; and altering a relationship between an idler pulley and the input shaft or the output shaft in response to the rotational speed of the output shaft not satisfying the selected criterion. The driven pulley may be connected to the output shaft.

Another example of the present disclosure is directed to an adjustable pulley system. The adjustable pulley system may include a driver pulley, an input shaft connected to the driver pulley, a driven pulley, an output shaft connected to the driven pulley, an idler pulley, an endless belt wrapped around the driver pulley and the driven pulley and engaged with the idler pulley, and an electronic controller. The electronic controller may include one or more processors and a non-transitory computer-readable storage medium coupled to the one or more processors and storing programming instructions for execution by the one or more processors. The programming instructions may instruct the one or more processors to rotate the input shaft to a selected rotation speed; alter an effective diameter of the driver pulley connected to the input shaft; alter an effective diameter of the driven pulley in response to alteration of the effective diameter of the driver pulley; measure a rotational speed of the output shaft; compare a rotational speed of an output shaft to a selected criterion; determine whether the rotational speed of the output shaft satisfies the selected criterion; and alter a relationship of the idler pulley relative to the input shaft or the output shaft in response to the rotational speed not satisfying the selected criterion.

The various examples may include one or more of the following features. Altering the relationship between the idler pulley and the input shaft or the output shaft in response to the rotational speed of the output shaft not satisfying the selected criterion may include altering a position of the idler pulley in at least one direction relative to the input shaft or the output shaft. Altering the effective diameter of the driver pulley may include altering a size of a circumferential groove of the driver pulley. The driver pulley may include a first sheave portion and a second sheave portion. Altering the size of the circumferential groove may include altering a lateral offset of the first sheave portion relative to the second sheave portion. Altering the effective diameter of the driver pulley may include reducing the effective diameter of the driver pulley to the smallest effective diameter supported by the driver pulley. Altering the effective diameter of the driven pulley of the adjustable pulley in response to alteration of the effective diameter of the driver pulley may include increasing the effective diameter of the driven pulley. Altering the effective diameter of the driver pulley may include increasing the effective diameter of the driver pulley to the largest effective diameter supported by the driver pulley. Altering the effective diameter of the driven pulley of the adjustable pulley in response to alteration of the effective diameter of the driver pulley may include reducing the effective diameter of the driven pulley. An alert may be generated in response to the rotational speed of the output shaft not satisfying the selected criterion.

The various examples may include one or more of the following features. The programming instructions to alter the relationship between the idler pulley and the input shaft or the output shaft in response to the rotational speed of the output shaft not satisfying the selected criterion may include programming instructions that instruct the one or more processors to alter a position of the idler pulley relative to the input shaft or the output shaft. The programming instructions to alter the effective diameter of the driver pulley may include programming instructions that cause the one or more processors to alter a size of a circumferential groove of the driver pulley. The programming instructions to alter the size of the circumferential groove may include programming instructions that instruct the one or more processors to alter an offset of a first sheave portion of the driver pulley relative to the second sheave portion of the driver pulley. The programming instructions that instruct the one or more processors to alter the offset of a first sheave portion of the driver pulley relative to the second sheave portion of the driver pulley may include programming instructions that instruct the one or more processors to actuate an actuator to alter a position of the first sheave portion relative to the second sheave portion. The programming instructions that instruct the one or more processors to alter the offset of a first sheave portion of the driver pulley relative to the second sheave portion of the driver pulley may include programming instructions that instruct the one or more processors to actuator an actuator to alter a position of the first sheave portion relative to the second sheave portion. The programming instructions to alter the effective diameter of the driver pulley may include programming instructions that instruct the one or more processors to reduce the effective diameter of the driver pulley to the smallest effective diameter supported by the driver pulley. The programming instructions may include programming instructions that instruct the one or more processors to generate an alert in response to the rotational speed of the output shaft not satisfying the selected criterion. The endless belt may include an inner surface and an outer surface, and the idler pulley may be engaged with the inner surface of the endless belt. The endless belt may include an inner surface and an outer surface, and the idler pulley may be engaged with the outer surface of the endless belt.

Other features and aspects will become apparent by consideration of the detailed description and accompanying drawings.

### Brief Description of the Drawings

The detailed description of the drawings refers to the accompanying figures in which:
FIG. 1 is a side view of an example pulley system, according to some implementations of the present disclosure.
FIGs. 2 and 3 are front views of an example adjustable pulley, according to some implementations of the present disclosure.
FIG. 4 is another side view of the pulley system of FIG. 1 with a driver pulley having a reduced groove size, according to some implementations of the present disclosure.
FIG. 5 is another side view of the pulley system of FIG. 1 with a reduced center distance between the driver pulley and driven pulley, according to some implementations of the present disclosure.
FIG. 6 is a partial schematic view, partial diagrammatic of an example pulley system in which one rotary shaft is laterally displaceable relative to another rotary shaft, according to some implementations of the present disclosure.
FIG. 7 is a schematic view of an example electronic control system operable to control operation of an adjustable pulley system, according to some implementations of the present disclosure.
FIG. 8 is a flowchart of an example method of controlling operation of an adjustable pulley system, according to some implementations of the present disclosure.
FIG. 9 is an example plot of a system of graphs that is usable to control operation of an example pulley system having a pulley ratio of one, according to some implementations of the present disclosure.
FIG. 10 is another example plot of a system of graphs usable to control operation of an example pulley system having a pulley ratio of two, according to some implementations of the present disclosure.
FIG. 11 is another example plot of a system of graphs usable to control operation of an example pulley system having a pulley ratio of one half, according to some implementations of the present disclosure.
FIG. 12 is another example plot of a system of graphs usable to control operation of an example pulley system, according to some implementations of the present disclosure.
FIG. 13 is another example plot of a system of graphs that can be used to control a pulley system, according to some implementations of the present disclosure.
FIG. 14 is a flowchart of an example method for controlling operation of a pulley system to determine whether a fault exists with the pulley system, according to some implementations of the present disclosure.
FIG. 15 is an example plot that includes a three-dimensional surface representing how the effective diameter of a driver pulley and a center distance between an input shaft and an output shaft of an adjustable pulley system affects the rotational speed of the output shaft, according to some implementations of the present disclosure.
FIG. 16 is a diagram of a shape of an endless belt wrapped around a driver pulley and a driven pulley of an adjustable pulley system, according to some implementations of the present disclosure.
FIG. 17 is another example plot showing a three-dimensional plot that can be used to control an effective diameter of a driver pulley and center distance to produce a desired rotational speed of an output shaft of an adjustable pulley system, according to some implementations of the present disclosure.
FIG. 18 is another example plot showing a three-dimensional plot that can be used to control an effective diameter of a driver pulley and center distance to produce a desired rotational speed of an output shaft of an adjustable pulley system, according to some implementations of the present disclosure.
FIG. 19 is a two-dimensional plot showing a projection of a surface used to control the rotational speed of an output shaft of an adjustable pulley system, according to some implementations of the present disclosure.
FIGs. 20, 21, 22, and 23 are diagrammatic views of example pulley systems that include an idler pulley that is movable relative to a driver pulley and driven pulley of the respective pulley system, according to some implementations of the present disclosure.
FIG. 24 is a diagram of an example adjustable pulley system illustrating different portions of an endless belt of the pulley system, according to some implementations of the present disclosure.
FIG. 25 is an example three-dimensional graph containing a volume representing an entire operating space of an adjustable pulley system in which a position of an idler pulley of the pulley system is adjustable both in a lateral direction and a vertical direction, according to some implementations of the present disclosure.
FIG. 26 is top view of the volume of FIG. 25 when viewed in a direction parallel to a z-axis.
FIG. 27 is a front view of the volume of FIG. 25 when viewed in a direction parallel to a y-axis.
FIG. 28 is an example cross-sectional view of the volume of FIG. 25 taken along a plane.
FIG. 29 is an oblique view of the volume shown in FIG. 25 illustrating a portion of an exterior surface of the volume representing an optimal operating configuration of the pulley system.
FIG. 30 is another example cross-sectional view of the volume of FIG. 25.
FIG. 31 is another oblique view of the volume of FIG. 25 showing a curve along the surface of the volume that represents positions of the idler pulley and associated sizes of the effective diameter of the driver pulley that balance a length of belt that wraps around the sheave portions of the driver pulley and a length of belt that wraps around the sheave portions of the driven pulley.
FIG. 32 is another example cross-sectional view of the volume of FIG. 25 having an x-axis that represents a transformed xy axis.
FIG. 33 is another example top view of the volume of FIG. 25.
FIG. 34 is another example cross-sectional view of the volume of FIG. 25 showing a gradient vector and a no-change vector used to alter a configuration of the pulley system.
FIG. 35 is another example cross-sectional view of the volume of FIG. 25 showing a plurality of gradient vectors and a plurality of no-change vectors used to adjust a configuration of the pulley system.
FIG. 36 is a top view of another example volume representing an entire operating space of an adjustable pulley system.
FIG. 37 is a cross-sectional view of the volume of FIG. 36.
FIG. 38 is an oblique view of the volume of FIG. 36 showing a plurality of gradient vectors and no-change vectors used to adjust a configuration of the pulley system represented by the volume.
FIG. 39 a flowchart of an example method of altering a configuration of an adjustable pulley system that includes a selectively adjustable effective diameter of a driver pulley and a selectively adjustable position of an idler pulley of the pulley system, according to some implementations of the present disclosure.
FIG. 40 is a flowchart of an example method for controlling operation of a pulley system to determine whether a fault exists with the pulley system, according to some implementations of the present disclosure.
FIG. 41 is a block diagram illustrating an example computer system used to provide computational functionalities associated with described algorithms, methods, functions, processes, flows, and procedures as described in the present disclosure, according to some implementations of the present disclosure.

### Detailed Description

For the purposes of promoting an understanding of the principles of the present disclosure, reference will now be made to the implementations illustrated in the drawings, and specific language will be used to describe the same. It will nevertheless be understood that no limitation of the scope of the disclosure is intended. Any alterations and further modifications to the described devices, systems, or methods and any further application of the principles of the present disclosure are fully contemplated as would normally occur to one skilled in the art to which the disclosure relates. In particular, it is fully contemplated that the features, components, and/or steps described with respect to one implementation may be combined with the features, components, and/or steps described with respect to other implementations of the present disclosure.

Equipment, such as agricultural equipment, for example, combine harvesters, utilized pulley systems to transmit forces and rotation from one location to another. In some instances, pulley systems include pulleys with an adjustable groove. A pulley having an adjustable groove can be referred to as a sheave. By including pulleys with an adjustable groove, a rotational speed of an output shaft can be altered to be a desired rotational speed.

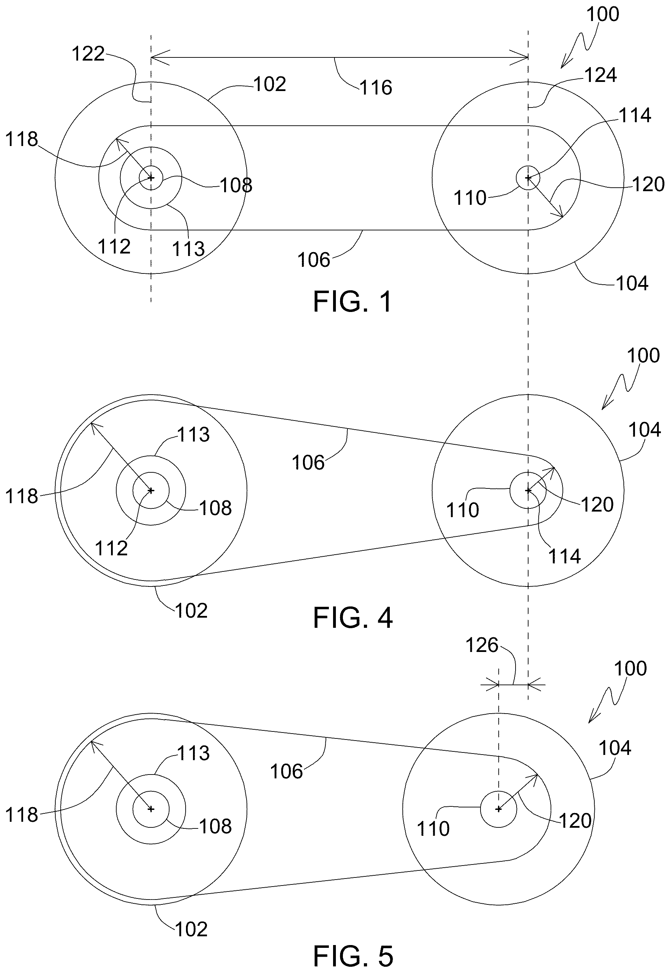

Altering a size of a groove of a pulley allows a speed ratio between an input shaft and an output shaft to be altered to alter a speed of the output shaft. FIG. 1 is a schematic view of an example pulley system 100 that includes a driver pulley 102 that includes a groove having an adjustable size, a driven pulley 104 that also includes a groove having an adjustable size, and an endless belt 106 that loops around and engages both the driver pulley 102 and the driven pulley 104. In some instance, the endless belt 106 may be described as extending between the driver pulley 102 and the driven pulley 104. It is noted, however, that the scope of the present disclosure encompasses pulley systems having one or more pulleys in addition to the driver pulley 102 and the driven pulley 104. The present disclosure and principle thereof encompass such pulley systems. Further, systems having one or more pulleys in addition to the driver pulley 102 and driven pulley 104, though, may still be described as having an endless belt extending between the driver pulley and the driven pulley with the understanding that the endless belt encompasses the other pulleys of the pulley system. For example, pulley systems having one or more pulleys in addition to the driver pulley and the driven pulley may be engaged, whether intermittently or continuously, by the endless belt. A driver pulley is one that is driven by a power source, and a driven pulley is one driven in response to driver pulley. The driver pulley 102 is coupled to an input shaft 108, and the driven pulley 104 is coupled to an output shaft 110.

The input shaft 108 defines a first rotational axis 112, and the second output shaft defines a second rotational axis 114. The driver pulley 102 rotates in response to the input shaft 108, and both the input shaft 108 and the driver pulley 102 rotate about the first rotational axis 112. The output shaft 110 rotates in response to rotation of the driven pulley 104, and both the output shaft 110 and the driven pulley 104 rotate about the second rotational axis 114. The first rotational axis 112 and the second rotational axis 114 are separated by a center distance 116. In the illustrated example, the center distance 116 is a distance measured between the center lines 122 and 124 of the input shaft 108 and output shaft 110, respectively.

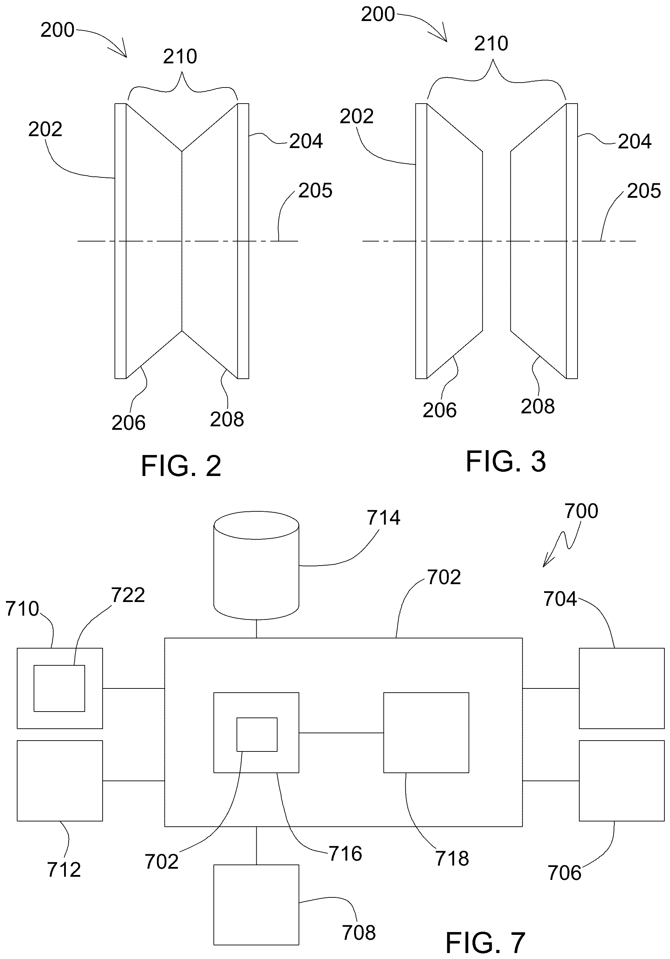

FIGs. 2 and 3 are front views of an example adjustable pulley 200. The example adjustable pulley 200 includes a first sheave portion 202 and a second sheave portion 204 and is rotatable about an axis of rotation 205. One or both of the first sheave portion 202 or the second sheave portion 204 is laterally displaceable from the other. In the illustrated example, the first sheave portion 202 is illustrated as movable relative to the second sheave portion 204. However, as already explained, the scope of the present disclosure encompasses the second sheave portion 204 movable relative to the first sheave portion 202 or both sheave portions 202, 204 movable relative to the other. In some implementations, one or more sheave portions has a disc-shape. However, in other implementations, one or more sheave portions may have another shape.

Each of the sheave portions 202, 204 includes tapered surfaces 206, 208, respectively. The tapered surfaces 206, 208 cooperate to define a circumferential groove 210 in which an endless belt, such as endless belt 106, rides. The endless belt frictionally engages the tapered surfaces 206, 208. The tapered surfaces 206, 208 cooperate to impart a force to the endless belt in response to rotation of the pulley 200 or cooperate to receive a force from the endless belt, causing the pulley 200 to rotate.

A size (which, in some instances, may be considered as a width) of the circumferential groove 210 changes in response to movement of one of the sheave portions 202, 204 relative to the other of the sheave portions 202, 204. As the size of the circumferential groove 210 changes, a diameter formed by the belt on the pulley 200 changes. For example, as the sheave portions 202 and 204 are separated (e.g., as shown moving from FIG. 2 to FIG. 3), a size of the circumferential groove 210 increases, and a size of the diameter of the belt riding along the pulley 200 decreases. Alternatively, as the sheave portions 202 and 204 are brought closer together (e.g., as shown moving from FIG. 3 to FIG. 2), a size of the circumferential groove 210 decreases, and the diameter of the endless belt riding on the pulley 200 increases.

A size of the diameter defined by the endless belt in response to the size of the groove of the adjustable pulley represents the effective diameter of the adjustable pulley. Thus, as the size of the groove increases, the size of the diameter of the endless belt received into the groove decreases, and, consequently, the size of the effective diameter of the pulley decreases. As the size of the groove decreases, the size of the diameter of the endless belt received into the groove increases and, consequently, the size of the effective diameter of the pulley increases. Therefore, the effective diameter of an adjustable pulley is the size of the diameter of the endless belt formed along the adjustable pulley for a particular groove size of the adjustable pulley.

In the example of FIG. 1, each of the pulleys 102 and 104 of the pulley system 100 has an adjustable groove, such as the circumferential groove 210 described earlier. Further, the driver pulley 102 includes an actuator assembly 113 operable to control a size of the groove of the driver pulley 102. In some instances, the actuator assembly 113 is a single acting pulley actuator assembly that is operable to move one or both of the sheave portions of the driver pulley 102 (e.g., sheave portions similar to sheave portions 202, 204) to alter a size of groove in a first manner while alteration of the size of the groove in a second manner is in response to a return force that works against operation of the actuator to alter the size in the first manner. In some instances, the return force is generated by one or more springs that act on one or both of the sheave portions or the endless belt that acts on the sheave portions. For example, in some instances, the actuator of the actuator assembly 113 operates to separate the sheave portions to increase a size of the groove while the return force operates to bring the sheave portions closer together to decrease the size of the groove. In other instances, the actuator assembly 113 operates to advance the sheave portions towards each other to reduce the size of the groove while the return force operates to separate the sheave portions to increase the size of the groove. Thus, to separate the sheave portions and increase the size of the groove, the actuator overcomes the force applied by the return force. To bring the sheave portions close to each other and reduce a size of the groove, the force applied by the actuator is reduced or eliminated, causing the return force to act on one or both of the sheave portions. A pulley operating in the manner described may be referred to as a command pulley.

In some implementations, the actuator assembly 113 is operable to move one sheave portion of an adjustable pulley relative to the other sheave portion of the adjustable pulley, as described in more detail below. In some instances, a single actuator assembly 113 may be operable to move both of the sheave portions of an adjustable pulley. In still other implementations, an adjustable pulley may include separate actuator assemblies 113, each of which is operable to move one of the sheave portions of an adjustable pulley.

The driven pulley 104 also includes sheave portions, such as sheave portions 202 and 204, that are biased towards each other. The sheave portions are separable from each other to increase the size of the groove by overcoming the biasing force that urges the sheave portions together. A pulley operating in this matter may be referred to as a commanded pulley.

Referring to FIGs. 1 and 4, The driver pulley 102 and the driven pulley 104 cooperate to alter a rotational speed of the driven pulley 104 and, consequently, the output shaft 110. For example, the input shaft 108 is rotated a first rotational speed. In order to rotate the output shaft 114 at a desired rotational speed without altering the first rotational speed of the input shaft 108, a size of the groove of the driver pulley 102 is altered. Altering the groove of the driver pulley 102 changes a size of a diameter of the endless belt 106 around the groove of the driver pulley 102. Because the length of the endless belt 106 is fixed, alteration of the groove of the driver pulley 102 results in a change in the size of the groove of the driven pulley 104 and resulting diameter of the endless belt 106 around the driven pulley 104. These respective diameters of the endless belt around the driver pulley 102 and the driven pulley 104 define a speed ratio. Using this speed ratio and the known rotational speed of the input shaft 108, a rotational speed of the output shaft 110 is determinable. Using this approach and a relationship of the size of the grooves of the pulleys 102 and 104 to a resulting diameter formed along the pulleys 102, 104 in response, for a particular rotational speed of the input shaft 108, a size of the grooves of the pulleys 102, 104 is determinable to produce a selected rotational speed of the output shaft 110.

FIG. 1 shows a side view of the pulley system 100 with a size of the groove of the driver pulley 102 to produce a radius size 118 of the endless belt 106 along the driver pulley 102. It is noted that, although radius size is discussed, it is also possible to speak in terms of diameter size, since the relationship between radius and diameter is known. The size of the radius 118 of the endless belt 106 along the driver pulley 102 produces a size of radius 120 of the endless belt 106 along the driven pulley 104.

As already explained, because of the fixed length of the endless belt 106, altering a size of the groove of the driver pulley 102 (such as by altering a distance between sheave portions of the driver pulley 102 that define the size of the groove) results in alteration to a size of the radius of the endless belt 106 along the driver pulley 102 in response. An example of such a change is illustrated in FIG. 1 to FIG. 4. Initially, in FIG. 1, the driver pulley 102 has a first groove size the produces a radius 118 of the endless belt 106 therealong. To alter a speed of the output shaft 110 (while maintaining a speed of the input shaft 108), the size of the groove of the driver pulley 102 is changed. In this example, the size of the groove of the driver pulley 102 is decreased. In some implementations, the size of the groove is altered automatically, such as by controlling operation of the actuator assembly 113. For example, the actuator assembly 113 may reduce a force applied to the sheave portions, thereby causing a return force to close the distance between the sheave portions and, hence, reduce the groove size. In response to the decrease in the size of the groove, the resulting size of the radius 118 of the endless belt 106 increases compared to the initial size of the radius 118. Because the length of the endless belt 106 is fixed, the increase in the size of the radius 118 causes the endless belt 106 to separate the sheave portions of the driven pulley 104, thereby increasing the size of the groove of the driven pulley 104. In turn, the resulting size of the radius 120 of the endless belt 106 along the driven pulley 104 decreases compared to the initial size of the radius 120, as shown in FIG. 4. In this way, for a constant rotational speed of the input shaft 108, a rotational speed of the output shaft 110 can be altered.

As shown in FIGs. 1 and 4, as a result of the finite length of the endless belt 106 and the fixed center distance 116 between input shaft 108 (and the associated first rotational axis 112) and the output shaft 110 (and the associated second rotational axis 114), as the size of the radius 118 of the endless belt 106 along the driver pulley 102 increases, the size of the radius 120 of the endless belt 106 along the driven pulley 104 decreases. Alternatively, as the size of the radius 120 of the endless belt 106 along the driven pulley 104 increases, the size of the radius 118 of the endless belt 106 along the driver pulley 102 decreases. In this way, the rotational speed of the output shaft 110 is altered.

However, as the size of the radius of an endless belt along a pulley decreases, the life of the endless belt decreases. Therefore, operating an endless belt along a pulley with a small radius reduces the life of the belt, which leads to increased operating costs. These costs include loss of production that results from a broken belt. When a belt breaks, the associated machine becomes inoperable and unable to perform useful work. Other costs include the cost of the belt, which can be significant, and the cost of labor associated with replacing the belt.

To increase the life of the belt and reduce these and other associated costs and retain the ability of a pulley system to alter a speed of the output shaft as described above, the center distance between the input shaft and the output shaft can be altered, as shown in FIG. 5. In FIG. 5, a position of the output shaft 110 relative to the input shaft 108 is altered, i.e., decreased, by a distance 126 while the size of the groove of the driver pulley 102 remains unchanged. By altering a center distance between the input shaft, e.g., input shaft 108, and the output shaft, e.g., output shaft 110, the pulley system 100 can maintain a desired rotational speed of the output shaft 110 while increasing the radius 120 of the endless belt 106 along the driven pulley 104. As a result, by altering the center distance 116 between the input shaft 108 and the output shaft 110, the desired speed of the output shaft 110 is achieved while increasing the life of the endless belt 106. In this way, the operating costs, such as those described earlier, are reduced.

In some instances, altering the center distance between the input shaft and the output shaft of a pulley system can be accomplished by altering a position of one of the output shaft or the input shaft relative to the other of the input shaft or the output shaft or by moving both the input shaft and the output shaft. By moving the input shaft or the output shaft, the associated rotational axes are also moved.

For a pulley system 100, although the groove size of the driver pulley 102, the groove size of the driven pulley 104, and the center distance 116 are adjustable, in some implementations, two of these three variables are changed. For example, generally speaking, because the endless belt 106 has a fixed length, for a given center distance 116, alteration to the groove size of the driver pulley (and, thereby, changing the radius 118 of the endless belt therealong) alters a groove size of the driven pulley 104, which results in a change to the radius 120 of the endless belt therealong. Similarly, for a selected groove size of the driver pulley 102, altering the center distance 116 causes the groove size of the driven pulley 104 to change, thereby altering the radius 120 of the endless belt along the driven pulley.

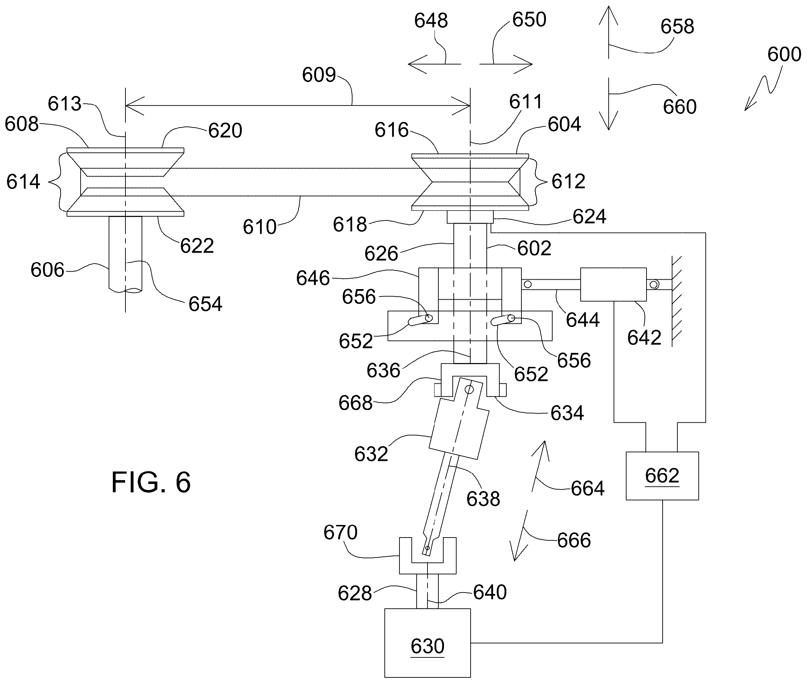

FIG. 6 is a partial schematic view, partial diagrammatic of an example pulley system 600 in which one rotary shaft is laterally displaceable relative to another rotary shaft. In this example, the system 600 includes an input shaft 602, a driver pulley 604 connected to and rotatable with the input shaft 602, an output shaft 606, and a driven pulley 608 attached to and rotatable with the output shaft 606. The input shaft 602 and the output shaft 606 are separated by a center distance 609. The center distance 609 is measured between the centerline 611 of the input shaft 602 and a centerline 613 of the output shaft 606. The centerline 613 corresponds to the axis of rotation 654 of the output shaft 606. An endless belt 610 loops around and engages both the driver pulley 604 and the driven pulley 608. In some instances, the driver pulley 604 is similar to the driver pulley 102, and the driven pulley 608 is similar to the driven pulley 104. Accordingly, the driver pulley 604 and the driven pulley 608 include circumferential grooves 612, 614, respectively, whose sizes can be adjusted, as described earlier.

The driver pulley 604 includes sheave portions 616 and 618 that are movable, such as in one or more of the ways described earlier. Altering a position of the sheave portions 616, 618 relative to each other alters a size of the circumferential groove 612 and, consequently, a radius of the endless belt 610 riding therealong. Similarly, the driven pulley 608 includes sheave portions 620 and 622 that are movable relative to each other according to one or more of the ways described above to alter a size of the circumferential groove 614 and, consequently, a size of the radius of the endless belt 610 riding therealong.

In this example, the driver pulley 604 includes or is operably coupled to an actuator assembly 624, which may be similar to actuator assembly 113. The actuator assembly 624 is operable to control a separation distance between the sheave portions 616 and 618. Thus, in this example, the driver pulley 604 is a command pulley, and the driven pulley 608 is a commanded pulley. In other implementations, the driven pulley 608 is the command pulley, and the driver pulley 604 is the commanded pulley. In still other implementations, both the driver pulley 604 and the driven pulley 608 are both command pulleys. That is, both pulleys 604 and 608 include an actuator assembly operable to control the size of the respective circumferential grooves 612, 614.

The input shaft 602 includes a first portion 626 connected to the driver pulley 604, a second portion 628 connected to a driver 630, e.g., an electric motor, an engine (e.g., an internal combustion engine), a transmission, or other device configured to rotate the second portion 628 of the input shaft 602. The input shaft 602 also includes a third portion 632 that is configured to telescopingly extend and retract, thereby altering a length of the third portion 632. Thus, the third portion 632 is configured to axially extend and retract in response to an amount of angular offset between the third portion 632 and the first and second portions 626 and 628. In some implementations, the first portion 626 and the second portion 628 are connected to the third portion 632 with joints 634 that are configured to transmit rotation from one portion of the input shaft 602 to another notwithstanding axial misalignment between the different portions 626, 628, and 632. Example joints 634 include constant velocity joints, universal joints, and double cardan joints.

Each of the portions 626, 628, and 632 have an associated axis of rotation 636, 638, and 640, respectively. The portions 626, 628, and 632 rotate about their respective axis of rotation 636, 638, and 640.

The pulley system 600 also includes an actuator 642 that is connected at a first end 644 to a carriage 646. The carriage 646 is retained on the first portion 626 of the input shaft 602. For example, in some instances, the carriage 646 may include a bearing that facilitates rotation of the first portion 626 of the input shaft 602 relative to the carriage 646. Example actuators 642 include hydraulic actuators, electrical actuators, mechanical actuators, linear actuators, and rotary actuators.

The actuator 642 configured to laterally offset the input shaft 602 in the direction of arrow 648 relative to the output shaft 606. In the illustrated example, the actuator 642 is a linear actuator. In this example, extension of the actuator 642 displaces the carriage 646 and, hence, the first portion 626 of the input shaft 602 in the direction of arrow 648 towards the output shaft 606. Retraction of the actuators 642 displaces the carriage 646 and, hence, the first portion 626 of the input shaft 602 in the direction of arrow 650 away from the output shaft 606.

In other implementations, extension of the actuator 642 is operable to displace the first portion 626 of the input shaft 602 away from the output shaft 606, and retraction of the actuator 642 is operable to displace the first portion 626 of the input shaft 602 towards the output shaft 606.

In some implementations, the carriage 646 engages with slots 652 that are obliquely arranged relative to the axis of rotation 636 of the first portion 626 of the input shaft 602, an axis of rotation 654 of the output shaft 606, or both. In some instances, the carriage 646 may include protrusions or rollers or other features (collectively referred to as "followers 656") that ride in the slots 652 that control a direction of movement of the carriage 646 in response to operation of the actuator 642. In the illustrated example, as a result of cooperation between the slots 652 and the followers 656, the carriage 646 is longitudinally displaced in the direction of arrow 658 in response to operation of the actuator 642 to displace the first portion 626 of the input shaft 602 away from the output shaft 606. Similarly, the slots 652 and the followers 656 cooperate to longitudinally displace the carriage 646 in the direction of arrow 660 in response to displacement of the first portion 626 of the input shaft 602 towards from the output shaft 606 by the actuator 642. Because the driver pulley 604 is connected to the first portion 626 of the input shaft 602, the driver pulley 604 is similarly longitudinally displaced along with the first portion 626 of the input shaft 602.

The pulley system 600 also includes an electronic controller 662. In some implementations, the electronic controller 662 is in the form of a computer or computer system, such as computer 1202 or computer system 1200. Although the controller 662 is shown as being communicable coupled to the actuator assembly 624, the actuator 642, and the driver 630. In some implementations, the controller 662 may be communicably coupled to fewer components. In such instances, the components not communicably coupled to the controller 662 may be communicably coupled to one or more other electronic controllers. Further, in some implementations, control of the operation of the other components by the one or more other electronic controllers may be coordinated with operational control provided by the electronic controller 662.

The controller 662 is operable to control various aspects of the pulley system 602, such as actuation of the actuator assembly 624, actuation of the actuator 642, and operation of the driver 630. In some instances, the controller 662 controls a rotational speed of the driver 630, a size of the circumferential groove 612 by controlling operation of the actuator assembly 624, and the center distance 609 by controlling operation of the actuator 642. Further, in some instances, operation of these various components is coordinated such that operation of the various components occurs in a particular order or at a designated rate, e.g., a rate at which the size of the circumferential groove 612 is altered or a rate at which the center distance 609 is altered.

Actuation of the actuator 642 to alter the center distance 609 is facilitated by the third portion 632 of the input shaft 602 that includes a telescoping capability. That is, the length of the third portion 632 is alterable in the axial direction of arrows 664 and 666 as the position of the first portion 626 of the input shaft 602 is changed by the actuator 642. For example, in the context of FIG. 6, as the actuator 642 extends, the carriage 646 and, consequently, the first portion 626 of the input shaft 602 is displaced in the direction of arrow 648. As the first portion 626 of the input shaft 602 is moved in the direction of arrow 648, the length of the third portion 632 of the input shaft 602 decreases because the distance between the end 668 of the first portion 626 of the input shaft 602 and the end 670 of the second portion 628 the input shaft 602 decreases. In some instances, if the actuator 642 continues to extend sufficiently to cause the first portion 626 of the input shaft 602 to move laterally beyond vertical alignment with the second portion 628 of the input shaft 602, enough, the third portion 632 of the input shaft 602 will extend because the distance between the ends 668 and 670 increases.

Additionally, as mentioned above, the carriage 646 rides in slots 652, and, in the illustrated example, the slots are oriented such that the slots 652 extend upwardly from left to right in the context of FIG. 6. In this way, as the carriage 646 moves in the direction of arrow 648, the carriage 646 also moves axially in the direction of arrow 660. Axial movement of the first portion 626 of the input shaft 602 in this way can provide for improved alignment between the driver pulley 604 and the driven pulley 608 as the size of the respective circumferential grooves 612 and 614 changes to alter a speed of the output shaft 606. This axial movement is also facilitated by the ability of the length of the third portion 632 of the input shaft 602 to be altered. If the slots 652 were not included, the endless belt 610 may excessively wear, break, or slip one or both pulleys 604 and 608. Providing for this longitudinal movement as the position of the first portion 626 of the input shaft 602 is altered, thereby altering the center distance 609, alignment between the pulleys 604 and 608 is maintained or an amount of misalignment is reduced to maintain engagement between the pulleys 604 and 608 and the endless belt 610.

Although the slot 652 are shown in FIG. 6 with the orientation described, in other implementations, the slots may have a different slope, such as a slope greater or less than the slope shown in FIG. 6, and, in still other implementations, the slots 652 may be oriented such that the slots 652 increase in height from right to left in the context of FIG. 6. In still other implementations, the slots 652 may be omitted. The configuration of slots, such as slots 652, may be altered or selected depending, for example, on which sheave portion of a pulley, e.g., the driver pulley 604, is movable in response to the actuator assembly 624.

FIG. 7 is a schematic view of an example electronic control system 700 operable to control operation of an adjustable pulley system, such as pulley system 100 or pulley system 600, that includes a driver pulley with an adjustable circumferential groove, a driven pulley with an adjustable circumferential groove, and a center distance between an input shaft and an output shaft that is adjustable. In other implementations, the example control system 700 is operable to control operation of an adjustable pulley system having a driver pulley with an adjustable circumferential groove, a driven pulley with an adjustable circumferential groove, and an idler pulley that has an adjustable position relative to the driver pulley, driven pulley, or both, described in more detail below. The control system 700 includes the electronic controller 702, which, in some implementations, is in the form of a computer or computer system, such as computer 1202 or computer system 1200, discussed in more detail below. The control system 700 also includes an actuator assembly 704, such as actuator assembly 113 or actuator assembly 624, configured to alter a size of the circumferential groove of the driver pulley or the driven pulley of the pulley system. In some implementations, the actuator assembly 704 is mounted on or otherwise connected to the driver pulley or the driven pulley. In the described example, the actuator assembly 704 is configured to alter the size of the circumferential groove of the driver pulley, such as by separating or converging sheave portions of the driver pulley, as described earlier, and, hence, alter a size of the effective diameter of the pulley. However, in other instances, the actuator assembly 704 may be configured to alter the size of the groove of the driven pulley.

The control system 700 also includes an actuator 706, such as actuator 642, that is configured to alter a size of the center distance between an input shaft and an output shaft of the pulley system. In some implementations, the actuator 706 is a linear actuator. In still other implementations, the actuator 706 is configured to alter a position of an idler pulley of pulley system, such as pulley system 2000, described below. The actuator 706 may be operable to move the idler pulley in one or more directions. In other implementations, the actuator 706 is operable to move the idler pulley in a first direction while a second actuator is operable to move the idler pulley in a second direction different from the first direction. In other implementations, other types of actuators, e.g., rotary actuators, can be used. Further, the actuator 706 may be a hydraulic actuator, an electrical actuator, or other type of actuator operable to alter a distance between the input shaft and the output shaft. In some implementations, the control system 700 also includes a driver 708 such as driver 630. The driver 708, which may be of a type described earlier or another type of device or mechanism to generate a rotary motion, is coupled to the input shaft of the pulley system. The driver 708 is configured to generate rotary motion of the driver pulley, which is transmitted to the driven pulley via an endless belt, such as endless belt 106 or endless belt 610. The control system 700 also includes a display 710 and an input device 712.

The electronic controller 702 is operable to control operation of the components connected thereto. Particularly, the electronic controller 702 is operable to control actuation of the actuator assembly 704 to alter a size of the groove of the driver pulley of the pulley system; to control actuation of actuator 706 to alter the center distance between the input shaft and the output shaft of the pulley system or to alter a position of an idler pulley relative to the driver pulley, the driven pulley, or both; and to control operation of the driver 708 so as to control a rate of rotation of the input shaft of the pulley system.

Further, in some implementations, the electronic controller 702 is configured to control operation of the components simultaneously. For example, the electronic controller 702 is configured to operate the actuator assembly 702 to alter a size of the groove of the driver pulley while simultaneously operating the actuator 704 to alter a size of the center distance or simultaneously alter a position of the idler pulley relative to the driver pulley, the driven pulley, or both. Further, in some instances, the electronic controller 702 is operable to control a rate at which the components are operated. For example, the electronic controller 702 is operable to control a rate at which the actuator assembly 702 and the actuator 704 operate or operate one or more of the components in a delayed fashion compared to one or more other components. In this way, for example, the electronic controller 702 is operable to maintain a desired tension in the endless belt or otherwise prevent the endless belt from becoming displaced from one or both of the driver pulley or the driven pulley.

The control system 700 may also include or be communicably coupled to a database 714. In some implementations, the database 714 is a remote database, which may be in the form of cloud storage, a remote server, or some other type of electronic storage configured to store information, such as information related to the pulley system, such as the range of the groove sizes associated with the driver pulley and the driven pulley, a range over which the center distance can be altered, a range over which an idler pulley can be moved, a rotational speed or range of rotational speeds at which the input shaft can be rotated, as well as other information related to the pulley system.

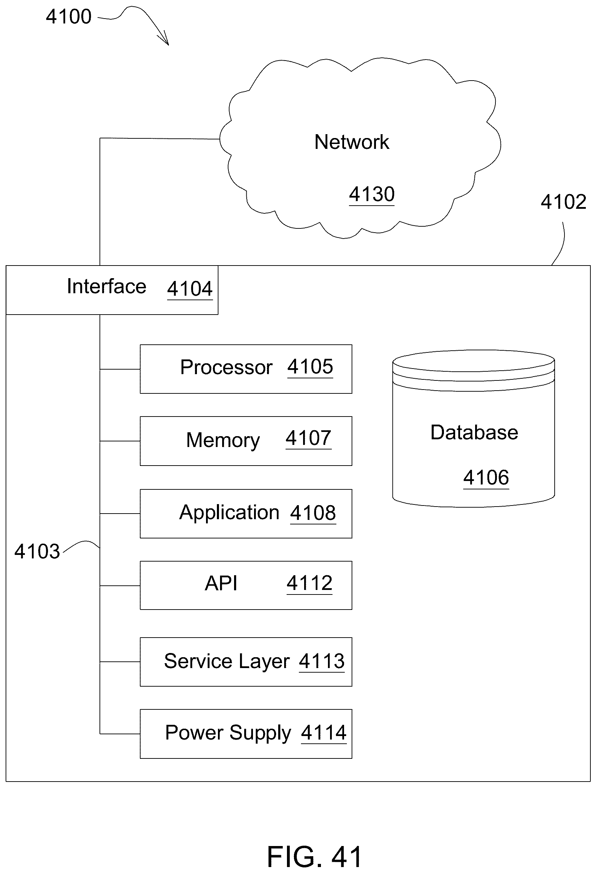

In some implementations, the electronic controller 702 is an electronic computer, such as computer 4102 described in more detail below. The electronic controller 702 includes a processor 716 and a memory 718 communicably coupled to the processor 716. Additional details of the electronic controller 702, such as processor 716 and memory 718, are described below in the context of computer 4102. In some implementations, the electronic controller 702 is communicably coupled with a network, such as in a manner described in more detail below in the context of FIG. 41.

The memory 718 communicates with the processor 716 and is used to store programs and other software, information, and data. The processor 716 is operable to execute programs and software and receive information from and send information to the memory 718. Although a single memory 718 and a single processor 716 are illustrated, in other implementations, a plurality of memories, processors, or both may be used. Although the processor 716 and the memory 718 are shown as being local components of the electronic controller 702, in other implementations, one or both of the processor 716 and memory 718 may be located remotely. The various components of the control system 700 are communicably coupled to the controller 702, such as via a wired or wireless connection.

Software 720, such as in the form of an application or program, is executed by the processor 716 to control operation of the control system 700, as described herein. Although software is illustrated as an example for being used to operate the control system 700, control in other forms, such logic circuitry, can be used to control operation of the control system 700. The software 720 includes executable instructions operable to control operation of one or more of the various components coupled to the controller 702 and, as a result, control one or more of operation of the actuator assembly 704, the actuator 706, the driver 708, the display 710, the input device 712, the database 714, or a combination of these as described herein for example. For example, the software 720 is configured to control operation of the actuator assembly 704, the actuator 706, and the driver 708 to control a speed of the output shaft by controlling a speed ratio of the driver pulley and the driven pulley, such as in a desired fashion, to produce a desired rotational speed of the output shaft while providing a radius of the endless belt along the driver pulley and along the driven pulley at a selected size, such as a maximum size permitted within the constraints of the pulleys (e.g., a range of the size of the grooves of the driver pulley and the driven pulley) and a range of adjustment of the center distance, which may be affected by the physical dimensions of the driver pulley and the driven pulley as well as proximity of an object or objects adjacent to the pulley system, or a range of adjustment of a position of an idler pulley, as described below, for example.

Example input devices 712 include a keyboard, keypad, one or more buttons, a slider bar, a dial, a knob, a mouse, a joystick, or wheel. The input device 712 is used to receive input, such as from a user. An example input to the input device 712 may be a desired rotational speed of the output shaft of a pulley system. For example, in some implementations, the display 710 displays information, such as information related to the operation of control system 700. For example, information displayed by the display 710 may include a rotational speed of the driver, the input shaft, or both; a size of the groove of the driver pulley, the driven pulley, or both; a position of the actuator assembly; a speed ratio of the pulley system; a size of the endless belt along the driver pulley, the driven pulley, or both; a size of the center distance; or a position of the idler pulley.

In some instances, the information displayed by the display 710 is displayed via a graphical user interface (GUI) 722. In some implementations, the GUI 722 is operable to display aspects of the operation of the control system 700, including, for example, operation of the actuator assembly 704, the actuator 706, the driver 708, or a combination of these. Other types of information may also be displayed, such as other information related to the pulley system or a machine to which the pulley system is attached for forms a part. Example displays include cathode ray tubes (CRT), liquid crystal displays (LCDs), plasma displays, projection systems (e.g., an image projector), and heads up displays. Other types of displays are also within the scope of the present disclosure. In some implementations, the display 710 is a touch screen that is operable to receive input from a user via a user's touch. In some implementations in which the display 710 is a touch screen, the input device 712 may be omitted.

The example control system 700 may be used to control operations of a pulley system within the scope of the present disclosure, such as via operation of the control system 700. Other control systems may also be used. Further, in some implementations, the control system 700 is operable to receive information and data from the various components of a pulley system, such as a size of a groove of the driver pulley or the driven pulley, a center distance between the input shaft and the output shaft, a rotational speed of the input shaft or the output shaft, a position of the idler pulley, a size of a radius of the endless belt along the driver pulley or the driven pulley, a position or condition of the actuator assembly 704, a position or condition of the actuator 706, or a speed or condition of the driver 708. The data or information received from one or more components of the control system 700 may be generated by, or otherwise made available to, the control system 700. Further, in some implementations, the software 720 may be modified to control the various components of a pulley system, such as those example pulley systems described herein, including, in some instances, utilizing various types of data or information received from components of the pulley system or data or information otherwise provided to the control system 700.

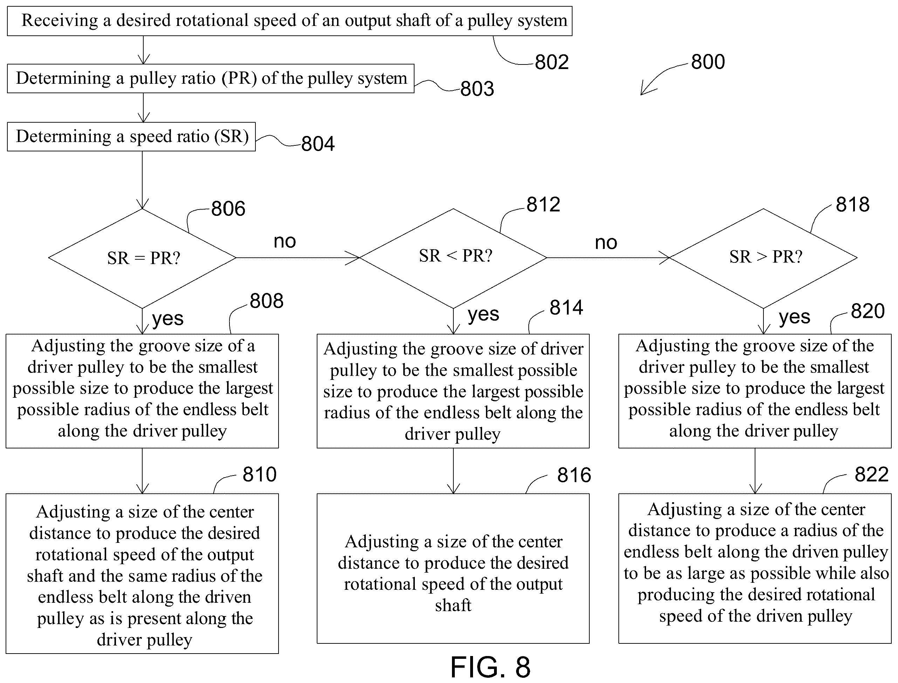

FIG. 8 is a flowchart of an example method 800 of controlling operation of an adjustable pulley system to provide a desired rotational speed of an output shaft while also increasing belt life by altering groove sizes of the pulleys and, in some instances, a center distance between the input shaft and output shaft of the pulley system. In some implementations, control includes adjusting a groove size of a driver pulley to increase a diameter size of an endless belt along the driver pulley and driven pulley so as to improve belt life. The example method 800 is operable to control operation of a pulley system to both alter a groove size of a pulley, such as the driver pulley or the driven pulley, and alter a center distance between the input shaft and the output shaft to provide both a desired rotational speed of the output shaft and diameter of an endless belt along the driver pulley and driven pulley to improve the operating life of the endless belt that would otherwise be unachievable without altering the center distance.

In some instances, the method 800 may be embodied in software, such as software 720, to control operation of a control system, such as control system 700. The pulley system may be similar to pulley system 600. Constraints of the pulley system, such as physical constraints, may be known. For example, a physical size of the pulleys (e.g., a driver pulley and a driven pulley) of the pulley system, a size range by which the grooves of the pulleys may be altered, a minimum size and a maximum size of the groove for each pulley and the corresponding radii (or diameter) of the endless belt corresponding to the minimum and maximum size of the groove, a size of the endless belt of the pulley system, and a range of sizes by which the center distance can be adjusted along with the minimum center distance and the maximum center distance associated with this range of sizes. A rotational speed of the input shaft may also be known. For example, the rotational speed of the input shaft may be measured using a sensor or may otherwise be known. Further, the rotational speed of the input shaft may be selected, such as by selecting a gear setting of a gearbox coupled to the input shaft or, for example, by selecting a speed of a driver, such as driver 630, to control a rotational speed of the input shaft.

The scope of the present disclosure encompasses many types of pulley systems. For example, the scope of the present disclosure encompasses a pulley system in which the driver pulley and the driven pulley have the similar characteristics. These characteristics may include a groove size with the same range of adjustability or an effective diameter range of the driver pulley and the driven pulley being the same. However, the scope of the present disclosure also encompasses pulley systems in which the range of effective diameters or an amount of adjustment of the grooves of the pulleys varies from one another. To provide a common point of reference for understanding the following description of FIG. 8, a pulley ratio is obtained. The pulley ratio is a ratio of the largest effective diameter possible of the driver pulley to the largest effective diameter of the driven pulley. In some instances, the largest effective diameter of the driver pulley and driven pulley corresponds to the diameter produced by each of the pulleys when the respective grooves of the pulleys are minimized. For example, the size of the grooves of the drive pulley and driven pulley are minimized when the sheave portions of the respective pulley are laterally displaced towards each other the maximum amount provided by the respective pulley. An equation for the pulley ratio (PR) is provided below:
$PR = \frac{{φ}_{{driver}_{max}}}{{φ}_{{driven}_{max}}}$ (Equation 1)

In Equation 1, φ_{driven} is the maximum diameter of the endless belt along the driven pulley, φ_{driver} is the maximum diameter of the endless belt along the driver pulley. At 803, the pulley ratio of the pulley system is determined.

At 802, a desired rotational speed of an output shaft is received. In some instances, the desired rotational speed of the output shaft is received from an operator, such as via an input device, such as input device 712. For example, an operator of a combine harvester may desire a system to operate at the desired rotational speed. At 803, the pulley ratio of the adjustable pulley system is determined. Generally, because the maximum effective diameters of the driver pulley and the driven pulley are known, the pulley ratio is, generally, readily known, determinable, or otherwise available. Thus, in some instances, the pulley ratio for an adjustable pulley system is known and, in such instances, determining the pulley ratio is not required. In some implementations, the known pulley ratio is merely referenced from a reference location, such as from programming instructions of software, such as software 720 or another location. With the desired rotational speed of the output shaft and knowing the rotational speed of the input shaft, a speed ratio of the pulley system is determined at 804.

In this example, the speed ratio is the ratio of the endless belt diameter along the driven pulley compared to the endless belt diameter along the driven pulley, which is also the ratio of the rotational speed of the driver pulley (or input shaft) compared to the rotational speed of driven pulley (or output shaft). An equation representing the speed ratio, SR, is as follows:
$SR = \frac{{φ}_{driver}}{{φ}_{driven}} = \frac{{ω}_{driven}}{{ω}_{driver}}$ (Equation 2)

In Equation 2, SR represents the speed ratio, φ_{driven} is the diameter of the endless belt along the driven pulley, φ_{driver} is the diameter of the endless belt along the driver pulley, ω_{driver} is the rotational speed of the driver pulley or the rotational speed of the input shaft, and ω_{driven} is the rotational speed of the driven pulley or the rotational speed of the output shaft.

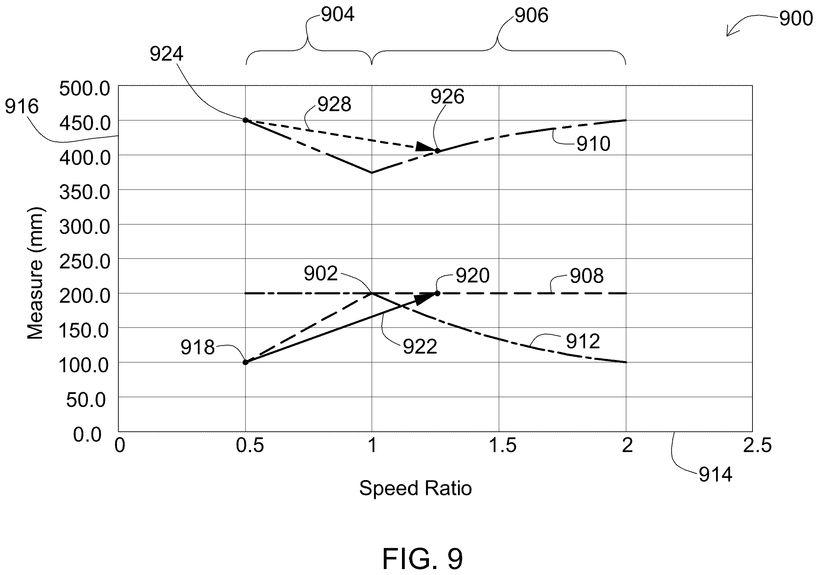

At 806, the pulley ratio (PR) is compared to the speed ratio (SR). If the pulley ratio is equal to the speed ratio, then the method 800 moves to 808. At 806, for a pulley system in which the driver pulley and the driven pulley have the same maximum effective diameter, which would have a speed ratio of 1 where the SR is equal to the PR, the radii or diameters of the endless belt along the driver pulley and the driven pulley will be the same, as shown, for example, at region 902 in FIG. 9. Thus, FIG. 9 illustrates an example adjustable pulley system in which the driver pulley had the same effective diameter range as the driven pulley and is described in more detail below. This type of pulley system is referred to as a symmetrical pulley system. Although FIG. 9 illustrates this particular example of an adjustable pulley system having these types of constraints, the concepts are applicable to other adjustable pulleys systems with other constraints, such as where the range of effective diameters of the driver pulley is different from the range of effective diameters of the driven pulley. Thus, while FIG. 9 does illustrate this type of example pulley system, the graph of FIG. 9 is illustrative of the concepts described herein more generally if the region 902 were viewed as the region where the PR equals SR, where the region 904 represents the region where the SR is less than the PR, and where the region 906 represents the region where the SR is greater than the PR.

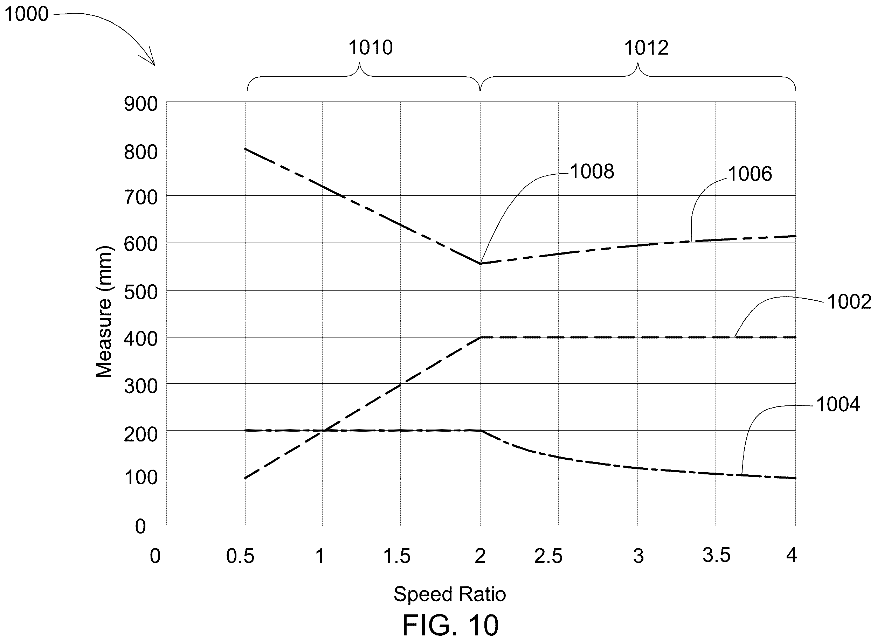

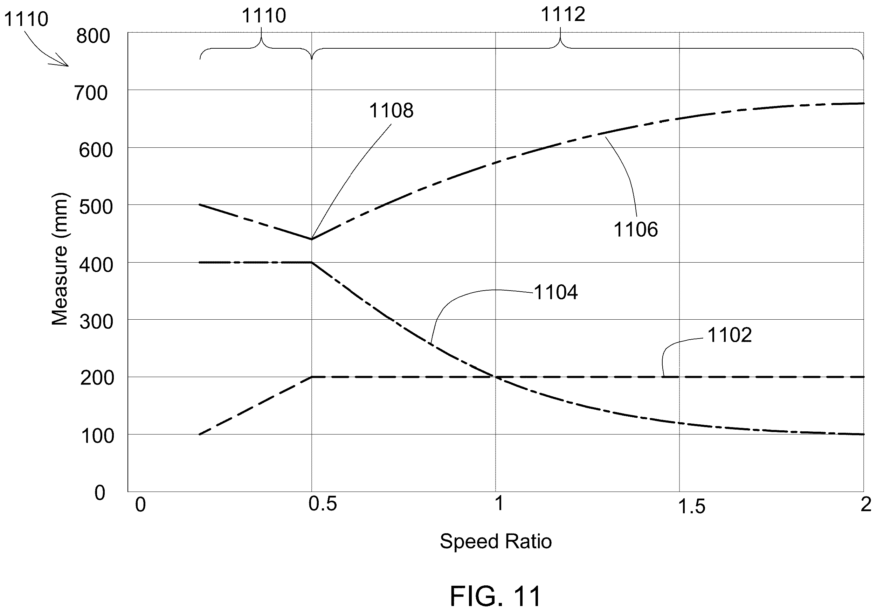

While FIG. 9 is an example plot representing a symmetrical pulley system, FIGs. 10 and 11 illustrate plots associated with asymmetrical pulley systems. FIG. 10 is a plot 1000 similar to that of FIG. 9 but of an asymmetrical pulley system. Referring to FIG. 10, graph 1002 represents the behavior of the effective diameter of the driver pulley, graph 1004 represents the behavior of the effective diameter of the driven pulley, and graph 1006 represents the behavior of the center distance between the input shaft and the output shaft of the pulley system. In the illustrated asymmetrical pulley system, the smallest groove size of the driver pulley produces an effective diameter of four units (e.g., 400 millimeters (mm) (15.7 inches (in.))), and the smallest groove size of the driven pulley produces an effective diameter of two units (e.g., 200 mm (7.87 in.). The pulley ratio of the illustrated asymmetrical pulley system of FIG. 10 is two (2), as indicated at region 1008, which corresponds to region 902 in FIG. 9. Another region 1010 corresponds to the region 904 in FIG. 9, and region 1012 corresponds to the region 906 in FIG. 9.

FIG. 11 is a plot 1100 that illustrates the behavior of another asymmetrical pulley system. Graph 1102 represents the behavior of the effective diameter of the driver pulley, graph 1104 represents the behavior of the effective diameter of the driven pulley, and graph 1106 represents the behavior of the center distance between the input shaft and the output shaft of the pulley system. In the illustrated asymmetrical pulley system, the smallest groove size of the driver pulley produces an effective diameter of two units (e.g., 200 mm (7.9 in.)), and the smallest groove size of the driver pulley produces an effective diameter of four units (e.g., 400 mm (15.7 in.). The pulley ratio of the illustrated asymmetrical pulley system of FIG. 11 is one half (0.5), as indicated at region 1108, which corresponds to region 902 in FIG. 9. Another region 1112 corresponds to the region 904 in FIG. 9, and region 1112 corresponds to the region 906 in FIG. 9.

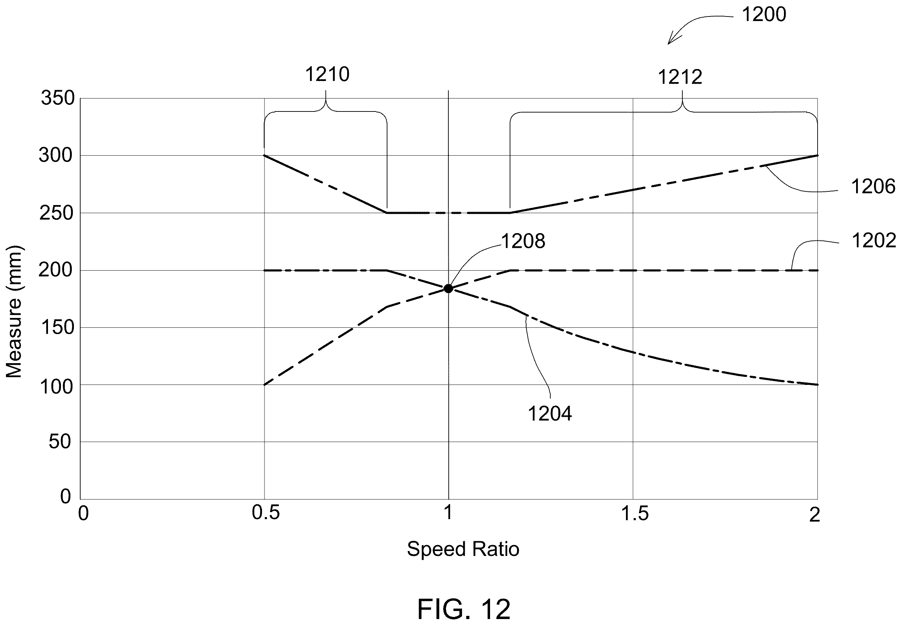

FIG. 12 is another plot 1200 that represents the behavior of another asymmetrical pulley system. For this asymmetrical pulley system, the amount by which the center distance is alterable varies from that illustrated in FIGs. 10 and 11. Here, the plot includes graph 1202 representing behavior of the effective diameter of the driver pulley, graph 1204 representing behavior of the effective diameter of the driven pulley, and graph 1206 representing behavior of the center distance. Further, the plot includes three regions 1208, 1210, and 1212. The region 1208 corresponds to regions 902, 1008, and 1108 shown in FIGs. 9, 10, and 11, respectively. Region 1210 corresponds to region 904 of FIG. 9, and region 1210 corresponds to region 906 of FIG. 9. However, in the context of region 1208, rather than a single speed ratio value, the region 1208 encompasses a range of speed ratio values as a result of the amount by which the center can be adjusted. As seen in the region 1208, the slope of change of the effective diameters of the driver pulley and the driven pulley changes compared to the slope of change of the effective diameters in the region 1210.

At region 902 on plot 900, the diameter of the endless belt along the driver pulley is equal to the diameter of the endless belt along the driven pulley because the pulley system represented by plot 900 is a symmetrical pulley system for which the PR is 1. To achieve an improved belt life, the radii of the endless belt along the driver pulley and driven pulley, although required to be the same at a 1:1 speed ratio, is maximized based on the constraints described earlier. For example, where the constraints allow and because the endless belt has a fixed length, at 808, the groove size of the driver pulley is adjusted to be the smallest groove size, resulting in the largest radius of the endless belt provided along the driver pulley, and, at 810, the center distance between the input shaft and the output shaft is adjusted to generate the same radius size of the endless belt along the driven pulley. In instances where the driver pulley and the driven pulley have the same physical attributes, e.g., same groove size range, the center distance is altered until the groove size of the driven pulley is the same as the groove size of the driver pulley. In this example, the sizes of the pulleys and the amount by which the center distance can be altered provide for having the largest possible radii of the endless belt on the driver pulley and the driven pulley. In other instances, the constraints of the pulley system preclude altering the center distance to provide the largest radii of the endless belt supported by the pulleys. In such instances, the groove size of the driver pulley is altered to provide the largest radii of the endless belt in light of the system constraints. The center distance is then changed to produce the largest radius of the endless belt along the driven pulley which satisfies the desired speed ratio. By controlling the pulley system in this way, the desired rotational speed of the output shaft is achieved while also improving the life of the endless belt by maximizing the radii of the endless belt along the driver pulley and the driven pulley.

If the speed ratio (SR) is not equal to the pulley ratio (PR), the method 800 moves to 812 where a determination is made as to whether the speed ratio (SR) is less than the pulley ratio (PR). A speed ratio less than the pulley ratio is one in which the rotational speed of the input shaft (ω_{driver}) is greater than the desired rotational speed of the output shaft (ω_{driven}). For a symmetrical pulley system, such as the one illustrated in FIG. 9, a speed ratio that is less than one (1) is one in which the diameter of the endless belt along the driver pulley (φ_{driver}) is less than the diameter of the endless belt along the driven pulley (φ_{driven}). If the speed ratio (SR) is less than the pulley ratio (PR), the method 800 moves to 814. In a symmetrical pulley system, for a speed ratio of less than one (1), the size of the radius of the endless belt along the driven pulley should be maximized, as shown, for example, at region 904 in FIG. 9. As shown in FIG. 9, in the range identified at region 904, the diameter of the endless belt along the driven pulley is at a maximum as both the diameter of the endless belt along the driver pulley and the center distance is altered. Therefore, at 814, the size of the groove of the driver pulley is changed to produce a radius of the endless belt therealong to be as large as possible within the constraints of the pulley system while maintaining the radius of the endless belt along the driven pulley to be the largest accommodated by the driven pulley. FIG. 9 illustrates graphically a relationship as to how the groove size of the driver pulley and the center distance are altered in order to produce the desired speed ratio and, consequently, the desired output shaft speed. For example, in some instances, taking into consideration the groove size range of the pulleys, the physical size of the pulleys, the size of the center distance, and the amount of adjustment thereto, the groove size of the driver pulley is reduced to produce the largest possible radius of the endless belt along the driver belt, which still may not be the largest radius possible due to the constraints of the pulley system. At 816, the center distance is altered to produce both the desired rotational speed of the output shaft while also providing the largest sized radius of the endless belt along the driven pulley.

If the speed ratio (SR) is not less than the pulley ratio (PR), then the method 800 moves to 818 where a determination is made as to whether the speed ratio (SR) is greater than the pulley ratio (PR). A speed ratio (SR) greater than the pulley ratio (PR) is one in which the rotational speed of the input shaft (ω_{driver}) is less than the desired rotational speed of the output shaft (ω_{driven}). For a symmetrical pulley system, a speed ratio greater than the pulley ratio is one in which the diameter of the driver pulley (φ_{driver}) is greater than the diameter of the driven pulley (φ_{driven}). For a speed ratio greater than the pulley ratio, the size of the radius of the endless belt along the driver pulley should be maximized, as shown, for example, at region 906 in FIG. 9. If the speed ratio (SR) is greater than the pulley ratio (PR), the method 800 moves to 820. At 820, the size of the groove of the driver pulley is altered. In the context of a symmetrical pulley system, as shown in FIG. 9, at region 906, the size of the groove of the driver pulley is changed such that the diameter of the endless belt along the driver pulley reaches a maximum size supported by the driver pulley. The groove size of the driven pulley responds such that the diameter of the endless belt along the driven pulley decreases. To maximize the size of the diameter of the endless belt along the driven pulley, at 822, the center distance is altered, thereby reducing the groove size of the driven pulley and, hence, increasing the diameter of the endless belt along the driven pulley. The center distance is altered until the desired speed ratio is achieved and the desired rotational speed of the output shaft is produced. Consequently, the resulting groove size of the driven pulley provides both the desired rotational speed of the output shaft as well as a larger radius of the endless belt along the driven pulley than would otherwise been possible had the center distance not been adjustable.

It is noted that the direction of the alteration of the groove of the driver pulley, e.g., from larger to smaller or smaller to larger, may be dependent on the current size of the groove of the driver pulley. Further, whether the center distance is increased or decreased may also depend on the current setting of the center distance. For example, a size of the groove of the driver pulley may be sensed, and this sensed size is utilized, for example, by a control system, to control whether to increase or decrease the size of the groove of the driver pulley. Similarly, the center distance may also be sensed, and the sensed center distance is utilized to determine whether to increase or decrease the size of the center distance.

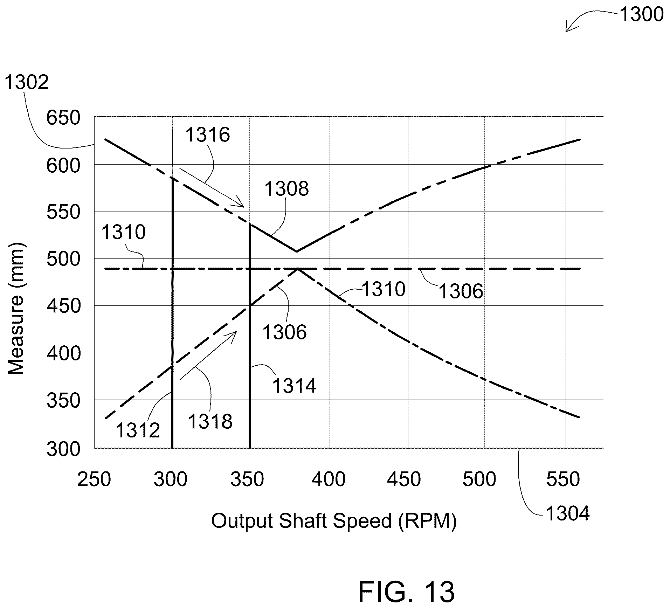

It is further noted that, in some implementations, alterations to the groove of the driver pulley and alterations to the center distance follows the shape of the respective graphs 908 and 910 shown in FIG. 9. However, in other instances, for the same system, the alterations to the groove of the driver pulley and the center distance may be different while the end final setting of the groove size of the driver pulley and the center distance (and, consequently, the size of the groove of the driven pulley) are the same. These paths may vary, for example, in response to the order or rate at which the size of the groove of the driver pulley or the center distance is altered. This may be better understood in the context of FIG. 13 and the associated description, below.

FIG. 8 illustrates an example method of controlling operation of an adjustable pulley system. Although FIG. 8 illustrates features provided in a particular order, this order may be varied. For example, although adjusting a center distance is described as following adjustment of a groove size of a pulley, in some implementations, alteration to the groove size may follow alteration of the size of the center distance. In some implementations, a start to altering the size of the groove may be prior to the start of altering a size of the center distance. In other implementations, a start to altering the size of the center distance may occur before a start of altering a size of the groove. In still other implementations, altering the size of the groove and a size of the center distance may begin at the same time. Thus, the order of the features shown in the method 800 can be altered and still be within the scope of the present disclosure. Still further, one or more of the described features may be omitted and still be within the scope of the present disclosure. Also, one or more features of the method 800 may be added and still be within the scope of the present disclosure. Consequently, the scope of the present disclosure is not limited to the example shown in FIG. 8.

FIG. 9 is an example plot 900 of an example symmetrical pulley system as described herein. For example, the pulley system represented in plot 900 may be similar to pulley system 100 or pulley system 600. Further, for this example, the driver pulley and the driven pulley have the same groove size range. Thus, in the illustrated example, the range of effective diameters of the driver pulley and the driven pulley is the same. In other implementations, such as in the case of an asymmetrical pulley system, the range of effective diameters of the driver pulley and the driven pulley are different. However, the concepts described herein are applicable to a pulley system where the driver pulley and the driven pulley have a range of effective diameters that are different from each other. The plot includes the three regions 902, 904, and 906 that illustrate the behavior of the pulley system when the speed ratio is less than one, equal to one, and greater than one, respectively. The plot 900 includes a first graph 908 that represents the behavior of the diameter of the belt along the driver pulley (also referred to as the effective diameter of the driver pulley), which is also a representation of the behavior of size of the groove of the driver pulley. A second graph 910 is also provided that illustrates the behavior of the center distance between the input shaft and the output shaft in the three regions 902, 904, and 906. A third graph 912 is also included and represents the diameter of the endless belt along the driven pulley (also referred to as the effective diameter of the driven pulley) and illustrates how the diameter of the endless belt along the driven pulley changes in the three regions 902, 904, and 906 and in response to the changes to the groove size of the driver pulley and changes in the center distance. The three graphs 908, 910 and 912 are arranged on the plot to show the relationship therebetween, particularly showing how the speed ratio change in response to changes in the groove size of the driver pulley and changes to the center distance affect the diameter of the endless belt along the driven pulley.

In the example shown in FIG. 9, the driver pulley has a groove that is controllable, such as by operation of an actuator assembly, as described earlier. In other implementations, the driven pulley has a groove size that is controllable, such as in response to an actuator assembly. In still other implementations, the grooves of both the driver pulley and the driven pulley are controllable.

The plot 900 includes an x-axis 914 that represents speed ratio, as defined above. The y-axis 916 represents distance, which is applicable to both the effective diameter size of the driver pulley and driven pulley as well as the center distance. In the illustrated example, the y-axis is indicated in millimeters (mm). In other implementations, other units can be used. The effective diameter of the pulleys represents the diameter of the endless belt riding therealong.

In the region 904, as the speed ratio increases towards a speed ratio of one, the size of the diameter of the endless belt along the driver pulley increases. An increase in this diameter of endless belt is a result of a decrease in the groove size of the driver pulley. With the illustrated pulley system and at a selected speed of the input shaft, for a desired speed ratio of 0.5, the size of the groove of the driver pully is altered (such as in response to operation of an actuator assembly, such as actuator assembly 113, actuator assembly 624, or actuator assembly 704) to produce a diameter of the endless belt therealong of 100.0 millimeters (mm), and the center distance is altered, such as in response to operation of an actuator (such as actuator 662), to be 450.0 mm. In this example, at this desired speed ratio of 0.5, the groove size of the driven pulley is at the smallest size, resulting in a diameter of the endless belt along the driven pulley being at a maximum size. In this case, the maximum size of the diameter of the endless belt along the driven pulley is 200.0 mm. By altering the groove size of the driver pulley and the center distance in this way, the desired speed ratio and, hence, the desired rotational speed of the output shaft is produced.

If the desired output speed is changed such that a speed ratio of 1.25 is determined, the effective diameter of the driver pulley moves from location 918 to location 920 along, as indicated by arrow 922. The groove size of the driver pulley is commanded to be the smallest size. As the graph 908 is followed from the speed ratio of 0.5 to the speed ratio of 1.25, the diameter of the endless belt along the driver pulley increases to be the largest size possible. The center distance is similarly changed according to the graph 910 from the speed ratio of 0.5 to the speed ratio of 1.25, moving from location 924 to location 926 along arrow 928. Following the graph 910, the center distance reduces to a minimum value corresponding to a speed ratio of one (1) and then begins to increase again to a center distance of 405.0 mm. The third graph 912 illustrates how the diameter of the endless belt along the driven pulley changes, which relates to how the groove size changes, in response to the changing groove size of the driven pulley and the changing center distance. The result is that the diameter of the endless belt along the driven pulley is larger than would otherwise be accomplished without altering the center distance while, at the same time, achieving desired speed ratio, which correlates to the desired rotational speed of the output shaft.

FIG. 13 is an example plot 1300 of a system of graphs, similar to plot 900, that can be used to control a pulley system as described herein in some instances. The plot 1300 is another graphical representation of the performance of a pulley system, such as pulley system 100 or 600 described herein, and illustrates graphically how the pulley system behaves in response to alteration to the groove size of the driver pulley and alteration to the center distance between the input shaft and output shaft of the pulley system. Here, too, the groove size of the driver pulley can be controlled, such as with the use of an actuator assembly similar to actuator assembly 113, actuator assembly 624, or actuator assembly 704. However, in other implementations, the groove size of the driven pulley can be commanded. The plot 1300 is similar to plot 900 except that the x-axis is presented in terms of the desired rotational speed of the output shaft as opposed to the desired speed ratio, as shown in FIG. 9.

Referring to FIG. 13, the ordinate axis or y-axis 1302 represents a center distance between an input shaft, such as input shaft 108 or input shaft 602, and an output shaft, such as output shaft 110 or output shaft 606. In the illustrated example, the center distance is indicated in millimeters (mm). In other implementations, other units can be used. In a manner similar to that described above, a driver pulley, such as driver pulley 102 or driver pulley 602, is coupled to the input shaft and is configured to have an adjustable groove to alter a size of a diameter of an endless belt riding therealong. The y-axis is also used to indicate a size of the diameter of an endless belt riding along the driver pulley, which, as explained above, is also referred to as the effective diameter of the driver pulley. However, it is noted that the diameter of an endless belt riding along a pulley is determinable based on radius and vice versa, and, in some instances, a plot of radius of the driver pulley is plotted and used. The abscissa axis or x-axis 1304 represents a desired rotational speed of the output shaft. In the illustrated example, the rotational speed is indicated in revolutions per minute, RPM. Other measurement of rotational speed may also be used. Generally, the rotational speed of the output shaft is what is desired to be controlled in a pulley system, particularly with one in which the one or more pulleys have an adjustable groove.

The plot 1300 includes a graph 1306 that shows how the diameter of the endless belt along the driver pulley, also referred to as the effective diameter of the driver pulley, changes with respect to the desired rotational speed of the output shaft. The plot 1300 also includes a graph 1308 that shows how the center distance is altered in order to provide, in combination with the effective diameter of the driver pulley, the corresponding rotational speed of the output shaft. The plots 1306 and 1308 operate in cooperation to produce a desired rotational speed of the output shaft while also maximizing a diameter (or radius) of the endless belt along the driver pulley and driven pulley. For example, a maximum effective diameter of the endless belt along the driver pulley and driven pulley is achieved when, in the context of the physical limitations of the driver pulley and the driven pulley, and the physical limitations on altering the center distance, each of the driver pulley and the driven pulley have their respective grooves at a size that produces the largest diameter of the endless belt to allow the pulley system to produce a desired rotational speed of the output shaft using a known rotational speed of the input shaft.

A third graph 1310 is also included. The third graph 1310 represents how the size of the diameter of the endless belt along the driven pulley changes in response to the size of the diameter of the endless belt along the driver pulley and in response to the center distance between the input shaft and the output shaft.

The plot 1300 reflects behavior of various component or properties of a pulley system, such as pulley system 100 or pulley system 600 when the driver pulley and center distance are controlled as described herein to produce a desired rotational speed of an output shaft while also maximizing a diameter of the endless belt along the driver pulley and driven pulley. By increasing a size of the diameter of the endless belt in this way, the life of the belt is increased.

FIG. 13 illustrates how the effective diameter of the driver pulley and the center distance changes when moving from a first rotational speed of the output shaft, represented by line 1312, to a second rotational speed of the output shaft, represented by line 1314. Arrow 1316 illustrates how the center distance changes along graph 1308, and arrow 1318 illustrates how the effective diameter of the driver pulley changes along graph 1306. As shown over the same interval defined between lines 1312 and 1314, the effective diameter of the driven pulley remains unchanged.

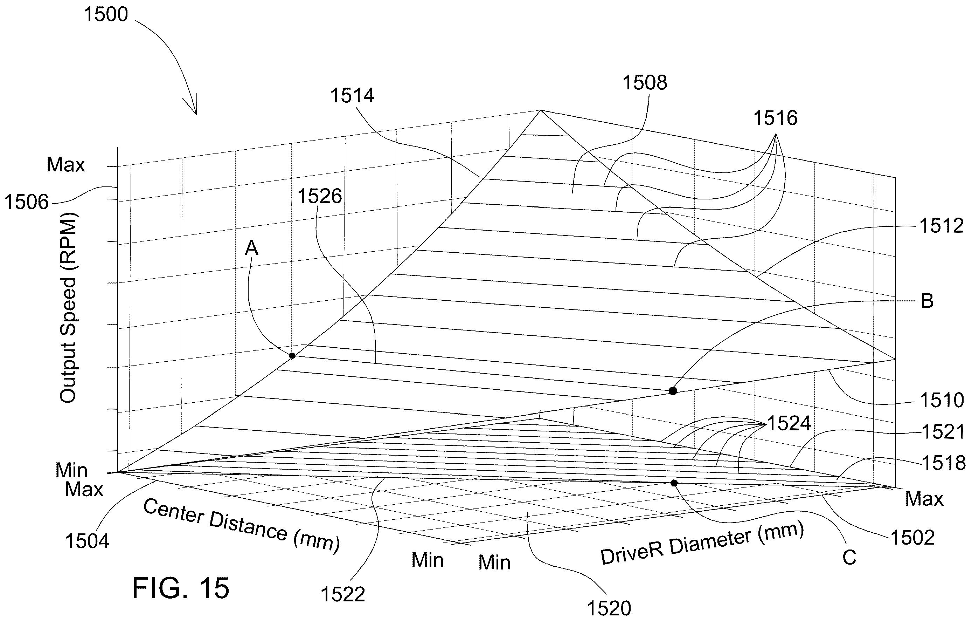

Although graphs 900, 1000, 1100, 1200, and 1300 illustrate how the behaviors of the effective diameters of the driver pulley and the driven pulley and the center distance change in order to alter a rotational speed of the output shaft of an adjustable pulley system, these graphs are merely one example approach for the adjustable pulley system. Other approaches, or control schemes, may also be used. The description in the context of FIGs. 15, 17, 18, and 19 illustrate the various ways as to how control of the effective diameter of the driver pulley and center distance may be manipulated in order to achieve a desired rotational speed of the output shaft.

A controller, such as electronic controller 702, can be utilized to control operation of a pulley system in accordance with the plots 900 and 1300 represented in FIGs. 9 and 13, respectively. For example, in some instances, the software 720 includes programming instructions that are operable to control an actuator assembly, such as actuator assembly 113, 624, or 704, to control a size of the groove of the driver pulley (or, in other implementations, the driven pulley) and an actuator, such as actuator 624 or actuator 706, to control a size of the center distance between the input shaft and the output shaft.

Altering the groove size and, consequently, the effective diameter of the driver pulley (or driven pulley, as the case may be) and the size of the center distance can be performed in many different ways. For example, in some implementations, when changing from one speed ratio to another, the change in the size of groove of the driver pulley and the center distance may start at the same time and continue at the same rate. In other implementations, the change to the sizes may start at the same time but continue at different rates. For example, the rate at which the changes are made may vary in order to maintain or increase a tension in the endless belt. Increasing the tension in this way reduces the risk that the endless belt becomes unseated from the driver pulley or driven pulley. Thus, by operating the size changes in this way may ensure that the pulley system will remain functional during a change from one speed ratio to the next. In other implementations, a start to the change in groove size and center distance is offset. That is, in some instances, the change of one of the groove size or the center distance starts before the other of the groove size or center distance. Again, in this way, positive tension in the endless belt is maintained, thereby ensuring that that the endless belt remains retained onto the pulleys. In still other implementations, changes to the groove size of the driver pulley or the center distance is started and completed before the other of the groove size or center distance is started. In still other implementations, changes to the groove size and the center distance may be made a step-wise series of alternating movements.

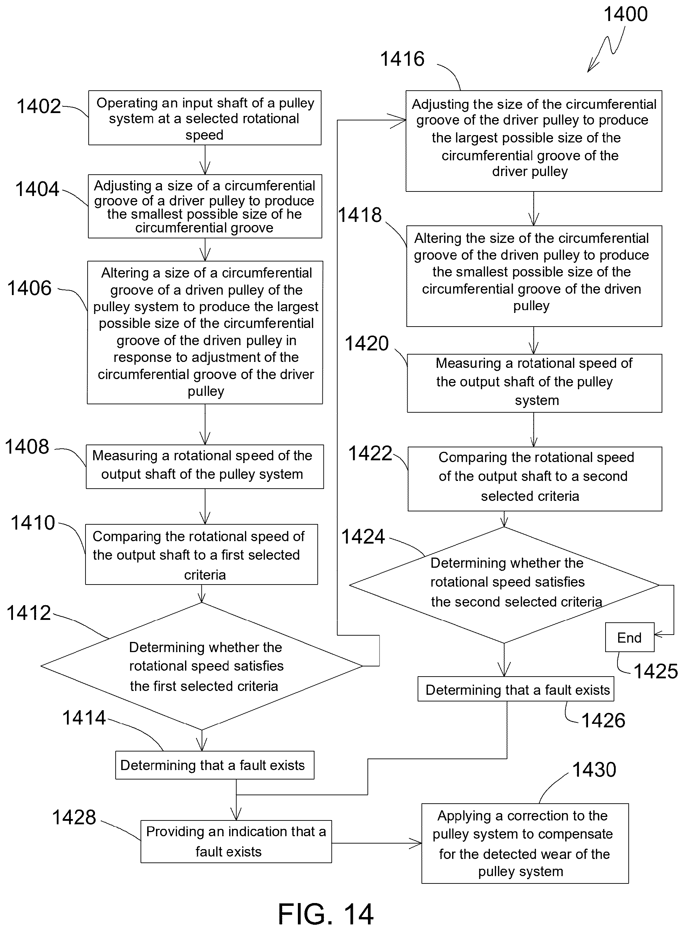

FIG. 14 is a flowchart of an example method 1400 for controlling operation of a pulley system, such as the pulley system 100 or 600, to determine whether a fault exists with the pulley system. Referring to FIG. 14, at 1402, an input shaft of the pulley system, such as input shaft 108 or input shaft 602, is operated at a selected rotational speed. At 1404, a groove of a driver pulley of the pulley system, such as circumferential groove 612 of driver pulley 604 of pulley system 600, is adjusted to the smallest size possible size for the driver pulley. Adjusting the groove in this way produces the largest diameter of an endless belt, e.g., endless belt 106 or endless belt 610, riding therealong that the driver pulley is capable of producing. For example, in some instances, an actuator assembly, such as actuator assembly 113 or actuator assembly 624, is operated to produce the smallest possible size of a groove of the driver pulley of the pulley system. For example, one or both of the sheave portions, such as sheave portions 616 and 618 of driver pulley 604, are moved closer to each other to reduce the size of the groove to the smallest size possible. This size of the groove produces the largest possible diameter in the endless belt as the endless belt rides along the driver pulley. At 1406, in response to changing the groove size of the driver pulley, a size of the circumferential groove, e.g., circumferential groove 614, of a driven pulley, e.g., driven pulley 608, changes in response, since the endless belt has a constant length and a center distance between the driver pulley and the driven pulley remains constant. For example, in response to adjusting the driver pulley in this way, the sheave portions of the driven pulley, e.g., sheave portions 620 and 622 of driven pulley 608, are separated, increasing the groove size of the driven pulley and decreasing a size of the radius of the endless belt riding along the driven pulley. As a result of the adjustment to the driver pulley, a rotational speed of an output shaft, e.g., output shaft 606, is changed.

At 1408, the rotational speed of the output shaft is measured. At 1410, the measured rotational speed of the output shaft is compared to a first selected criterion or a set of criteria (collectively referred to as "first selected criterion"). For example, in some implementations, the first selected criterion is a rotational speed or range of rotational speeds of the output shaft that would be produced by the smallest groove size of the driver pulley where the driver pulley, the driven pulley, and the endless belt are in an unworn condition. Thus, an example criterion is an expected rotational speed that should be achieved by the output shaft in response to the adjustment made to the driver pulley. At 1412, a determination is made as to whether the speed of the output shaft satisfies the first selected criterion. If the comparison indicates that the measured rotational speed does not satisfy the first selected criterion, then a fault is determined at 1414. Thus, if the driver pulley, as adjusted, is unable to achieve the expected rotational speed of the output shaft, then a fault is indicated, and an undesirable, e.g., excessive, amount of wear may be indicated. In some instances, the cause of the determined fault may be wear of one or more of the driver pulley, the driven pulley, or the endless belt of the pulley system.

Example types of wear may include belt stretch, thereby altering a length of the endless belt, and pulley wear, e.g., an amount by which that tapered surfaces, e.g., tapered surfaces 206, 208, wear, can affect the ability of a pulley system to provide a desired speed ratio. Wear of the pulley system can affect the ability of the pulley system to properly control rotation of the output shaft. Consequently, the present disclosure provides for determining whether system wear has occurred.

At 1416, the driver pulley is adjusted to produce the largest circumferential groove, thereby producing the smallest effective diameter. This results in the smallest radius of an endless belt riding along the driver pulley that the driver pulley is capable of producing. For example, the sheave portions of the driver pulley are separated by a maximum amount in order to produce the largest circumferential groove size possible. As a result, at 1418, the driven pulley responds to the endless belt, which results in advancing of the sheave portions of the driven pulley towards each other, decreasing the circumferential groove size of the driven pulley and increasing the effective diameter of the driven pulley and a size of the radius of the endless belt riding along the driven pulley. At 1420, the rotational speed of the output shaft is measured. At 1422, the measured rotational speed of the output shaft is compared to a second criterion or set of criteria (collectively referred to as "second selected criterion"). For example, in some implementations, the second selected criterion is a rotational speed or range of rotational speeds of the output shaft that would be produced by the largest groove size of the driver pulley where the driver pulley, the driven pulley, and the endless belt are in an unworn condition. At 1424, a determination is made as to whether the speed of the output shaft satisfies the second selected criterion. Thus, an example criterion is an expected rotational speed that should be achieved by the output shaft in response to the adjustment made to the driver pulley. If the comparison indicates that the measured rotational speed of the output shaft does not satisfy the second selected criterion, then a fault is determined at 1426. Thus, if the driver pulley, as adjusted, is unable to achieve the expected rotational speed of the output shaft, then a fault is indicated, and an undesirable, e.g., excessive, amount of wear may be indicated. In some instances, wear of one or both of the driver pulley or driven pulley or the endless belt of the pulley system may be the cause of the determined fault. If a fault is not determined at 1424, then the method 1400 moves to 1425 where the method 1400 ends.

At 1428, a determined fault is indicated, such as in the form of an alarm. The alarm may be provided to a user, such as an operator or technician, dealership, company, or other entity. Example alarms may include visual alarms (e.g., illumination of a light or display of a message on a screen), aural alarms (e.g., activation of a horn or production of some other audible sound), haptic alarms (e.g., production of a vibration), or a combination of these.

In some implementations, in addition to or alternatively, at 1430, a correction is applied to the pulley system in order to compensate for the wear of the pulley system. For example, in order to enable the pulley system to be able to produce a desired output shaft speed, a center distance, e.g., center distance 116 or center distance 609, is altered. In this way, the ability of the pulley system to produce a desired rotational speed of the output shaft is achieved. Further, in this way, maintenance of the pulley system is reduced, reducing operating costs of the machine that includes the pulley system, reducing machine downtime, and reducing labor costs associated with performing maintenance.

Although method 1400 includes both (1) increasing the effective diameter of the driver, via reducing the size of the circumferential groove thereof, to a maximum size supported by the driver pulley in order to determine whether the resulting rotational speed of the output shaft satisfies at least one first criterion and (2) reducing the effective diameter of the driver pulley, via increasing the size of the circumferential groove thereof, to a minimum size supported by the driver pulley in order to determine whether rotational speed of the output shaft satisfies at least one second criterion, the method may include a single one of these aspects in order to determine that a fault exists and apply a correction based on a single one of these aspects. Thus, some implementations may include both of these aspects, while other implementations may include a single one of these aspects and still be operable to make an adjustment to the pulley system to improve the operation thereof and, hence, reduce maintenance costs.

FIG. 15 is a three-dimensional plot 1500 that is usable to select a center distance or an effective diameter of a driver pulley (or other pulley whose groove size in alterable in response to an input such as with the use of an actuator assembly, such as actuator assembly 113 or 624) of an adjustable pulley system. Thus, in some instances, the driven pulley may be controllable, and, thus, in some instances, a plot similar to plot 1500 may be used to select the effective diameter of the driven pulley.

The plot 1500 includes an x-axis 1502 that represents the effective diameter of the driver pulley, having units of millimeters. The y-axis 1504 represents the center distance between the driver pulley and a driven pulley. In the illustrated example, the units of the center distance are in millimeters. Although the units of the x-axis 1502 and the y-axis 1504 are in millimeters, in other implementations, one or both of these axes may be presented using other units of measure. The plot 1500 also include a z-axis 1506 that represents the output speed of an output shaft of the pulley system.

The plot 1500 includes a surface 1508 that is defined by the following equation:
${S}_{out} = \frac{DvR * {S}_{in}}{DvR - \left(CD∗π\right) + \sqrt{CD ⋅ \left(4∗BL-4∗DvR⋅π+CD∗\left({π}^{2}-8\right)\right)}}$ (Equation 3)

In Equation 3, Sₒᵤₜ is the rotational speed of the output shaft; DvR is the effective diameter of the driver pulley; Sᵢₙ in the rotational speed of the input shaft; CD is the center distance between the input shaft and the output shaft; and BL is the length of the endless belt.

Equation 3 is generated using equation 4 and equation 6. Equation 4 is as follows:
${S}_{out} ∗ DvN = {S}_{in} ∗ DvR$ (Equation 4)

In Equation 4, Sₒᵤₜ is the rotational speed of the output shaft; DvN is the effective diameter of the driven pulley; Sᵢₙ is the rotational speed of the input shaft; and DvR is the effective diameter of the driven pulley. Rearranging Equation 4 produces:
${S}_{out} = {S}_{in} ∗ \frac{DvR}{DvN}$ (Equation 5)

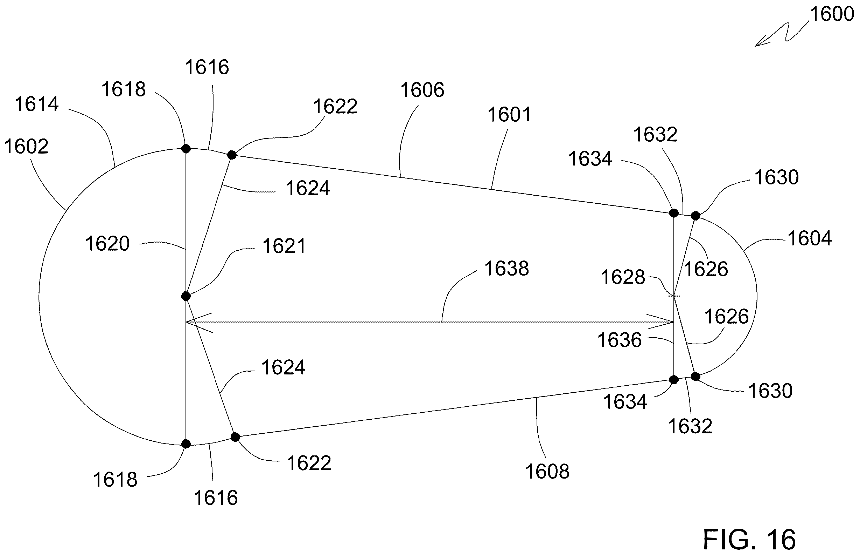

Equation 6 is a simplified equation used to determine belt length for a pulley system. FIG. 16 illustrates an example diagram 1600 used to generate the equation to determine belt length. FIG. 16 shows a shape 1601 that represents the shape of an endless belt wrapped around a driver pulley configured with an effective diameter thereof and a driven pulley also configured at an effective diameter thereof. In some instances, the effective diameters shown in FIG. 16 are the largest effective diameters supported by the respective adjustable pulleys. In other instances, the illustrated effective diameter may be smaller than the largest effective diameters possible for the respective adjustable pulleys. FIG. 16 illustrates how a total length of an endless belt can be determined. As shown in FIG. 16, the diagram 1600 includes a first arc 1602 representing a portion of the endless belt along the driver pulley, a second arc 1604 representing a portion of the endless belt along a driven pulley, and line segments 1606 and 1608 representing lengths of the endless belt extending between the arcs 1602 and 1604. The first arc 1602 extends between locations 1622, and the second arc 1604 extends between locations 1630, and the line segments 1606 and 1608 extend between respective locations 1622 and 1630. Together, the collective lengths of these portions of the shape 1601 represent the length of the endless belt.

In the illustrated example, the largest effective diameter of the driver pulley is larger than the largest effective diameter of the driven pulley. Thus, the endless belt wraps around a portion of the circumference of the driver pulley that exceeds 180 degrees of the driven pulley circumference, and the endless belt wraps around a portion of the driven pulley by an amount that is less than 180 degrees of the driven pulley circumference. Consequently, the arc 1602 includes arc portion 1614 (which corresponds to half of the effective diameter of the driver pulley) and two arc portions 1616. The arc portion 1614 extends between locations 1618 defined by intersection of a vertical line 1620 passing through a center 1621 of the driver pulley and shape 1601. As indicated previously, the arc portion 1614 represents 180 degrees of the circumference of the driver pulley at the largest effective diameter thereof. Each of the arc portions 1616 extend from location 1618 to a location 1622 that is the location where the endless belt is tangent to the driver pulley and has separated from engagement with the driver pulley. Thus, the location 1622 is where line segments 1606 and 1608 are tangent to the arc segments 1616. A line 1624 extends from the center 1621 to the location 1622.

A line 1626 extends from a center 1628 of the driven pulley to a location 1630 where the endless belt separates from the driven pulley. Location 1630 is a location where the endless belt is tangent to the driven pulley. Thus, the location 1630 is where the line segments 1606 and 1608 are tangent to the second arc 1604. The second arc 1604 extends between locations 1630. Line segments 1632 extend from a location 1634 where a vertical line 1636 passing through the center 1628 intersects the line segments 1606 and 1608. 1638 represents the center distance between the centers 1621 and 1628, which correspond to the centerlines of the input shaft and the output shaft, respectively.

The length of the endless belt is equal to the combined lengths of the arc segment 1614, the arc segments 1616, the line segments 1606 and 1608, the second arc 1604. The length of the second arc 1604 can be estimated to be half of the circumference of the driven pulley at the largest effective diameter minus the lengths of line segments 1632.

The combined length of both line segments 1632 is represented by:
${L}_{1} = DvN ∗ asin \left(\frac{DvR - DvN}{2 ∗ CD}\right)$ (Equation 6)

In Equation 6, DvR is the largest effective diameter of the driver pulley; DvN is the largest effective diameter of the driven pulley; and CD is the center distance between the centerlines of the input shaft and the output shaft, i.e., distance 1638. In some implementations, the length of line segments 1632 can be approximated to be:
${L}_{1} = DvN ∗ \left(\frac{DvR - DvN}{2 ∗ CD}\right)$ (Equation 7)

Half of the circumference of the driven pulley at the largest effective diameter thereof is:
${L}_{2} = \frac{π ∗ DvN}{2}$ (Equation 8)

In Equation 2, DvN is the largest effective diameter of the driven pulley.

Therefore, the length of the second arc 1604 can be approximated as:
${L}_{3} = {L}_{2} - {L}_{1} = \frac{π ∗ DvN}{2} - DvN ∗ \left(\frac{DvR - DvN}{2 ∗ CD}\right)$ (Equation 9)

The combined length of both arc portions 1616 is represented by:
${L}_{4} = DvR ∗ asin \left(\frac{DvR - DvN}{2 ∗ CD}\right)$ (Equation 10)

The length of the collective length of the arc portions 1616 can be approximated as:
${L}_{4} = DvR ∗ \left(\frac{DvR - DvN}{2 ∗ CD}\right)$ (Equation 11)

The terms in Equation 11 are the same as those described in the context of Equation 6. The length of arc portion 1614 is represented by:
${L}_{5} = \frac{π ∗ DvR}{2}$ (Equation 12)

Thus, the length of the first arc 1602 is represented by:
${L}_{6} = {L}_{5} + {L}_{4} = \frac{π ∗ DvR}{2} + DvR ∗ \left(\frac{DvR - DvN}{2 ∗ CD}\right)$ (Equation 13)

The length of each of the line segments 1606 and 1608 is:
${L}_{7} = CD ∗ cos \left(\frac{DvR - DvN}{2 ∗ CD}\right)$ (Equation 14)

Again, the variables contained in Equation 7 are the same as those already described above in the context of Equation 6. In some instances, the length of the line segments 1606 and 1608 can be approximated as follows:
${L}_{7} = CD ∗ \left[1-\frac{{\left(\frac{DvR - DvN}{2 ∗ CD}\right)}^{2}}{2}\right]$ (Equation 15)

Therefore, the total length of the endless belt is:
$BL = \frac{π ∗ DvR}{2} + \frac{π ∗ DvN}{2} - 2 ∗ CD \left[\frac{{\left(DvN-DvR\right)}^{2}}{8 ∗ {CD}^{2}}-1\right] + \frac{DvN \left(DvN-DvR\right)}{2 ∗ CD} - \frac{DvR \left(DvN-DvR\right)}{2 ∗ CD}$ (Equation 16)

In Equation 16, BL is the total belt length, and the other terms are the same as described above. Equation 16 can be solved for DvN, and that expression can be substituted into Equation 5 to produce Equation 3, shown above.

Referring again to FIG. 15, the surface 1508 includes boundaries 1510, 1512, and 1514, which represent optimized solution for the associated adjustable pulley system. More particularly, the optimized solutions provided on the boundaries 1510 and 1512 correspond to achieving the desired rotational speed of the output shaft while providing the largest effective diameter of the driven pulley. Although the effective diameter of the driven pulley is not represented by any of the x-axis 1502, the y-axis 1504, or the z-axis 1506, the values of the effective diameter of the driver pulley or the center distance along the boundaries 1510 and 1512 provide for the largest effective diameter of the driven pulley for a given adjustable pulley system. This can be understood where, in implementations in which the effective diameter of the driven pulley is changeable using an actuator (such as actuator assembly 113 or 624), the effective diameter of the driven pulley is changeable in response to changes to the effective diameter of the driver pulley or changes in the center distance as a result of the fixed length of the endless belt. Therefore, the effective diameter of the driven pulley is optimized to the largest possible size along the boundaries 1510 and 1512 for the given values along the x-axis 1502, y-axis 1504, and z-axis 1506.

The surface 1508 also includes a plurality of lines 1516 that represent a constant rotational speed along the surface 1508. Lines 1516 are used to identify an optimized solution for a desired rotational speed of the output shaft for the adjustable pulley system. Although several lines 1516 of constant rotational speed are illustrated, it is understood that there are an infinite number of other lines of constant rotational speed are provided by the surface 1508.

A projection 1518 of the surface 1508 is provided on a plane 1520 defined by the x-axis 1502 and the y-axis 1504. This projection 1518 can be used to readily identify the center distance and effective diameter of the driver pulley associated with a desired rotational speed of the output shaft of the pulley system, particularly an optimized solution for both variables (i.e., the center distance and the effective diameter of the driver pulley) along the line 1522 corresponding to a projection of the boundary 1510. The projection 1518 also includes a plurality of lines 1524 that corresponds to the constant speed lines 1516 projected onto the plane 1520. The projection 1518 also includes line 1521 that represents a projection of the boundary 1512 onto the plane 1520.

Using this surface 1508 and, thus, Equation 3, a center distance and effective diameter of the driver pulley are determinable where the rotational speed of the input shaft and the desired rotational speed of the output shaft are known. As can be understood when viewing the surface 1508, for a desired rotational speed of the output shaft, there are a plurality of combinations of center distance and effective diameters of the driver pulley. In fact, for a particular constant speed line 1516, each point therealong represents a different combination of effective diameter of the driver pulley and center distance to produce the desired rotational speed of the output shaft corresponding to the constant speed line 1516. However, the point on the constant speed line along the boundary 1510 corresponds to the values of the center distance and effective diameter of the driver pulley that produces the largest possible effective diameter of the driven pulley while maintaining the desired output speed. For example, for a desired rotational speed of the output shaft at point A, the values of the center distance and effective diameter of the driver pulley that produces the largest possible effective diameter of the driven pulley is obtained by the intersection of the corresponding constant speed line 1526 and the boundary 1510, identified as point B. Point B is projected onto line 1522 on plane 1520 and is illustrated as point C. The values of the center distance and the effective diameter of the driver pulley can be readily obtained from the value of the x-axis 1502 and the value of the y-axis 1504 corresponding to point C.

Further, with the effective diameter of the driver pulley and the center distance known, the surface is used to move to a position along the borders 1510 or 1512 to identify an effective diameter or center distance that both produces the desired rotational speed of the output shaft as well as ensure that the effective diameter of the driven pulley is optimized, e.g., made the largest in light of the constraints of the adjustable pulley system.

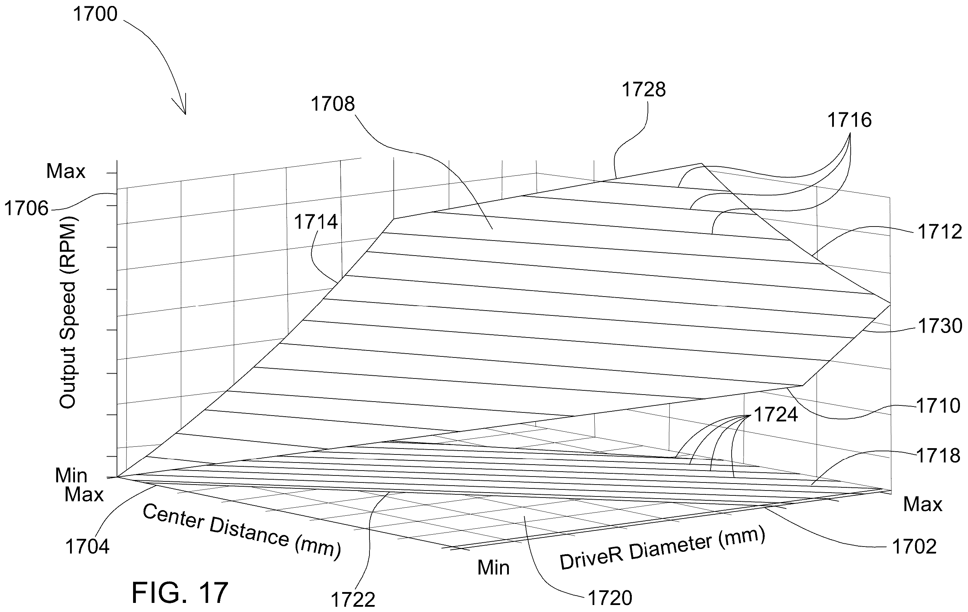

FIG. 17 is another plot 1700 that includes a surface 1708 that represents an asymmetrical pulley system. The surface 1700 is generated using both Equation 3 as well as the limitations that describe the physical constraints of the asymmetrical pulley system. For example, in this example, the center distance, CD, is limited by minimum and maximum values; the effective diameter of the driver pulley is limited by minimum and maximum values; and the effective diameter of the driven pulley is limited by minimum and maximum values. As a result, the surface has truncated portions, represented by boundaries 1728 and 1730, as a result of these limitations. However, use of the surface 1708 is used in the same manner as described above with respect to surface 1508. Reference numbers 1702, 1704, 1706, 1710, 1712, 1714, 1716, 1718, 1720, 1722, and 1724 represent similar features to those identified by reference numbers 1502, 1504, 1506, 1510, 1512, 1514, 1516, 1518, 1520, 1522, and 1524 respectively, described above. As such those descriptions are omitted.

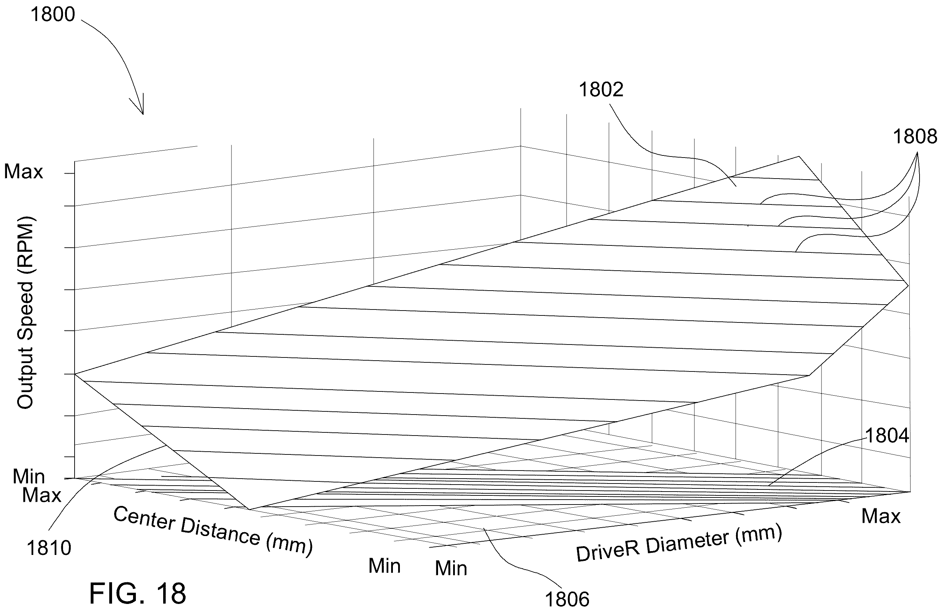

FIG. 18 is a plot 1800 that includes example surface 1802 that represents operation of an adjustable pulley system having limitations on both a maximum effective diameter of a driven pulley and a driver pulley. A projection 1804 is provided on the x-y plane 1806, and the surface 1802 and projection 1804 thereof can be used in the manner described above. Constant speed lines 1808, similar to those described above, are also illustrated. In some implementations, limiting the maximum effective diameters of the pulleys in this way may not provide an increase to the life of the endless belt. However, constraining an adjustable pulley system in this way may provide benefits in some instances when changing rotational speeds of the output shaft. Further, the illustrated surface 1802 allows for changes in center distance at the minimum effective diameter of the driver pulley, as shown along boundary 1810.

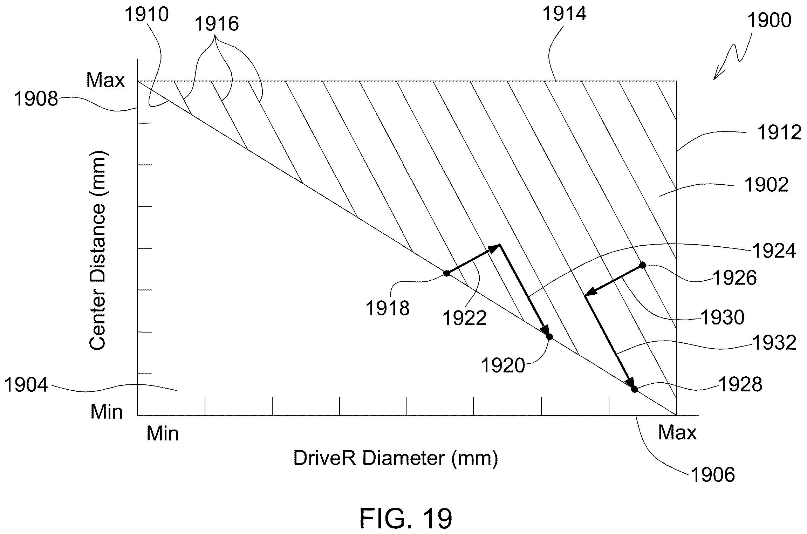

Surfaces, such as surfaces 1508,1708, and 1802 and associated projections, e.g., projection 1518 can be used to obtain a desired rotational speed of the output shaft expeditiously. FIG. 19 is a graph 1900 displaying a projection 1902 of a surface, e.g., surface 1508, projected onto an x-y plane 1904 passing through an origin of a coordinate system. For example, the corresponding to the projection 1900 may be similar to projection 1518. The x-axis 1906 represents the effective diameter of the driver pulley, and the y-axis 1908 represents the center distance between the input shaft and the output shaft of an adjustable pulley system. The projection 1902 includes boundaries 1910, 1912, and 1914 and constant speed lines 1916 also projected onto the plane 1904 from the corresponding surface. Although several constant speed lines 1916 are illustrated, these are provided merely for illustration with the understanding that an infinite number of constants speed lines 1916 exist on the projection 1902, although not particularly illustrated.

Altering speed of the output shaft quickly is desirable to provide for a responsive machine. FIG. 19 shows a first selected location 1918 along the boundary 1910. This location 1918 represents a current or first speed of the output shaft, and this first speed can be determined by projecting this point back onto the corresponding surface and reading the speed from the z-axis, as shown in FIG. 15, for example. The rotational speed associated with location 1918 can also be determined by identifying the constant speed line 1916 on which the location 1918 is located. As explained earlier, each of the constant speed lines defines a plurality of different combinations of driver pulley effective diameter and center distance that will produce the same rotational speed of the output shaft. Further, the locations along the boundaries, particularly along boundaries 1910 and 1912, represent the combination of effective diameter of the driver pulley and center distance that produces the largest effective diameter of the driver and driven pullies for a particular adjustable pulley system. Thus, the locations along the boundaries 1910 and 1912 correspond to combinations of the effective diameter of the driver pulley and center distance that produces improved life of the endless belt.

To change the rotational speed of the output shaft of the adjustable pulley system quickly from a first rotational speed associated with a location on a surface, such as surface 1508, surface 1708, or surface 1802 to a second rotational speed of the output shaft associated with another location on the surface, a gradient of the surface can be used to determine how to adjust the system to achieve the second rotational speed of the output shaft. For example, to rapidly change the rotational speed of the output shaft associated with a location along a boundary of a surface, e.g., location 1918 along the boundary 1910, to the rotational speed associated with a second location along the boundary, e.g., location 1920 along boundary 1910, a gradient vector 1922 is utilized, as described in more detail below.

Equations 17 through 19 represent the equations used to evaluate the gradient at any location on a surface as described herein. Evaluating the gradient identifies the relative rates of change made to the effective diameter of the driver pulley and to the center distance that will achieve the greatest rate of change in the output shaft speed at a given location on the surface. For example, the gradient vector may be used to increase the rotational speed of the output shaft rapidly, for example, in some instances, in the shortest period of time possible. Alternately the gradient vector may be used to decrease the rotational speed of the output shaft rapidly, for example, in some instances, in the shortest period of time possible.

In some implementations, to alter a rotational speed of the output shaft in the shortest possible amount of time, the gradient is continuously evaluated at each location as the effective diameter and center distance is being altered to reach the desired output speed. In such an approach, the relative rate of change of the effective diameter of the driver pulley and the center distance is also continually evaluated as the changes thereto are being performed. In other implementations, the gradient is evaluated initially to produce a gradient vector that defines how the effective diameter and center distance is to be changed to reach the desired output speed. The effective diameters of the driver pulley and driven pulley are then optimized such that the effective diameter of each of the driver pulley and driven pulley are as large as possible to promote longevity of the endless belt.

Equation 17 shows the general gradient vector equation for surfaces, such as surface 1508, surface 1708, or surface 1802, in terms of the surface's independent variables, those independent variables being effective diameter of the driver pulley and center distance: $∇ {S}_{out} = \left[\begin{matrix}\frac{\partial {S}_{out}}{\partial DvR} \\ \frac{\partial {S}_{out}}{\partial CD}\end{matrix}\right]$ (Equation 17)

Sₒᵤₜ is the rotational speed of the output shaft; DvR is the effective diameter of the driver pulley; and CD is the center distance between the input shaft and the output shaft. Equation 17 provides a vector which describes the relative changes in effective diameter of the driver pulley and center distance required to achieve the greatest possible rate of change in the rotational speed of the output shaft, Sₒᵤₜ, for a given effective diameter of the driver pulley and center distance.

Equation 18 is the partial derivative of Equation 3 made with respect to the effective diameter of the driver pulley, DvR:
$\frac{\partial {S}_{out}}{\partial DvR} = \frac{{S}_{in}}{DvR - CD ∗ π + \sqrt{CD \left(4∗BL-4∗DvR∗π+CD\left({π}^{2}-8\right)\right)}} + \frac{DvR ∗ {S}_{in} \left(\frac{2 ∗ CD ∗ π}{\sqrt{CD \left(4∗BL-4∗DvR∗π+CD\left({π}^{2}-8\right)\right)}}-1\right)}{{\left(DvR-CD∗π+\sqrt{CD \left(4∗BL-4∗DvR∗π+CD\left({π}^{2}-8\right)\right)}\right)}^{2}}$ (Equation 18)

Equation 19 is the partial derivative of Equation 3 made with respect to the center distance, CD:
$\frac{\partial {S}_{out}}{\partial CD} = \frac{DvR ∗ {S}_{in} \left(π-\frac{4 ∗ BL - 4 ∗ DvR ∗ π + 2 ∗ CD \left({π}^{2}-8\right)}{2 \sqrt{CD \left(4∗BL-4∗DvR∗π+CD\left({π}^{2}-8\right)\right)}}\right)}{{\left(DvR-CD∗π+\sqrt{CD \left(4∗BL-4∗DvR∗π+CD\left({π}^{2}-8\right)\right)}\right)}^{2}}$ (Equation 19)

The vector described by Equations 17, 18, and 19 are used to alter the speed of the output shaft quickly, such as in the smallest amount of time, when changing output speeds from one speed to another. FIG. 19 illustrates movement on the graph from the rotational speed associated with the location 1918 to a second, increased speed associated with a second location 1920, both of which are provided on the boundary 1910. Using Equations 18 and 19, a gradient vector 1922 is generated. Another vector 1924 is also generated. The gradient vector 1922 illustrates respective changes to both the effective diameter of the driver pulley and the center distance in order to alter the rotational speed of the output shaft from the rotational speed associated with location 1918 to the rotational speed of the constant speed line associated with the second location 1920. For example, a controller, which may be similar to controller 702, may command changes to an actuator operable to alter the effective diameter of a driver pulley and an actuator operable to change the center distance in a manner according to the gradient vector 1922 and then in the manner according to vector 1924 to arrive at the location 1920. In the context of changes associated with movement along the vector gradient 1922, although the pulley arrangement in the configuration associated with the end of the gradient vector 1922 is not optimized in that the effective diameter of the driven pulley is not the largest possible, the pulley system in this configuration has been able to quickly alter the rotational speed of the output shaft to the desired rotational speed quickly. The vector 1924 illustrates how changes to the effective diameter of the driver pulley and the center distance is to be changed in order to maintain the desired rotational speed of the output shaft while increasing the effective diameter of the driven pulley to a maximum value associated with the second location 1920 on the boundary 1910. In this example, the vector 1924 is orthogonal to the vector gradient 1922.

With a projection 1902 and associated surface similar to the one illustrated in FIGs. 15 and 19, the vector gradient strategy described above is effective at changing the rotational speed of the output shaft at a rapid rate, such as at a rate that changes the rotational speed as quickly as possible. In other implementations, a path along the projection when moving from one location to another can be any selected path. For example, in some instances, the path used and, consequently, the manner in which changes are made to the effective diameter and center distance, may be represented by a line extending directly between the two locations, such as along the boundary 1910, when the two locations are also provided on the boundary.

Further, the strategy described above in moving from location 1918 to 1920 is effective in this way when moving from a first rotational speed to a second rotational speed that is greater than the first rotational speed. In the context of a scenario where the rotational speed is being reduced, a different strategy can be employed that to alter the rotational speed to the reduced rotational speed quickly, such as in the least amount of time possible. This is understood by considering changing the configuration of the adjustable pulley system from location 1920 to 1918 using the same vectors 1924 and 1922.

If the reserve approach were used to that described above, the changes to the effective diameter and the center distance as represented by vector 1924 would maintain the rotational speed of the output shaft at the current rotational speed associated with location 1920 for the entire duration to make the changes to the effective diameter of the driver pulley and center distance associated with the vector 1924. Thereafter, the rotational speed would then begin to reduce when the changes associated with vector gradient 1922 are made. Consequently, the changes to the rotational speed take more time to occur.

However, another approach can be used when changing the rotational speed from a larger rotating speed to a smaller rotating speed. For example, a rotational speed associated with location 1926 may be desired to be changed to a rotational speed associated with location 1928. A more efficient strategy to reduce the rotational speed more quickly when moving from location 1926 to 1928 involves the use of vectors 1930 and 1932. Changes to the effective diameter of a driver pulley and center distance may be made according to a gradient vector 1930. Similar to gradient vector 1922, the gradient vector 1930 is disposed perpendicularly to the constant speed line associated with location 1926 and terminates at the constant speed line associated with location 1928. For example, in some instances, these changes are made in response to actuation of the actuator altering the effective diameter of the driver pulley and the actuator altering the center distance. The operation of these actuators to follow the vector 1930 may be in response to one or more signals generated by a controller, which may be similar to controller 702. Thereafter, the actuators are commanded so that the alterations to the effective diameter of the driver pulley and the center distance follow the vector 1932. It is noted that following the vector 1930 causes the rotational speed of the output shaft to change immediately and, by the end of the vector 1932, the rotational speed of the output shaft has reached the desired rotational speed. As a result, the time required to change the rotational speed to the desired rotational speed is reduced. Movement along vector 1932 follows a constant speed line 1916 such that the desired rotational speed is maintained while the effective diameter of the driven pulley is adjusted. At the end of the vector line 1932, the effective diameter of the driven pulley is optimized, e.g., the effective diameter is as small as possible, thereby improving the life of the endless belt.

In some instances, such as when moving from one rotational speed to a reduced rotational speed, changes to the effective diameter of the driver pulley and the center distance are controlled such that a selected tension in the endless belt is maintained so that the belt does not become dislodged from the driver pulley, the driven pulley, or both. Additionally, although vectors 1930 and 1932 are illustrated, other vectors can be used when moving from one location on the projection 1902 to another location on projection 1902, particularly from one location on the boundary 1910 to another location on the boundary 1910 that corresponds to a reduced rotational speed of the output shaft.

It is noted that the examples provided illustrate moving from one location on the boundary 1910 to another location also along the boundary 1910. However, the scope of the disclosure is not so limited. Rather, the present disclosure encompasses moving from any location on a surface, such as surface 1508, or an associated projection, such as projection 1518 or 1902, to another location in any way desired. For example, the scope of the present disclosure includes moving from one location to another, whether one or both are provided on a boundary, such as boundary 1910 without the use of gradient vectors. Further, in some instances, FIGs. 15, 17, and 18 may represent different adjustable pulleys systems with associated constraints. However, in other instances, FIGs. 15, 17, and 18 may represent the same adjustable pulley system but constrained differently at different times in order to achieve different goals.

Without in any way limiting the scope, interpretation, or application of the claims appearing below, a technical effect of one or more of the example implementations disclosed herein is improving belt life of a pulley system. Another technical effect of one or more of the example implementations disclosed herein is reducing maintenance time and maintenance costs of a pulley system. Further, altering a center distance between an input shaft and an output shaft as described herein may enable the associated pulley system to operate at increased speed ranges where the pulley system has asymmetric drives.

Adjustment of pulley systems having an idler pulley are also described. Rather than altering a center distance between a driver pulley and a driven pulley, a position of an idler pulley, along with a size of the effective diameter of the driver pulley, are altered to provide a desired output speed of an output shaft of the pulley system. Additionally, the position of the idler pulley and the effective diameter of the driver pulley are altered, such as in an iterative fashion. Altering the position of the idler pulley and the effective diameter of the driver pulley, whether in one step or in a plurality of steps, provides, in some instances, both a desired rotational speed of the output shaft as well as an optimized effective diameter size of the driver pulley and the driven pulley in order to improve the operational life of the endless belt of the adjustable pulley system. For example, an effective diameter of the driver pulley or driven pulley is optimized where the largest effective diameter of the respective drive pulley, driven pulley, or both is obtained within the constraints of the adjustable pulley system, e.g., the amount of adjustment to the circumferential groove of the driven pulley and driver pulley, rotational speed of the input shaft, and an amount of positional adjustment of the idler pulley, while still obtaining the desired rotational speed of the output shaft. For a selected output speed of the output shaft of an adjustable pulley system, the largest size of the effective diameter of the driver pulley, the driven pulley, or both within the constraints of the pulley system is obtained to provide for improved lifespan of the endless belt.

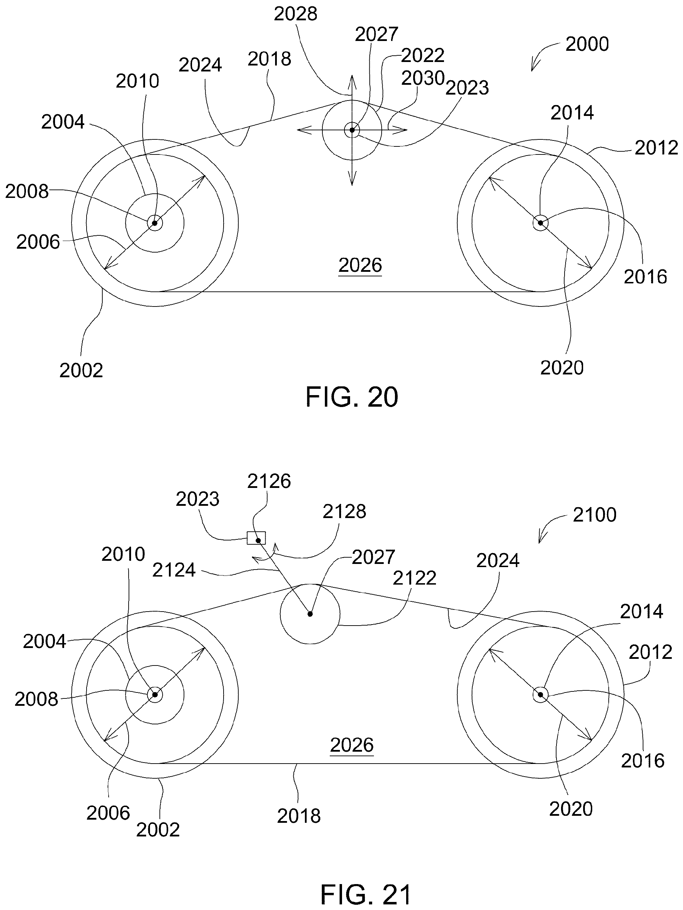

FIGs. 20, 21, 22, and 23 are diagrammatic views of example adjustable pulley systems 2000, 2100, 2200, and 2300, respectively, having an idler pulley whose position is selectable. The different pulley systems 2000, 2100, 2200, and 2300 are similar except for the amount of adjustability of the associated idler pulley. While the example pulley system 2000 is described in detail, below, common features are applicable to each of the pulley systems 2000, 2100, 2200, and 2300. The center distance between the driver pulley and the driven pulley of each example pulley system 2000, 2100, 2200, and 2300 is fixed.

In FIG. 20, the adjustable pulley system 2000 includes an adjustable driver pulley 2002, which may be similar to the adjustable driver pulleys described herein or otherwise within the scope of the present disclosure. For example, the driver pulley 2002 may be similar to the driver pulley 102, described earlier, and includes an actuator assembly 2004, which may be similar to actuator assembly 113, operable to control a size of the circumferential groove of the driver pulley. As explained earlier, adjusting the size of the circumferential groove of the driver pulley 2002, for example, by altering a spacing between sheave portions of the driver pulley 2002, alters a size of the effective diameter 2006 of the driver pulley 2002. The driver pulley 2002 is coupled to and rotatable with an input shaft 2008 about an axis of rotation 2010.

The pulley system 2000 also includes an adjustable driven pulley 2012 coupled to and rotatable with an output shaft 2014 about an axis of rotation 2016. The driven pulley 2012 may be similar to other adjustable driven pulleys described herein or otherwise within the scope of the present disclosure. For example, the driven pulley 2012 is similar to the driven pulley 104. A circumferential groove formed between the sheave portions of the driven pulley 2012, as described above, is altered in response to a force applied to the driven pulley 2012 by endless belt 2018. Consequently, an effective diameter 2020 of the driven pulley 2012 is alterable in response to a force applied to the driven pulley 2012 by the endless belt 2018.

The endless belt 2018 is wrapped around the driver pulley 2002 and the driven pulley 2012. An idler pulley 2022 of the pulley system 2000 is engaged with the endless belt 2018. In the example of FIG. 20, the idler pulley 2022 is engaged with an inner surface 2024 of the endless belt 2018. Thus, in this example, the idler pulley 2022 is disposed within an interior space 2026 bounded by the endless belt 2018. In this configuration, the idler pulley 2022 is considered to be inside of the idler belt 2018.

The idler pulley 2022 is rotatable about an axis of rotation 2027, and, for the pulley system 2000, the idler pulley 2022 is independently movable vertically in the direction of arrow 2028 and laterally in the direction of arrow 2030. The effective diameter 2006 of the driver pulley 2002 is alterable by operation of the actuator assembly 2004, and the position of the idler pulley 2022 is movable laterally, vertically, or both. An actuator 2023 is coupled to the idler pulley 2022 and configured to move the idler pulley 2022 to a desired position or in a desired manner, e.g., in a desired direction, speed, or in another way. The actuator 2023 may be a linear actuator, a rotary actuator, or any other actuator operable to alter a position of the idler pulley 2022. Alteration of the effective diameter 2006 of the driver pulley 2002 and movement of the idler pulley 2022 can be coordinated to alter a size of the effective diameter 2020 of the driven pulley 2012. Altering the effective diameter 2006 and the position of the idler pulley 2022 in this way allows for changing the effective diameter 2006 and effective diameter 2020 while maintaining a rotational speed of the output shaft 2014 at a desired rotational speed. The ability to alter, e.g., increase, the size of the effective diameter 2006, effective diameter 2020, or both provides for improving a lifespan of the endless belt 2018 by providing a desired rotational speed of the output shaft 2014 with a larger size, e.g., a maximum size based on the constraints of the pulley system 2000, of the effective diameter 2006, effective diameter 2020, or both.

Referring to FIG. 21, as discussed above, the adjustable pulley system 2100 has features similar to those of pulley system 2000, which are identified with the same reference numbers. The pulley system 2100 also includes an idler pulley 2122. Similar to idler pulley 2022, the idler pulley 2122 is located within the interior space 2026 defined by the endless belt 2018 and engages the inner surface 2024 of the endless belt 2018. Unlike the idler pulley 2022, movement of the idler pulley 2122 is defined to follow an arcuate path. In this example, the idler pulley 2122 is positioned on an arm 2124 that is pivotable about a pivot axis 2126 in the directions indicated by arrow 2128. Thus, the idler pulley 2122 is movable along an arc defined by pivoting movement of the arm 2124. Consequently, the pulley system 2100, similar to pulley system 2000, is operable to alter the effective diameter 2006 and a position of the idler pulley 2122 along an arcuate path to maintain a rotational speed of the output shaft 2014 while altering, e.g., increasing, a size of the effective diameter 2006, effective diameter 2020, or both.

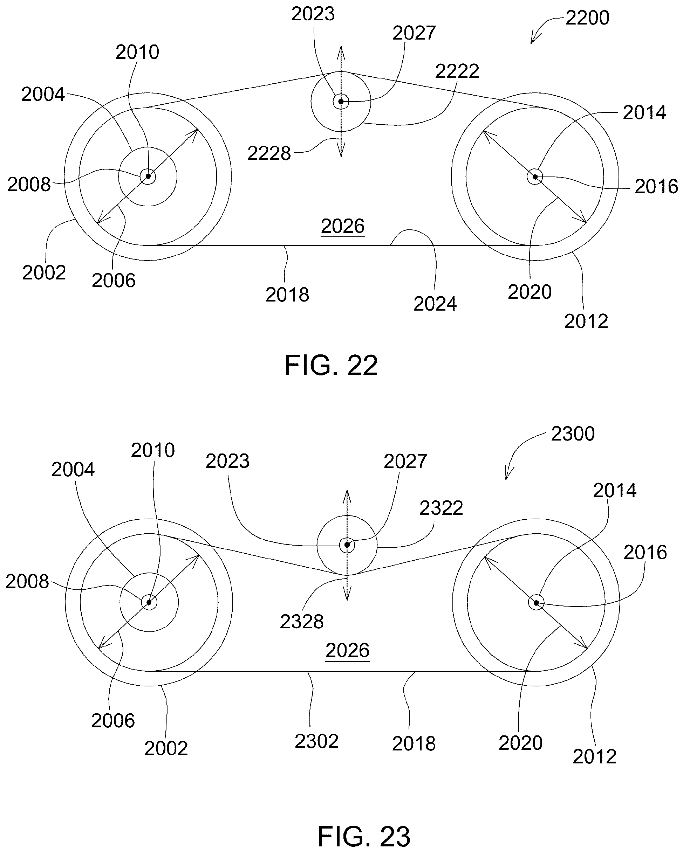

Referring to FIG. 22, the pulley system 2200 has features similar to those of pulley system 2000, which are identified with the same reference numbers. The pulley system 2200 also includes an adjustable idler pulley 2222. Similar to idler pulleys 2022 and 2122, the idler pulley 2122 is located within the interior space 2026 defined by the endless belt 2018 and engages the inner surface 2024 of the endless belt 2018. In this example pulley system 2200, the idler pulley 2222 is moveable along a linear path. In this example, the idler pulley 2222 is moveable vertically in the direction of arrow 2228. In other implementations, the idler pulley 2222 moves in a linear direction oblique to the arrow 2228. Similar to the other pulley systems 2000 and 2100, the pulley system 2200 is operable to alter the effective diameter 2006 and a position of the idler pulley 2222 along a linear path to maintain a rotational speed of the output shaft 2014 while altering, e.g., increasing, a size of the effective diameter 2006, effective diameter 2020, or both.

Referring to FIG. 23, the pulley system 2300 has features similar to those of pulley system 2000, which are identified with the same reference numbers. The pulley system 2300 also includes an adjustable idler pulley 2322. The idler pulley 2122 is outside of the interior space 2026 (and is, therefore, considered to be located outside of the endless belt 2018) and is engaged with an exterior surface 2302 of the endless belt 2018. In this example pulley system 2300, the idler pulley 2322 is moveable along a linear path. In this example, the idler pulley 2322 is moveable vertically in the direction of arrow 2328. In other implementations, the idler pulley 2322 moves in a linear direction oblique to the arrow 2328. In still other implementations, the idler pulley 2322 is moveable both laterally, in a direction perpendicular to arrow 2328, and vertically in the direction of arrow 2328. In other implementations, the idler pulley 2322 is rotatable about a pivot in a manner similar to the idler pulley 2122. Similar to the other pulley systems 2000, 2100, and 2200, the pulley system 2300 is operable to alter the effective diameter 2006 and a position of the idler pulley 2322 along a linear path to maintain a rotational speed of the output shaft 2014 while altering, e.g., increasing, a size of the effective diameter 2006, effective diameter 2020, or both.

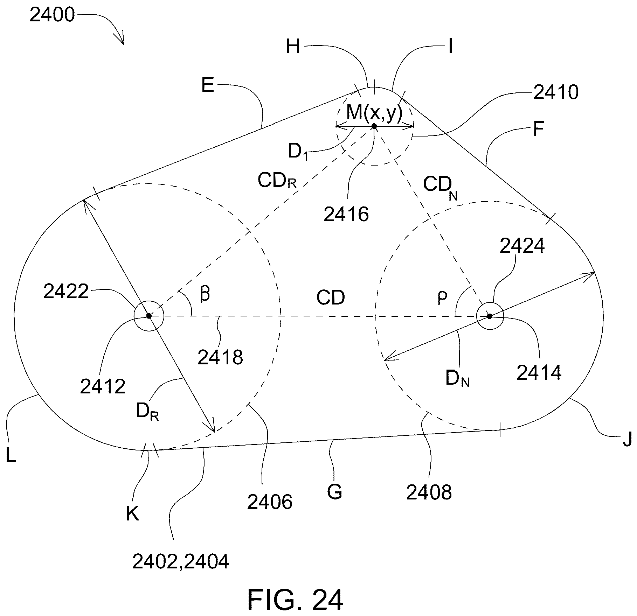

FIG. 24 is a diagram of an example adjustable pulley system 2400 used to generate an equation to determine belt length for the pulley system having an idler pulley whose position can be selectively adjusted. FIG. 24 shows a shape 2402 that represents the shape of an endless belt 2404 wrapped around a driver pulley 2406 configured with an effective diameter, D_{R}, a driven pulley 2408 also configured at an effective diameter, D_{N}, and an adjustable idler pulley 2410 located at coordinates M whose position relative to one or both of the driver pulley 2406 and driven pulley 2408 is adjustable, as explained, for example, in the context of the examples above. The coordinates M is indicated in cartesian coordinates, (x, y). The idler pulley 2410 has a diameter D_{I}. Other types of coordinates may also be used. In some instances, the effective diameters D_{R} and D_{N} shown in FIG. 24 are the largest effective diameters supported by the respective adjustable pulleys. In other instances, the illustrated effective diameters D_{R} and D_{N} may be smaller than the largest effective diameters possible for the respective adjustable pulleys. FIG. 24 illustrates how a total length of an endless belt can be determined.

As shown in FIG. 24, the diagram 2400 includes a first segment E, a second segment F, a third segment G, a first arc H, a second arc I, a third arc J, fourth arc K, and a fifth arc L. First segment E represents a portion of the endless belt 2404 extending from the driver pulley 2406 to the idler pulley 2410; the second segment F represents a segment of the endless belt 2404 extending from the idler pulley 2410 to the driven pulley 2408; and the third segment G represents a portion of the endless belt 2404 extending from the driver pulley 2406 to the driven pulley 2408. The first arc H and the second arc J represent the combined portion of the endless belt 2404 that is engaged with the idler pulley 2410. The third arc J represents the portion of the endless belt 2404 that is engaged with the driven pulley 2408, and the fourth arc K and the fifth arc L represent the portion of the endless belt 2404 that is engaged with the driven pulley 2406. In some situations, the arc K is located on the driven pulley or the size of the ark K is zero, such as when the idler pulley has a different position that than shown, when the effective diameters of the driver and driven pulley are different than that shown, or both. For example, the size of arc K is zero when the driver pulley and the driven pulley have the same effective diameter. Together, the collective lengths of these segments and arcs represent the total length of the endless belt 2404.

Location 2412 represents a center and axis of rotation of the driver pulley 2406. Location 2414 represents a center and axis of rotation of the driven pulley 2408, and location 2416 represents the coordinates M and the center and axis of rotation of the idler pulley 2410. The locations 2412, 2414, and 2416 also define the vertices of a triangle 2418. A first side of the triangle 2418 represents a center distance, CD, between the respective centers of the driver pulley 2406 and the driven pulley 2408. A second side of the triangle 2418 represents the center distance, CD_{R}, between the respective centers of the driver pulley 2406 and the idler pulley 2410, and the third side of the triangle 2418 represents the center distance, CD_{N}, between the respective centers of the driven pulley 2408 and the idler pulley 2410. An angle β is defined between the side CD and CD_{R}, and an angle ρ is defined between side CD and side CD_{N}.

The lengths of the various portions of the endless belts are represented in the following equations and are defined using the reference identifiers described above. The length of the first segment E, L_{E}, is represented by the following equation: ${L}_{E} = {CD}_{R} cos \left(\frac{{D}_{R} - {D}_{I}}{2 {CD}_{R}}\right)$ (Equation 20)

The length of the second segment F, L_{F}, is represented by the following equation: ${L}_{F} = {CD}_{N} cos \left(\frac{{D}_{N} - {D}_{I}}{2 {CD}_{N}}\right)$ (Equation 21)

The length of the third segment G, L_{G}, is represented by the following equation:
${L}_{G} = CD cos \left(\frac{{D}_{R} - {D}_{N}}{2 CD}\right)$ (Equation 22)

The length of the first arc H, L_{H}, is represented by the following equation:
${L}_{H} = \frac{\left(β-{sin}^{- 1}\left(\frac{{D}_{R} - {D}_{I}}{2 {CD}_{R}}\right)\right) {D}_{I}}{2}$ (Equation 23)

The length of the second arc I, L_{I}, is represented by the following equation:
${L}_{I} = \frac{\left(ρ-{sin}^{- 1}\left(\frac{{D}_{N} - {D}_{I}}{2 {CD}_{N}}\right)\right) {D}_{I}}{2}$ (Equation 24)

The length of the third arc J, L_{J}, is represented by the following equation:
${L}_{J} = \frac{\left(π-ρ+{sin}^{- 1}\left(\frac{{D}_{N} - {D}_{I}}{2 {CD}_{N}}\right)-{sin}^{- 1}\left(\frac{{D}_{R} - {D}_{N}}{2 CD}\right)\right) {D}_{N}}{2}$ (Equation 25)

The length of the fourth arc K, L_{K}, is represented by the following equation:
${L}_{K} = \frac{{sin}^{- 1} \left(\frac{{D}_{R} - {D}_{N}}{2 CD}\right) {D}_{R}}{2}$ (Equation 26)

The length of the fourth arc L, L_{L}, is represented by the following equation:
${L}_{L} = \frac{\left(π-β+{sin}^{- 1}\left(\frac{{D}_{R} - {D}_{I}}{2 {CD}_{R}}\right)\right) {D}_{R}}{2}$ (Equation 27)

Equations 20, 21, 22, 23, 24, 25, 26, and 27 combine as follows to define the total length, L_{EB}, of the endless belt 2404: $\begin{matrix}{L}_{EB} = \frac{\left(π-β+{sin}^{- 1}\left(\frac{{D}_{R} - {D}_{I}}{2 {CD}_{R}}\right)+{sin}^{- 1}\left(\frac{{D}_{R} - {D}_{N}}{2 CD}\right)\right) {D}_{R}}{2} + \frac{\left(β+ρ-{sin}^{- 1}\left(\frac{{D}_{R} - {D}_{I}}{2 {CD}_{R}}\right)-{sin}^{- 1}\left(\frac{{D}_{N} - {D}_{I}}{2 {CD}_{N}}\right)\right) {D}_{I}}{2} + \\ \frac{\left(π-ρ+{sin}^{- 1}\left(\frac{{D}_{N} - {D}_{I}}{2 {CD}_{N}}\right)-{sin}^{- 1}\left(\frac{{D}_{R} - {D}_{N}}{2 CD}\right)\right) {D}_{N}}{2} + {CD}_{R} cos \left(\frac{{D}_{R} - {D}_{I}}{2 {CD}_{R}}\right) + {CD}_{N} cos \left(\frac{{D}_{N} - {D}_{I}}{2 {CD}_{N}}\right) + CD cos \left(\frac{{D}_{R} - {D}_{N}}{2 CD}\right)\end{matrix}$ (Equation 28) ${CD}_{R} = \sqrt{{x}^{2} + {y}^{2}}$ (Equation 29) ${CD}_{N} = \sqrt{{\left(CD-x\right)}^{2} + {y}^{2}}$ (Equation 30) $β = {tan}^{- 1} \left(\frac{y}{x}\right)$ (Equation 31) $ρ = {tan}^{- 1} \left(\frac{y}{CD - x}\right)$ (Equation 32)

Equations 28, 29, 30, 31, and 32 combine to produce the following expression: $\begin{matrix}{L}_{EB} = \frac{{D}_{N} \left(π-{tan}^{- 1}\left(\frac{y}{CD - x}\right)-\frac{{D}_{I} - {D}_{N}}{2 \left(\sqrt{{y}^{2} + {\left(CD-x\right)}^{2}}\right)}+\frac{{D}_{N} - {D}_{R}}{2 CD}\right)}{2} - \frac{{D}_{R} \left({tan}^{- 1}\left(\frac{y}{x}\right)-π+\frac{{D}_{I} - {D}_{R}}{2 \left(\sqrt{{X}^{2} + {Y}^{2}}\right)}+\frac{{D}_{N} - {D}_{R}}{2 CD}\right)}{2} + \\ \frac{{D}_{I} \left({tan}^{- 1}\left(\frac{y}{x}\right)+{tan}^{- 1}\left(\frac{y}{CD - x}\right)+\frac{{D}_{I} - {D}_{R}}{2 \left(\sqrt{{x}^{2} + {y}^{2}}\right)}+\frac{{D}_{I} - {D}_{N}}{2 \left(\sqrt{{y}^{2} + {\left(CD-x\right)}^{2}}\right)}\right)}{2} - \sqrt{{x}^{2} + {y}^{2}} \left(\frac{{\left({D}_{I}-{D}_{R}\right)}^{2}}{8 \left({x}^{2}+{y}^{2}\right)}-1\right) - \\ \sqrt{{y}^{2} + {\left(CD-x\right)}^{2}} \left(\frac{{\left({D}_{I}-{D}_{N}\right)}^{2}}{8 \left({y}^{2}+{\left(CD-x\right)}^{2}\right)}-1\right) - CD \left(\frac{{\left({D}_{N}-{D}_{R}\right)}^{2}}{8 {CD}^{2}}-1\right)\end{matrix}$ (Equation 33)

Equation 33 can be rearranged to solve for the effective diameter, D_{N}, of the driven pulley 2408. The result of rearranging Equation 33 to solve for D_{N} can be combined with Equation 34, below, to solve for the rotational speed, Sₒᵤₜ, of an output shaft 2420 coupled to the driven pulley 2408.${S}_{out} = \frac{{S}_{in} {D}_{R}}{{D}_{N}}$ (Equation 34)

In Equation 34, Sₒᵤₜ represents the rotational speed of the output shaft 2424 coupled to the driven pulley 2408; Sᵢₙ represents the rotational speed of the input shaft 2422 coupled to the driver pulley 2406, and, as explained earlier, D_{R} is the effective diameter of driver pulley 2406 and D_{N} is the effective diameter of the driven pulley 2408.

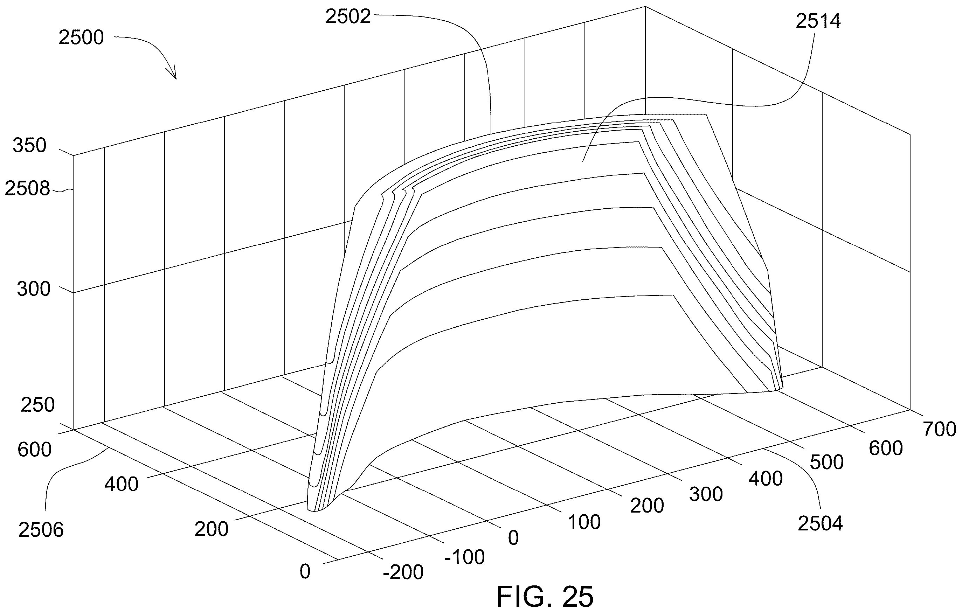

Equations 33 and 34 can be utilized to generate a volume representing the operating space of the pulley system. FIG. 25 is an example three-dimensional graph 2500 that contains volume 2502 representing an entire operating space of an adjustable pulley system in which a position of an idler pulley is adjustable both in a lateral direction and a vertical direction, as shown, for example, in FIG. 20. In the example shown in FIG. 25, the units of the different axes are in millimeters (mm). However, in other implementations, the units of the different axes can be any desired units of length. The x-axis 2504 represents adjustability of the idler pulley in a first direction, e.g., a lateral direction, and the y-axis 2506 represents adjustability of the idler pulley in a second direction, e.g., a vertical direction, that is perpendicular to the first direction. For example, the x and y axes 2504 and 2506 represent adjustability of an axis of rotation of the idler pulley. The z-axis 2508 represents the adjustability of the effective diameter of a driver pulley of the adjustable pulley system.

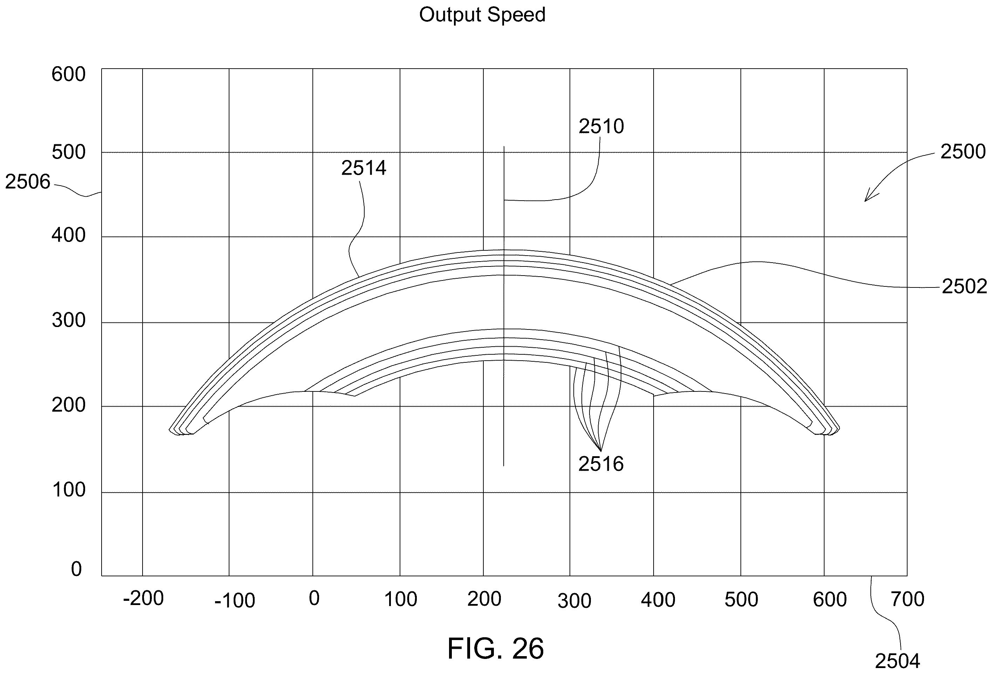

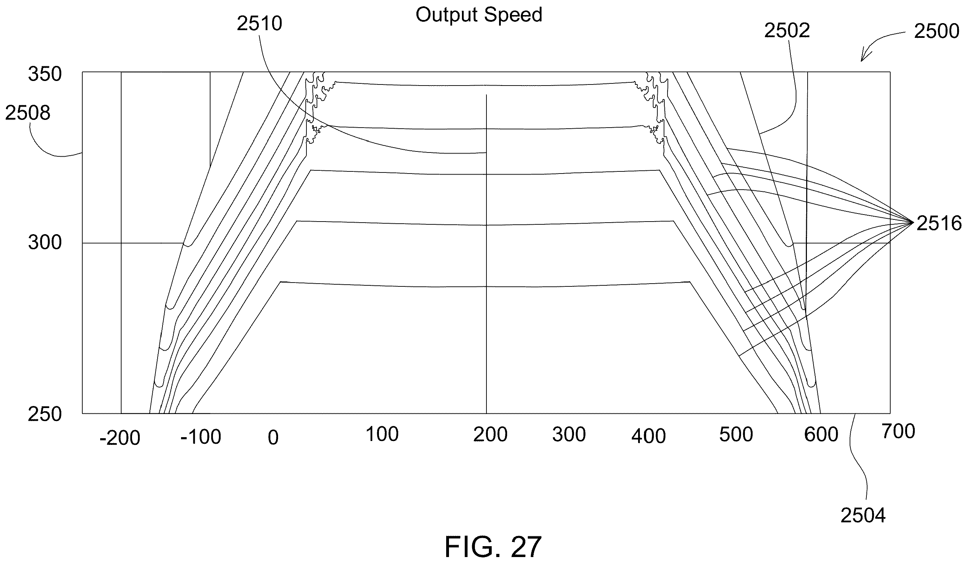

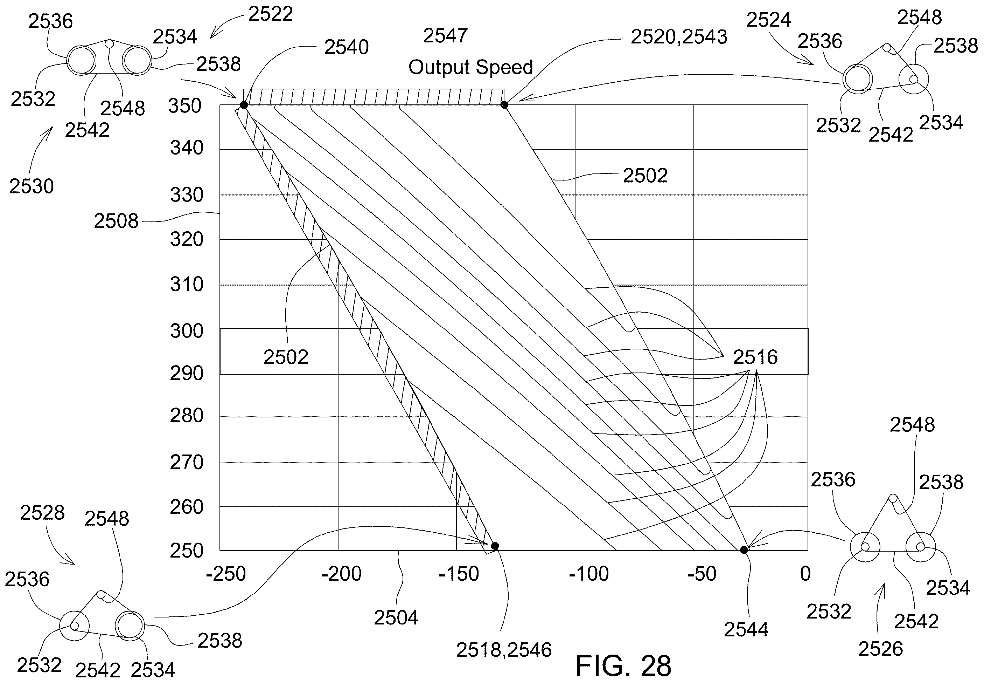

FIG. 26 is a top view of the volume 2502 when viewed in a direction parallel to the z-axis 2508, and FIG. 27 is a front view of the volume 2502 when viewed in a direction parallel to the y-axis 2506. Both FIGs. 26 and 27 show a plane 2510. FIG. 28 is a cross-sectional view of the volume 2502 taken along plane 2510. Referring to FIGs. 25, 26, 27, and 28, the volume 2502 contains a series of surfaces 2516, and these surfaces 2516 are not limited to the exterior surface 2514 of the volume 2502, but, rather, the surfaces 2516 extend through an interior of the volume as shown in FIG. 28. In the cross-sectional view of FIG. 28, the surfaces 2516 are shown as a series of lines 2516. While several lines are illustrated representing some of the surfaces 2516, these lines are merely provided as examples. Rather, the volume 2502 contains an infinite number of surfaces 2516.

The lines 2516 represent a constant rotational speed of the output shaft for the corresponding position of the idler pulley and the effective diameter of the driver pulley. Thus, a plurality of different idler positions and effective diameters of the driver pulley may be used to generate a given rotational speed of the output shaft. However, notwithstanding the plurality of options available to generate a desired rotational speed of the output shaft, the larger the effective diameter of the driver pulley, the driven pulley, or both provides for an improved, e.g., increased, lifespan of the endless belt of the adjustable pulley system.

Referring to FIG. 28, moving from a lower left-hand position 2518 of the cross-section to an upper right-hand position 2520, the rotational speed of the output shaft is increasing. FIG. 28 includes several representations 2522, 2524, 2526, and 2528 of an example adjustable pulley system 2530. The representations 2522, 2524, 2526, and 2528 illustrate, qualitatively, the configuration of the adjustable pulley system 2530 that behaves according to the volume 2502 represented in FIGs. 25-28. Particularly, the representations 2522, 2524, 2526, and 2528 illustrate how the effective diameters 2532 and 2534 of the driver pulley 2536 and driven pulley 2538, respectively, appear relative to each other qualitatively at the at respective locations 2540, 2543, 2544, and 2546 on the cross section of the volume 2502 shown in FIG. 28 in response to movement of the idler pulley 2548 moving in a direction contained in the plane 2510, as shown in FIGs. 26 and 27, and adjustment to the effective diameter of the driver pulley 2536. For example, in some implementations, the direction of movement of idler pulley 2548 along the plane 2510 represents a movement that is perpendicular to a line connecting the axes of rotation of the drive pulley 2536 and the driven pulley 2538. For example, the idler pulley may be limited to linear movement in the direction parallel to the y-axis, as shown, for example, in FIG. 22. The endless belt 2542 is also illustrated in each representation 2522, 2524, 2526, and 2528.

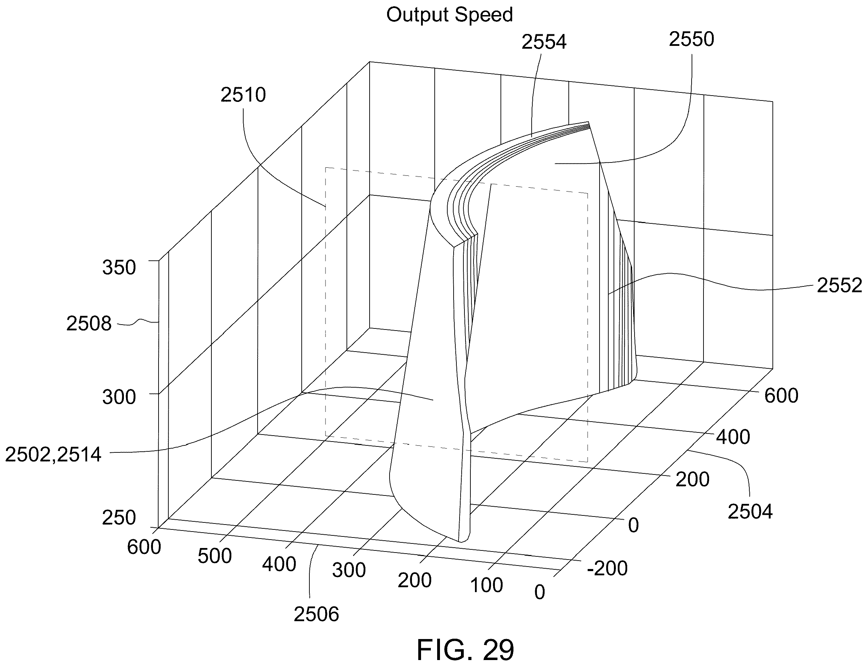

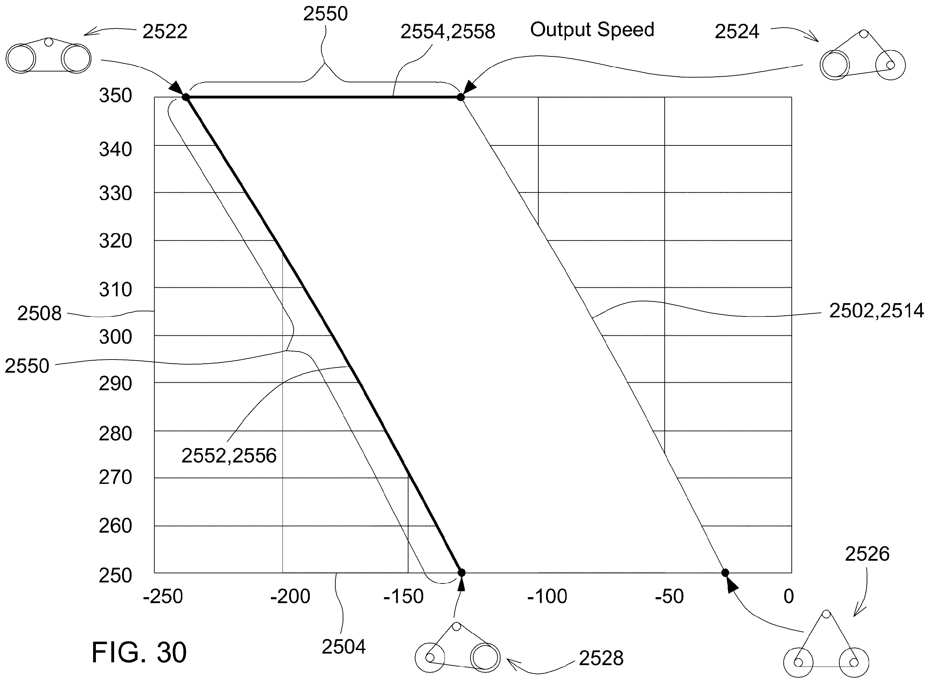

As shown, representation 2522 shows the effective diameter 2532 and effective diameter 2534 are both relatively large and comparably similar in size. Of the four representations illustrated, this type of arrangement provides for the best belt life. Representations 2524 and 2528 are similar in that one of the effective diameters of the pulley system 2530 is enlarged relative to the other effective diameter. In representation 2528, the effective diameter 2534 of the driven pulley 2538 is larger than the effective diameter 2532 of the driver pulley 2536. In representation 2524, the effective diameter 2532 of the driver pulley 2536 is larger than the effective diameter 2534 of the driven pulley 2538. The life of the endless belt 2542 is improved compared to that shown in representation 2526 but less than that shown in representations 2522. Turning to representation 2526, both of the effective diameters 2532 and 2534 are relatively small, resulting in a decreased life of the endless belt 2542 compared to the other three representations 2522, 2524, and 2528. Therefore, as shown in FIGs. 29 and discussed in more detail below, it is desirable to have the pulley system 2530 operate along the portion of the exterior surface 2514 of the volume 2502 identified by 2550. This surface portion 2550 of the exterior surface 2514 of the volume 2502 is further described in FIG. 30.

Referring to FIG 29, as indicated earlier, the volume 2502 provides not only the ability to operate an adjustable pulley system, such as adjustable pulley system 2530, at desired rotational speed of an output shaft of the pulley system, but also at a variety of effective diameters of the driver pulley and driven pulley, respectively, such as effective diameters 2532 and 2534. However, it is desirable to not only operate the pulley system to produce a desired rotational speed of the output shaft but also to improve the life of the endless belt of the pulley system, such as endless belt 2542. As shown in FIG. 29, and in light of the discussion provided above, the surface portion 2550 of the exterior surface 2514 of the volume 2502 representing the optimal operating configuration of the pulley system is along the inner surface or convex surface portion 2552 and upper surface portion 2554. These surface portions 2552 and 2554 are also highlighted in the cross-sectional view of the volume 2502 taken along plane 2510, shown in FIGs. 28 and 30. As shown in FIG. 30, these surface portions 2552 and 2554 are shown as bold contours 2556 and 2558, respectively, that extend along the left-hand side contour 2556 of the cross-section and along the upper end contour 2558. The contours 2556 and 2558 represent the largest effective diameters of the driver pulley and driven pulley for a given rotational speed of the output shaft of the pulley system. Speed changes of the output shaft can be optimized, e.g., moving quickly from one location to another (such as via the use of one or more gradient vectors), but continuous operation on portions of the exterior surface of the volume, such as the contours 2556 and 2558, improves the life of the endless belt. Configuring a pulley system to maintain an operating configuration of the pulley system on the surface portion 2552 or surface portion 2554 operates to increase the operational life of the endless belt while providing a desired rotational speed of the output shaft of the pulley system.

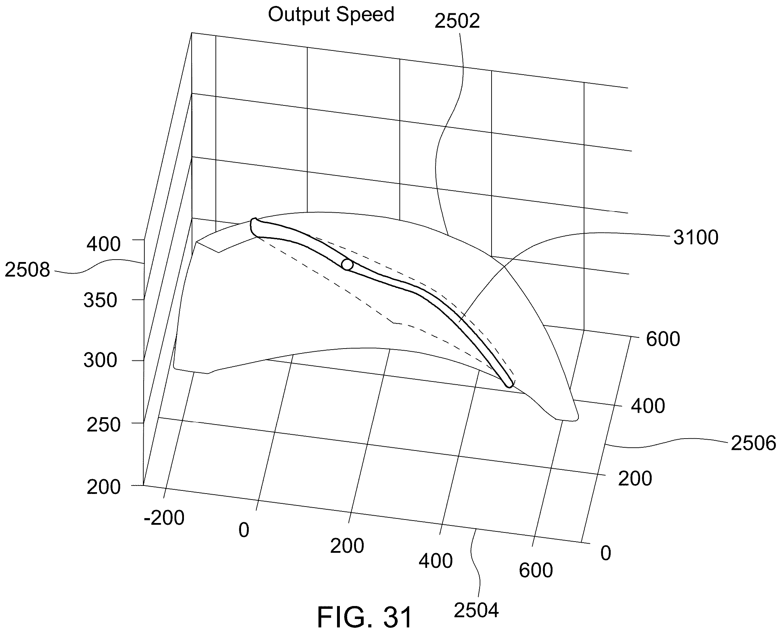

FIG. 31 is a graph of the example volume 2502 within the scope of the present disclosure. A surface 3100 extends along the exterior surface 2514 and through the volume 2502 and represents positions of the idler pulley and associated sizes of the effective diameter of the driver pulley that balance a length of belt that wraps around the sheave portions of the driver pulley and a length of belt that wraps around the sheave portions of the driven pulley. Balancing these amounts of belt wrap of the driver pulley and the driven pulley improves performance of the adjustable pulley system, such as by reducing the risks of the belt slipping relative to the driver pulley or driven pulley.

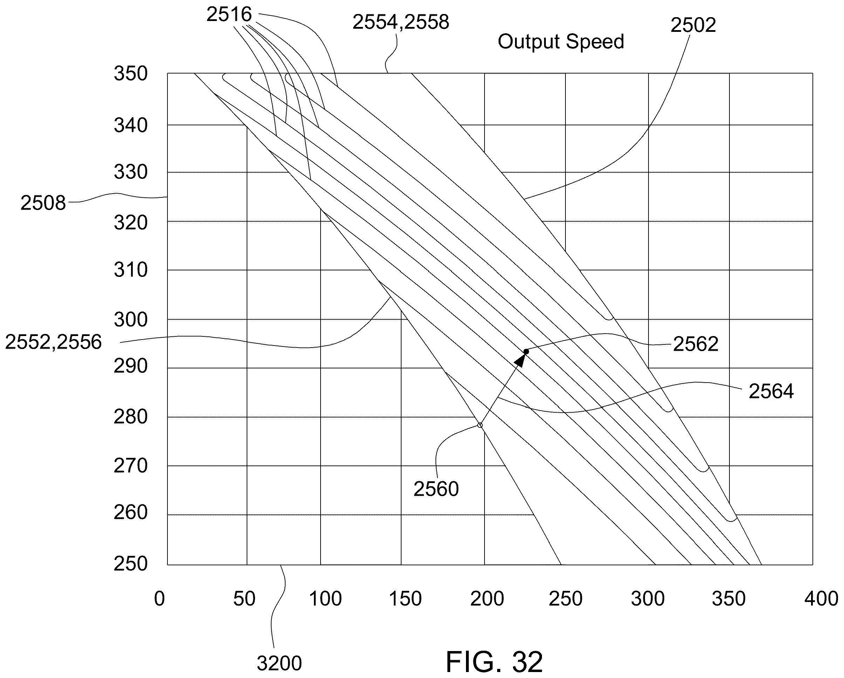

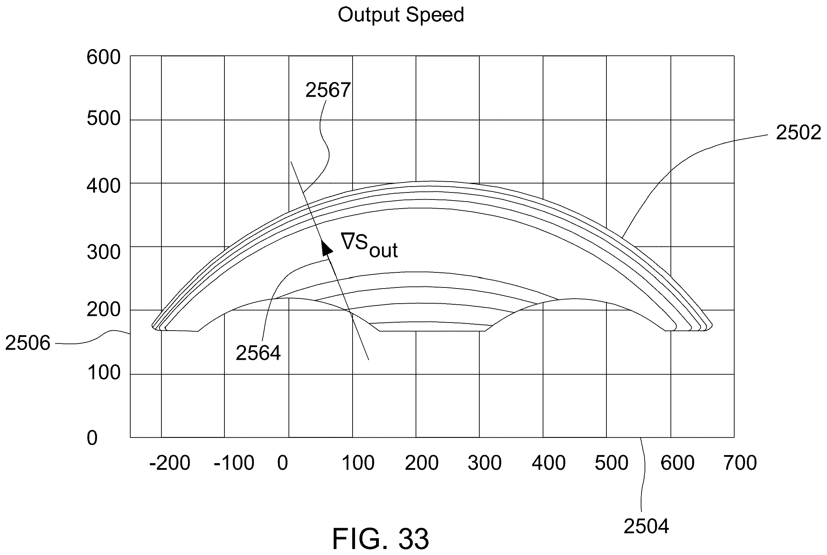

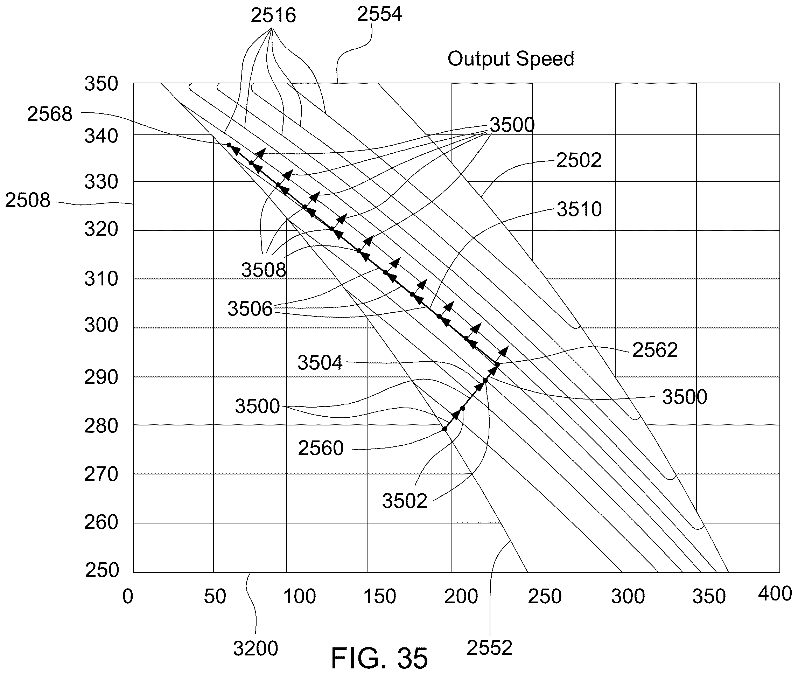

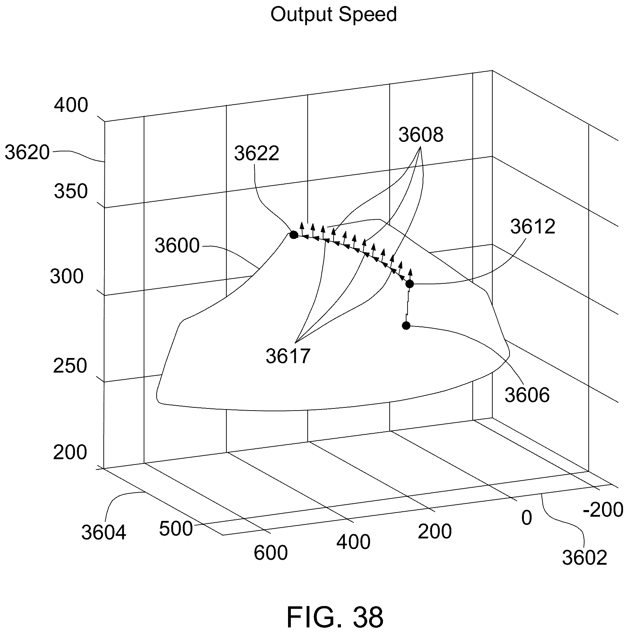

Referring to FIGs. 32 and 33, to achieve quickly a desired rotational speed of the output shaft of an adjustable pulley system with an idler pulley having adjustable position functionality, a gradient vector of a volume representing an operating envelope of an adjustable pulley system, such as volume 2502, can be used. For example, to change rapidly the rotational speed of the output shaft associated with a location along the surface portion 2552, e.g., location 2560, to a rotational speed associated with a second location along the surface portion 2552, a gradient vector 2564 is utilized, as described in more detail below. The gradient vector or set of gradient vectors used to effect a change from an initial rotational speed of the output shaft to a desired rotational speed of the output shaft are oriented perpendicularly to one or more of the constant speed surfaces 2516. In this example, the locations 2560 and 2562 are both located along the cross-section of the volume 2502 defined where the volume 2502 is intersected by a plane 2567, shown in FIG. 33. However, the scope of the present disclosure is not limited to changes provided along a planar cross-section of the volume 2502. Rather, a gradient can be utilized when altering a configuration of the pulley system associated with one location of the volume 2502 to any other location on the volume 2502, as shown, for example, in FIGs. 35 and 38. The details of FIGs. 35 and 38 are described in more detail below.

Although the example gradient 2564 is illustrated as a single gradient vector, e.g., a transition along a single vector, in other implementations, the transition from one location of the volume to a second location of the volume can be accomplished in an iterative or step-wise fashion using a plurality of vectors. The plurality of gradient vectors can be established at a plurality of locations of the volume 2502, such as in a sequence. For example, the plurality of locations can be determined based on a selected step-wise change from one incremental location along a path from the initial location to the final location to another incremental location. The increment at which the gradient is to be evaluated can be selected by a user, defined by an algorithm, defined by a setting, or in any other way. The increments can be a constant displacement or a variable displacement. Thus, in moving from the first location 2560 to the second location 2562, a series of gradient vectors can be evaluated at different increments corresponding to different incremental locations on or within the volume 2502.

Equations 34 and 35 are used to evaluate the gradient at any location of a volume, such as volume 2502, as described herein. Evaluating the gradient identifies the relative rates of change made to the effective diameter of the driver pulley and position of the idler pulley that will achieve the greatest rate of change in the output shaft speed at a given location of a volume representing the operating state of the pulley system, such as volume 2502. For example, the gradient vector may be used to increase the rotational speed of the output shaft rapidly, for example, and, in some instances, in the shortest period of time possible. Alternately a negative gradient vector utilizing the same concepts, e.g., Equations 34 and 35, may be used to decrease the rotational speed of the output shaft rapidly, for example, in some instances, in the shortest period of time possible.$∇ {S}_{out} = \left[\begin{matrix}\frac{\partial {S}_{out}}{\partial x} \\ \frac{\partial {S}_{out}}{\partial y} \\ \frac{\partial {S}_{out}}{\partial DvR}\end{matrix}\right]$ (Equation 35)

Sₒᵤₜ is the rotational speed of the output shaft; DvR is the effective diameter of the driver pulley; x is the abscissa coordinate of a position of the axis of rotation of the idler pulley according to a cartesian coordinate system, and y is the ordinate coordinate of the position of the axis of rotation of the idler pulley according to the cartesian coordinate system. ∇Sₒᵤₜ is represented by the gradient vector 2564 shown in FIG 32. Equation 35 shows the general gradient vector equation for a volume representing an operating space of an adjustable pulley system, such as volume 2502, in terms of effective diameter of the driver pulley and the position of the idler pulley.

To aid in the visualization of a response of Sₒᵤₜ while traveling along ∇Sₒᵤₜ a transformed xy axis can be created, which is the axis 3200 shown in FIG. 32. The transformed xy axis 3200 lies on the cross-section defined by plane 2567.

The vector gradient 2564 (∇Sₒᵤₜ) in the cross-section shown in the graph illustrated in FIG. 32 is generated using Equations 34 and 35. As mentioned earlier, altering the effective diameter of the driver pulley and the position of the idler pulley according to the gradient vector 2564 achieves a desired rotational speed of the output shaft of the pulley assembly in a rapid manner, e.g., in an optimized manner (e.g., in the shortest period of time). In some situations, obtaining the desired rotational speed of the output shaft does not correspond to optimized effective diameters of the driver pulley, the driven pulley, or both. In this context, optimized corresponds to a size of the effective diameter of the driver pulley, driven pulley, or both that provides for enhanced life of the endless belt compared to the sizes of the effective diameters of the driver pulley and driven pulley associated with the location of the volume corresponding to the desired rotational speed of the output shaft that results from following the gradient vector.

In the example of FIG. 32 in which a single gradient vector 2564 is generated, an idler position and an effective diameter of the driver pulley is adjusted according to the gradient vector 2564 at one or more increments. At each occasion, e.g., at each selected change in idler pulley position and driver pulley effective diameter, a rotational speed of the output shaft is determined, e.g., measured. If the measured rotational speed of the output shaft does not correspond to the desired rotational speed, then another incremental move along the gradient vector is made and the rotational speed of the output shaft is determined at the conclusion of that change. Movement along the gradient vector ceases when the measured rotational speed of the output shaft equals or is within a desired range of the desired rotational speed.

In the illustrated example, because the constant speed surfaces 2516 within the volume have curvature, use of a single gradient vector 2564 may prevent changes to the adjustable pulley system along the gradient vector 2564 from obtaining the desired rotational speed of the output shaft. Consequently, in other implementations, as explained below, a plurality of gradient vectors are used to obtain the desired rotational output speed. For example, when moving from a location corresponding to the initial rotational speed of the output shaft, a gradient vector is generated using Equations 34 and 35. Changes to the adjustable pulley system, e.g., idler pulley location and effective diameter of the driver pulley, corresponding to the gradient vector are made iteratively. For example, a first amount of change to the pulley system according to the gradient vector is implemented, and the rotational speed of the output shaft is then determined or detected, e.g., measured. The resulting rotational speed after the incremental change is compared to the desired rotational speed. If the determined rotational speed does not equal or within a selected amount of variance of the desired rotational speed, a new vector gradient is determined, and another increment change along the new gradient is performed. Thereafter, the rotational speed is again determined and compared to the desired rotational speed. This iterative approach continues until the desired output speed is achieved or the determined rotational speed is within a selected variance of the desired output speed.

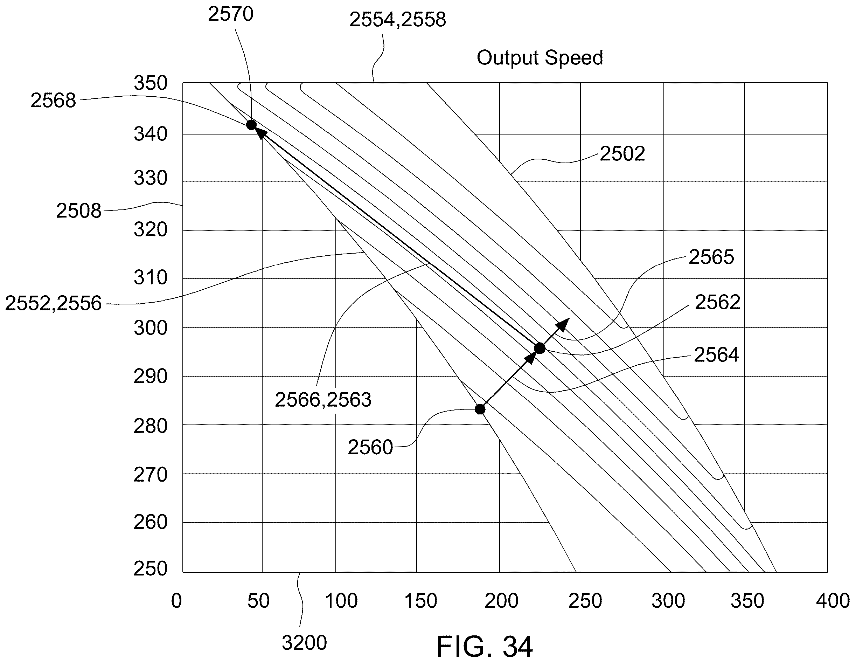

To provide both the desired rotational speed of the output shaft and improved life of the endless belt, a no-change vector is evaluated at the location 2562 of the volume 2502 corresponding to the desired rotational speed of the output shaft. A no-change vector 2563, ${V}^{⇀}$*,* is a vector evaluated using Equations 36 and 37, described in more detail below, that is used to follow a constant speed surface of the volume 2502 that corresponds to the target speed. Thus, the no-change vector is a vector that is orthogonal to the gradient vector and is determined in a plane defined by the gradient vector and target vector, as discussed below. Consequently, the no-change vector 2563 is intended to follow along the constant speed surface corresponding to the desired rotational speed. Hence, the purpose of the no-change vector is to move towards the target location 2568 that lies on the surface portion 2552. Referring to location 2562 in FIG. 34, in evaluating the no-change vector, a new gradient vector 2565 is evaluated at location 2562. Additionally, a target vector 2566, ${T}^{⇀}$, is generated. The target vector 2566 is a vector extending or oriented from the location 2562 to the target location 2568. The gradient vector 2565 and the target vector 2566 define a plane. The no-change vector 2563 extends in a direction towards the target location 2568 while conforming to the constant speed surface associated with the desired rotational speed and on which the target location 2568 is positioned along surface portion 2552. In this case, because a single no-change vector 2563 is used, the target vector 2566 and the no-change vector 2563 are the same.

Similar to the gradient vector, because the constant speed surface on which the target location 2568 lies has curvature, a single no change vector may not be able to obtain the desired rotational speed. Therefore, as discussed below, a plurality of no-change vectors can be used to better conform to the constant speed surface and arrive at the target location 2568, thereby providing the desired rotational speed and an improved belt life.

This operation using the no-change vector 2563 involves movement on or within the volume 2502 in a direction of a no-change vector 2563 that is perpendicular to the gradient vector 2565, as shown in FIG. 34. As explained, in this example of FIG. 34, a single no-change vector 2563 extends from location 2562 to the target location 2568. This target location 2568 represents the same or approximately the same desired rotational speed of the output shaft of the adjustable pulley system, but with larger effective diameters of the driver pulley and the driven pulley. As a result, the life of the endless belt is improved when operated at the configuration of the pulley system associated with target location 2568 than at the location 2562. It is also noted that the target location 2568 lies on the exterior surface 2514 of the volume 2502 that corresponds to the surface portion 2552 that forms part of the surface portion 2550, as shown in FIG. 30. In still other implementations, the target location would be selected to lie both on the surface potion 2550 and the surface 3100, as shown in FIG. 31. As mentioned earlier, operation of the pulley system with a configuration that lies on the surface 3100 reduces or eliminates the risk of belt slippage on the driver pulley, the driven pulley, or both. In this way, not only is the desired rotational speed achieved, but both the effective diameter of the driver pulley, the driven pulley, or both is maximized and the risk of belt slippage is reduced or eliminated.

In some instances, a single gradient vector, such as gradient vector 2564, from the initial location 2560 to the intermediate location, such as location 2562, that seeks to obtain the desired rotational speed of the output shaft may not provide a desirable level of accuracy. Similarly, a single no-change vector, such as no-change vector 2563, extending to a target location, such as target location 2568, that seeks to provide both the desired rotational speed of the output shaft and the largest possible effective diameter of the driver pulley, driven pulley, or both for improved belt life, may not provide a desired level of accuracy. For example, a single gradient vector from a starting location to a location associated with a desired rotational speed may obtain a close approximation of the desired rotational speed, but may involve some amount of variation and, thus, reduced accuracy. To counteract this potential error and provide for more accuracy, a series of gradient vectors may be used in an iterative fashion, as explained earlier. Thus, in some implementations, to alter a rotational speed of the output shaft in the shortest possible amount of time and with potentially improved accuracy, a gradient vector is evaluated sequentially, e.g., in a step-wise manner, at incremental locations with the effective diameter of the driver pulley and position of the idler pulley being altered accordingly. In such an approach, the relative rate of change of the effective diameter of the driver pulley and the position of the idler pulley are also sequentially evaluated as the changes thereto are being performed. The effective diameters of the driver pulley and driven pulley are then optimized such that the effective diameter of each of the driver pulley and driven pulley are as large as possible to promote longevity of the life of the endless belt.

FIG. 35 is a graph of a cross-section of the example volume 2502 corresponding to plane 2567 in which the adjustment of the pulley system when altering a rotational speed of the output shaft associated with the first location 2560 to a second location 2562 associated with a desired rotational speed of the output shaft is performed via a plurality of gradient vectors 3500 arranged in a series. As explained earlier, a first gradient vector 3500 is evaluated at 2560 and adjustment to the idler pulley position, effective diameter of the driver pulley, or both are performed according to this first gradient vector 3500. An amount of adjustment, e.g., how far along the vector in the context of the cross-section of FIG. 35, can be selected, such as by an algorithm, a setting, or a user input. Completion of this first adjustment is indicated by the first intermediate location 3502. Upon completion of this adjustment according to this gradient vector 3500, the rotational speed of the output shaft of the pulley system is determined and compared to the desired rotational speed. If the desired rotational speed has not been achieved, another gradient vector 3500 is determined at the new location 3502, and another adjustment is made according to this new gradient vector according to the selected amount of adjustment, ending at the next intermediate location 3502. Thereafter, the rotational speed is again determined and compared with the desired rotational speed. This process continues until the determined rotational speed corresponds to the desired rotational speed or within a desired variance therefrom. Achievement of the desired rotational speed corresponds to second location 2562. Thus, a series of gradient vectors is evaluated at different intermediate locations 3502 that, together, define a path 3504 between the location 2560 and the location 2562.

It is noted that, while the example shown in FIG. 35 is presented on a single cross-sectional plane, in some cases, the different intermediate location 3502 may lie on different planes as a result of the different gradient vectors. That is, one or more of the gradient vectors incrementally evaluated may exist on a different plane than one or more of the other gradient vectors. However, for the purposes of explanation, a single cross-section is provided to illustrate the concepts within the scope of the present disclosure. For example, the example provided in FIG. 38 attempts to illustrate how many of the different gradient vectors and associated no-change vectors are contained on different planes.

Equations 34 and 35 are utilized to generate the plurality of gradient vectors 3500. This path 3504 represents the combination of adjustments to the pulley system associated with the different gradient vectors 3500 in order to quickly alter the rotational speed of the output shaft from an initial rotational speed associated with initial location 2560 to the desired rotational speed associated with second location 2562. The number of intermediate locations 3502 present along the path 3504 are the result of a selected amount of adjustment along a particular gradient vector 3500 and, thus, represents the end of a particular amount of adjustment of a gradient vector 3500. As mentioned earlier, the extent of an adjustment (e.g., a length along the cross-section of FIG. 35) associated with a gradient vector can be selected in a number of ways, including, for example, the different number of ways described above, e.g., selected by a user, defined by an algorithm, defined by a setting, or in any other way. In the illustrated example, there are two different intermediate locations 3502 located between locations 2560 and 2562, corresponding to three different gradient vectors 3500 defining the path 3504. Utilizing a plurality of gradient vectors 3500 provides for improved accuracy at achieving the desired rotational speed of the output shaft. For example, in this example, the plurality of constant speed surfaces 2516 (some of which are illustrated in the cross section of FIG. 35) define a curvature, and, by utilizing a series of gradient vectors from one location to another allows for improved following of the curved path between two points of the volume (e.g., the curved path that move perpendicularly to the different constant speed surfaces), thereby ending at a location that provides for improved accuracy of attaining the desired rotational speed of the output shaft.

With the desired rotational speed being attained at location 2562, a target location 2568 is achieved also using a plurality of no-change vectors 3506, as opposed to the single target vector 2566 shown in the prior example of FIG. 34. Utilizing the plurality of no-change vectors 3506 from location 2562 to target location 2568, improved accuracy is obtained. That is, the desired rotational speed is maintained while increasing the effective diameter of the driver pulley, the driven pulley, or both. Again, as noted earlier, the target location 2568 is provided on the surface portion 2552, which corresponds to the portion of the volume 2502 that provides for increased operational life of the endless belt of the adjustable pulley system.

As shown in FIG. 35, to provide adjustment of the pulley system from the second location 2562 to the target location 2568, as mentioned earlier, a gradient vector 3500 at second location 2562 is determined using Equations 34 and 35. A target vector, ${T}^{⇀}$, is also determined at second location 2562. The target vector is a vector extending directly from the second location 2562 to the target location 2568. These two vectors define a plane, and a no-change vector contained within this plane is determined using this plane. That is, the no-change vector associated with second location 2562 is located on this plane. As also explained earlier, the no-change vector is one that seeks to avoid changes in rotational speed while conforming to the constant speed surface associated with the desired rotational speed. Generally, this constant speed surface has curvature. Therefore, use of a plurality of no-change vectors along this constant speed surface better approximates the shape of the constant speed surface.

Similar to the amount of adjustment associated with using a plurality of gradient vectors, an amount or increment of adjustment along this no-change vector, which defines one of the intermediate locations 3508, can be selected by a user, defined by an algorithm, defined by a setting, or in any other way. The idler pulley position and effective diameter of the driver pulley are adjusted according to the no-change vector and the selected increment. At the incremental location 3508, the associated idler position, effective diameter of the driver pulley, or both are compared to the counterpart values of the idler position, effective diameter of the driver pulley, or both associated with the target location 2568. If the respective values do not correspond, then a determination is made that the target location 2568 has not been reached. As a result, a new gradient vector 3500 and target vector from the intermediate location 3508 to the target location 2568 is determined defining another plane. A no-change vector 3506 on the new plane is then determined. A new adjustment along the new no-change vector 3506 for the selected increment of the pulley assembly is made, and, thereafter, another comparison of the idler pulley position, effective diameter of the driver pulley, or both associated with the new intermediate location 3508 is again compared with that associated with the target location. This process continues until the idler pulley position, the effective diameter of the driver pulley, or both matches that of the target location or is within a selected variance. This satisfied comparison indicates that the target location has been reached. Adjusting the pulley system in this way maintains rotation of the output shaft of the pulley system at the desired rotational speed while increasing an effective diameter of the driver pulley, driven pulley, or both to enhance the life of the endless belt.

The plurality of intermediate locations 3508 define a path 3510 through the volume 2502 between the second location 2562 and the target location 2568. As mentioned earlier, although the iterative process is illustrated on a single plane, the series of planes defined by the gradient vector and target vector determined at each intermediate location may define different planes.

Adjusting the pulley system in this way provides for better conformance to a constant speed curve corresponding to the desired rotational speed of the output shaft so that the target speed produces better accuracy to the desired rotational speed with the largest possible effective diameter of the driver pulley, the driven pulley, or both, thereby optimizing operation of the pulley system and improving the operational life of the endless belt. The position of the idler pulley, e.g., the x and y coordinates, and the effective diameter of the driver pulley are altered utilizing these gradient vectors 3500, e.g., when moving from the initial location 2560 to the second location 2562, and the no-change vectors 3506, e.g., when moving from the second location 2562 to the target location 2568

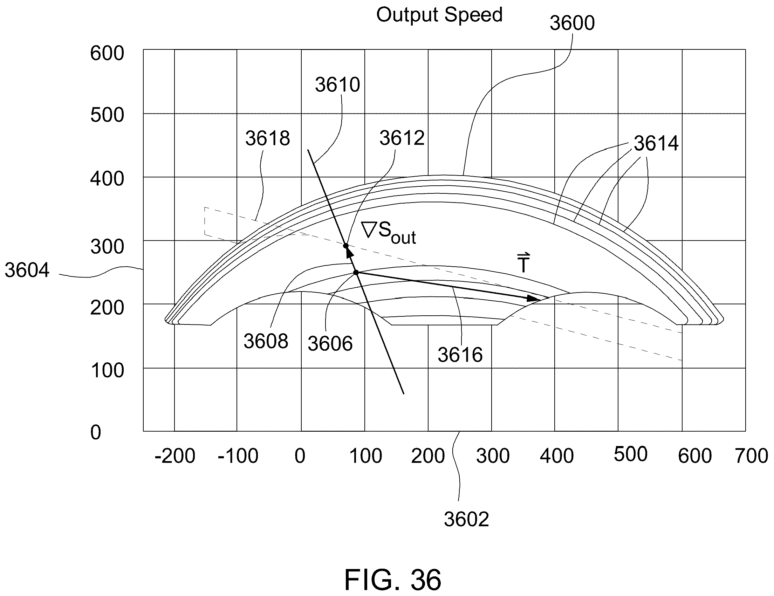

In the examples of FIGs. 32 through 35, the adjustments to the pulley system are described in the context of a single plane of the volume 2502, e.g., plane 2567. However, as explained, the scope of the disclosure is not so limited. As shown in FIGs. 36 through 38, a starting location and an ending location can be provided at any position of the volume representing the complete operating space of an adjustable pulley system.

FIG. 36 is a top view of an example volume 3600 of a complete operating space of an example adjustable pulley system, such as pulley system 2000. An axis 3602 represents the x coordinate of the position of an axis of rotation of an idler pulley of the adjustable pulley system, and an axis 3604 represents the y coordinate of the position of the axis of rotation of the idler pulley. The indicated units are in millimeters. However, any units of measure, e.g., units of distance, can be used.

An initial configuration of the pulley system corresponds to location 3606 within the volume 3600. A gradient vector 3608, ∇Sₒᵤₜ, is evaluated at the location 3606 using Equations 34 and 35. The gradient vector 3608 is located on a plane 3610. In this example, the plane 3610 is defined as being perpendicular to the plane defined by the axes 3602 and 3604 and containing the gradient vector 3608. In a manner similar to that described above, one or more gradient vectors, such as gradient vector 3608, are used to quickly advance the rotational speed of the output shaft of the pulley system, using an iterative process of making incremental adjustment based on the gradient vectors at a defined increments along the gradient vectors until the desired rotational speed is obtained. Although a single gradient vector 3608 is illustrated, as explained, a plurality of gradient vectors can be used to provide enhanced accuracy. Again, this gradient vector 3608 is in a direction perpendicular to the constant speed surface at the location at which the gradient vector 3608 is evaluated (represented as lines 3614 in FIG. 36), similar to constant speed lines 2516, defined within the volume 3600 in order for the pulley system to achieve the desired rotational speed of the output shaft quickly.

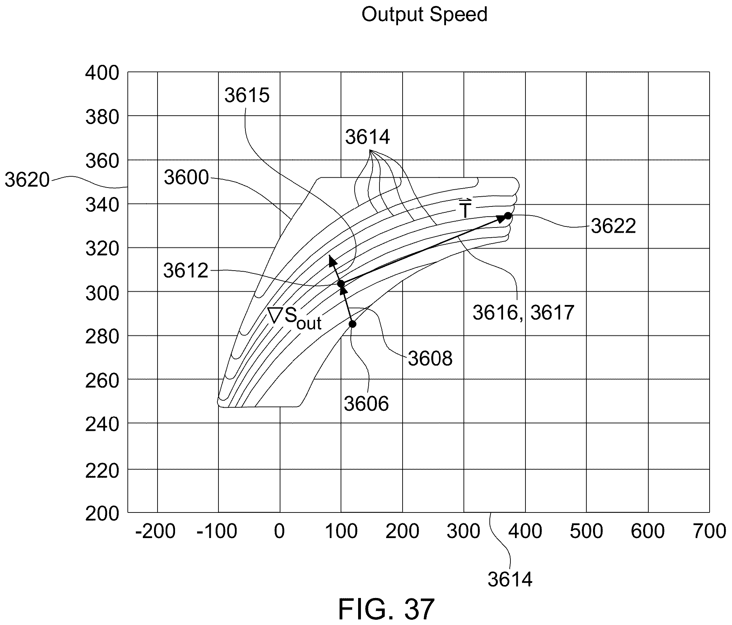

Referring to FIGs. 36 and 37, as explained earlier, to achieve the largest effective diameters of the driver pulley, driven pulley, or both, at the location 3612, a gradient vector 3615 and a target vector 3616 (a vector extending from the location 3612 to the target location 3622) are generated, and those vectors are used to define a plane. An associated no-change vector 3617 is generated on that plane. In this example a single no-change vector 3617 is used to move from the location 3612 to the target location 3622. As a result the target vector 3616 and the no-change vector 3617 overlay one another. The no-change vector 3617 is used to obtain the largest effective diameter of the driver pulley, driven pulley, or both to enhance the lifespan of the endless belt.$∇ {S}_{out} \times {T}^{⇀} = {N}^{⇀}$ (Equation 36)

∇*Sₒᵤₜ* is a gradient vector; *T* is the target location vector; and N is a vector normal to the plane containing *∇Sₒᵤₜ* and ${T}^{⇀}$*.*${N}^{⇀} \times ∇ {S}_{out} = {V}^{⇀}$ (Equation 37) ${N}^{⇀}$ is the normal vector from Equation 35; *∇Sₒᵤₜ* is the gradient vector; and ${V}^{⇀}$ is the no-change vector.

FIG. 37 shows a cross-section of the volume 3600 intersected by the plane 3618 when viewed along the axis 3604 shown in FIG. 36. Some of the constant speed surfaces 3614, represented as a plurality of curves, are also shown. An axis 3620 represents the effective diameter of the driver pulley of the adjustable pulley system. The units of axis 3620 are in millimeters. In other implementations, other units of measure can be used.

The no-change vector 3617 is directed to location 3622 and attempts to maintain the desired rotational speed of the output shaft while increasing the effective diameter of the driver pulley, the driven pulley, or both to the largest possible provided by the volume 3600. In this example, a single gradient vector 3608 is used to obtain the desired rotational speed, and a single no-change vector 3617 is used to obtain the largest effective diameters of the driver pulley, driven pulley, or both while maintaining the desired rotational speed represented by the final location 3622. However, a plurality of gradient vectors 3608 and a plurality of no-change vectors 3617 may be used, such as in the manner described above in order to improve the accuracy of the final location and, hence, provide for improved operation of the pulley system.

FIG. 38 illustrates an example in which a plurality of gradient vectors 3608 and no-change vectors 3617 are used to adjust an adjustable pulley system from a location of the volume 3600. Moving from second location 3612 to the target location 3622, an iterative approach, similar to that described above, can be used in which a gradient vector 3608 is generated, a target vector, as described above, is generated, and, using the gradient vector 3608 and associated target vector to define a plane, a no-change vector 3617 is generated at location 3612 and each incremental location between locations 3612 and 3622. The idler pulley position, the effective diameter of the driver pulley, or both is adjusted using the no-change vector 3617 for a selected incremental distance through the volume 3600. A comparison similar to that described above to determine if the idler pulley position, the effective diameter of the driver pulley, or both correspond to associated values of those dimensions at the target location 3622. If not, then this process is repeated until the values do correspond or are within a selected variance thereof. FIG. 38 illustrates, for example, how the planes defined by the gradient vector 3608 and the target vector at each incremental location are not the same. That is, one or more of these planes varies from one or more of the other planes.

As previously explained, use of a plurality of gradient vectors and target vectors improves accuracy in both locating the desired rotational speed while also obtaining the largest effective diameters of the driver pulley and driven pulley. As seen in FIG. 38, a purpose of using a plurality of no-change vectors 3617 and associated gradient vectors 3608 when moving from location 3612 to final location 3622 is to follow closely a surface defining the desired output speed using a plurality of linear approximations that seek to conform to the constant surface corresponding to the desired rotational speed. As also mentioned earlier, the greater number of intermediate locations used between the location 3612 and the location 3622 provides for increased fidelity to the constant speed surface and, consequently, greater accuracy in achieving the desired rotational speed of the output shaft as well as the largest associated effective diameters of the driver pulley and the driven pully.

Although the various example pulley systems described herein have been ones in which the idler pulley is engaged with an inner surface of the endless belt, such as pulley system 2000, the concepts described herein are equally applicable to pulley systems having an idler pulley that is engaged with an outer surface of the endless belt, such as pulley system 2300. A volume representing an operating space of the pulley system may be generated using an equation representing the belt length in a manner similar to that described above, and the equation representing the belt length can be used to determine the associated gradient vectors. No-change vectors for such pulley systems can be generated using the Equations 36 and 37 and associated techniques described earlier.

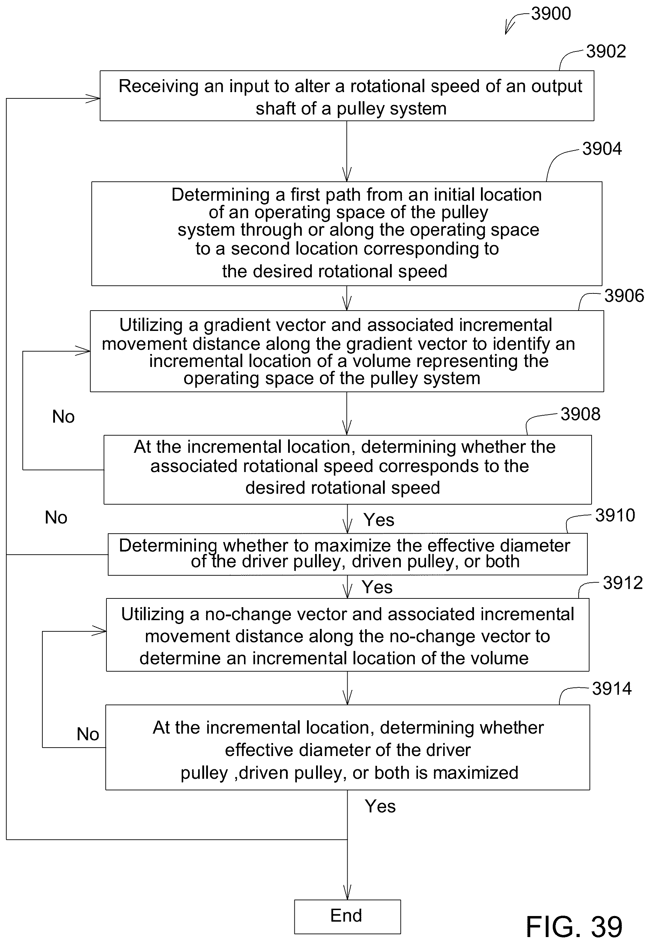

FIG. 39 is a flowchart of an example method 3900 of altering a configuration of an adjustable pulley system that includes a selectively adjustable effective diameter of a driver pulley and a selectively adjustable position of an idler pulley of the pulley system, where the effective diameter of the driver pulley is controllable based, for example, an output of an algorithm, an input from a user, a setting, or in another way. The pulley system also includes an idler pulley whose position, e.g., a position of an axis of rotation of the idler pulley, is selectively adjustable, such as based on an output of an algorithm, user input, a setting, or in another way.

At 3902, an input is received to alter a rotational speed of an output shaft of the pulley system. The pulley system may be similar to pulley system 2000 described above. For example, in some implementations, the input is a desired rotational speed of an output shaft of the pulley system, and the desired rotational speed may be determined, selected, or otherwise identified. At 3904, using an operating space of the pulley system, which may be in the form of a volume, for example, the volume 2502 discussed earlier, a first path through or along the operating space from an initial location of the operating space corresponding to a current operating configuration, representing an initial rotational speed, to a second location of the operating space corresponding to a rotational speed of the output shaft that corresponds to the desired rotational speed is generated using the one or more gradient vectors. For example, a plurality of gradient vectors are generated iteratively at different intermediate locations between the initial location and the second location as described above until a rotational speed of the output shaft corresponds to the desired rotational speed or is within a selected variation from the desired rotational speed. The vector gradients provide for quickly altering the rotational speed from the initial rotational speed to the desired rotational speed.

As explained earlier, in some implementations, a gradient vector and selected incremental distance along the gradient vector is used to traverse a volume representing an operating state of the pulley system, as indicated at 3906. At that intermediate location, a comparison is made to determine whether the rotational speed of the output shaft corresponds to the desired rotational speed, as indicated at 3908. If not, the method 3900 returns to 3906 to identify a new intermediate location. If the rotational speed does correspond to the desired rotational speed, the method 3900 moves to 3910.

At 3910, a determination is made as to whether the effective diameter of the driver pulley, driven pulley, or both is to be optimized or maximized consistent with the desired rotational speed. If maximized effective diameter or diameters are desired, the method 3900 moves to 3910. If not, the method 3900 ends or returns to 3902 to await a new input for a new desired rotational speed.

At 3912, an incremental location is determined utilizing a no-change vector that is generated as described herein and an incremental movement distance along the no-change vector. As explained, a gradient vector and target vector is generated at a present location and, using a plane generated using these vectors, a no-change vector is generated on the plane. Using the no-change vector and an incremental distance, a new location is identified. The pulley system is adjusted using no-change vector and incremental distance along the no-change vector. At 3914, a determination is made as to whether the effective diameter of the driver pulley, driven pulley, or both is maximized. As explained earlier, a comparison can be made between the idler pulley location, the effective diameter of the driver pulley, or both at the incremental location and the respective values associated with the target location. If the effective diameter or diameters is maximized, then the pulley system is optimized to provide the desired output speed with an effective diameter of the drive pulley, driven pulley, or both that is maximized within constraints of the pulley system to enhance the lifespan of the endless belt. Method 3900 can end or return to 3902 to receive a new input. If not, the method 3900 returns to 3912 to identify a new intermediate location, where the method 3900 continues from there.

In some implementations, the order of the features of example method 3900 may be altered. For example, an order of one or more of the features may be rearranged and still be within the scope of the present disclosure. Further, additional, fewer, or different features may be included while remaining within the scope of the present disclosure. For example, the method 3900 may be altered so that adjustment of pulley system to achieve a configuration corresponding to the desired operating speed, such as a location 2562 in FIG. 35 where one or more gradient vectors are utilized to quickly achieve a desired rotational speed, also lies on a region of the pulley system operating space, such as volume 2502, provides for reduced risk of slipping. Such a region may correspond, for example, to a region similar to surface 3100 shown in FIG. 31. This region provides for improved belt wrapping along the driver pulley, the driven pulley, or both, thereby reducing the risk of belt slipping along the driver pulley, the driven pulley, or both. Such an approach may also be used at the target location where not only is the desired rotational speed achieved but also belt life is improved, such as, for example, along a region of the operating space of the pulley system corresponding to the surface portion 2550 shown in FIG. 29.

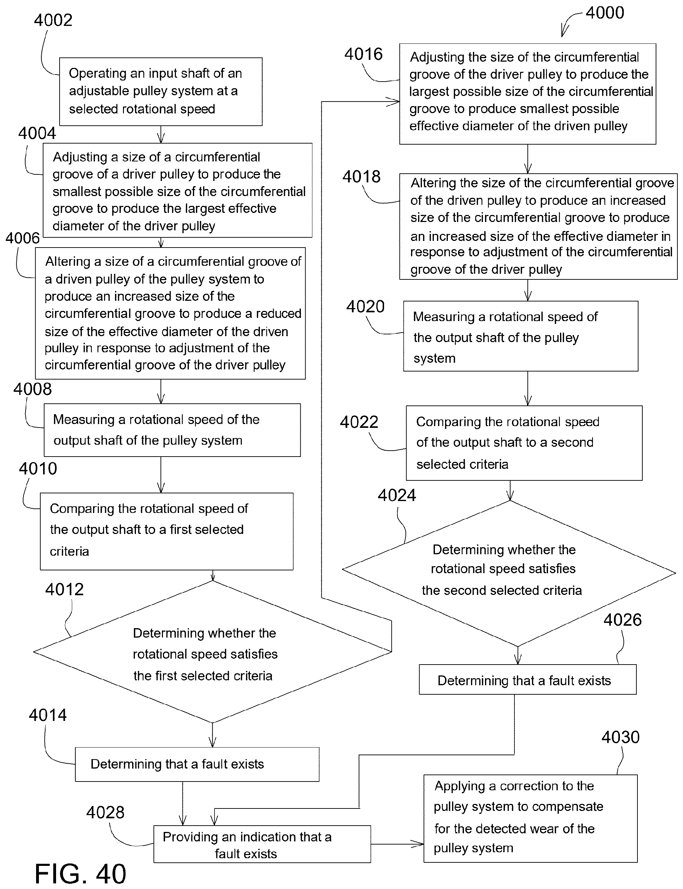

FIG. 40 is a flowchart of an example method 4000 for controlling operation of a pulley system, such as the pulley system 2000, 2100, 2200, or 2300, to determine whether a fault exists with the pulley system. Referring to FIG. 40, at 4002, an input shaft of the pulley system, such as input shaft 2008, is operated at a selected rotational speed. At 4004, a circumferential groove of a driver pulley of the pulley system, such as circumferential groove 210, is adjusted to the smallest possible size for the driver pulley. Adjusting the groove in this way produces the largest effective diameter of the driver pulley and, consequently, the largest diameter of an endless belt, e.g., endless belt 2018, riding along the circumferential groove that the driver pulley is capable of producing. For example, in some instances, an actuator assembly, such as actuator assembly 2004, is operated to produce the smallest possible size of a circumferential groove of the driver pulley of the pulley system. For example, one or both of the sheave portions, such as sheave portions 202 and 204 shown in FIG. 2, are moved closer to each other to reduce the size of the circumferential groove to the smallest size possible. This size of the circumferential groove produces the largest possible diameter in the endless belt as the endless belt rides along the driver pulley. At 4006, in response to changing the size of the circumferential groove of the driver pulley, a size of the circumferential groove of a driven pulley, e.g., driven pulley 2012, changes in response, since the endless belt has a constant length; a center distance between the driver pulley and the driven pulley is constant; and a position of an idler pulley, such as idler pulley 2022, of the pulley system remains unchanged. For example, in response to adjusting the driver pulley in this way, the sheave portions of the driven pulley are separated, increasing the size of the circumferential groove of the driven pulley, which decreases the size of the effective diameter of the driven pulley. As a result, the size of the diameter of the endless belt riding along the driven pulley decreases. Consequently, the adjustment to the size of the circumferential groove of the driver pulley alters a rotational speed of an output shaft, e.g., output shaft 2014.

In the example described, the position of the idler pulley is unchanged during the activities described in 4004 and 4006. For example, the idler pulley may be positioned at a location that facilitates the changes to the driver pulley and the driven pulley while maintaining the endless belt with adequate tension to maintain engagement of the endless belt with the driver pulley and driven pulley. Thus, in some implementations, a position of the idler pulley during the actions of 4004 and 4006 is unchanged. For example, if viewed in the context of FIG. 28, this movement would be a vertical path through volume 2502 with the path terminating, for example, at the upper right-hand location 2543.

In other implementations, a configuration of the pulley system associated with a location of the volume, such as volume 2502, at which the method 4000 begins may involve both alteration to the effective diameter of the driver pulley and a location of the idler pulley in order to maintain the endless belt in engagement with the driver pulley and driven pulley. In still other implementations, 4004, 4006, or both may involve alteration of the position of the idler pulley alone, such as moving in a horizontal direction from location 2540 to location 2543.

At 4008, the rotational speed of the output shaft is measured. At 4010, the measured rotational speed of the output shaft is compared to a first selected criterion or a set of criteria (collectively referred to as "first selected criterion"). For example, in some implementations, the first selected criterion is a rotational speed or range of rotational speeds of the output shaft that would be produced by the smallest circumferential groove size or largest effective diameter of the driver pulley where the driver pulley, the driven pulley, and the endless belt are in an unworn condition. Thus, an example criterion is an expected rotational speed that should be achieved by the output shaft in response to the adjustment made to the driver pulley. At 4012, a determination is made as to whether the speed of the output shaft satisfies the first selected criterion. If the comparison of 4012 indicates that the measured rotational speed does not satisfy the first selected criterion, then a fault is determined at 4014. Thus, if the driver pulley, as adjusted, is unable to achieve the expected rotational speed of the output shaft, then a fault is indicated, and an undesirable, e.g., excessive, amount of wear may be indicated. In some instances, the cause of the determined fault may be wear of one or more of the driver pulley, the driven pulley, or the endless belt of the pulley system.

Example types of wear may include belt stretch, thereby altering a length of the endless belt, and pulley wear, e.g., an amount by which that tapered surfaces, e.g., tapered surfaces 206, 208, wear, can affect the ability of a pulley system to provide a desired speed ratio. Wear of the pulley system can affect the ability of the pulley system to properly control rotation of the output shaft. Consequently, the present disclosure provides for determining whether system wear has occurred.

At 4016, the driver pulley is adjusted to produce the largest circumferential groove, thereby producing the smallest effective diameter of the driver pulley. This results in the smallest diameter of an endless belt riding along the driver pulley that the driver pulley is capable of producing. For example, the sheave portions of the driver pulley are separated by a maximum amount to produce the largest circumferential groove size possible. As a result, at 4018, the driven pulley responds to the endless belt, which results in advancing of the sheave portions of the driven pulley towards each other, decreasing the circumferential groove size of the driven pulley and increasing the effective diameter of the driven pulley and a size of the diameter of the endless belt riding along the driven pulley.

Similar to 4004 and 4006, during 4016 and 4018, the position of the idler pulley remains unchanged. For example, the idler pulley may be positioned at a location that facilitates the changes to the driver pulley and the driven pulley while maintaining the endless belt with adequate tension to maintained engagement of the endless belt with the driver pulley and driven pulley. Thus, in some implementations, a position of the idler pulley during the actions of 4016 and 4018 is unchanged. For example, if viewed in the context of FIG. 28, this movement would be a vertical path through volume 2502 with the path terminating, for example, at the lower left-hand position 2546.

In other implementations, a configuration of the pulley system associated with a location of the volume, such as volume 2502, at which the method 4000 begins may involve both alteration to the effective diameter of the driver pulley and a location of the idler pulley in order to maintain the endless belt in engagement with the driver pulley and driven pulley. In still other implementations, 4016, 4018, or both may involve alteration of the position of the idler pulley alone, such as moving in a horizontal direction from location 2544 to location 2546.

At 4020, the rotational speed of the output shaft is measured. At 4022, the measured rotational speed of the output shaft is compared to a second criterion or set of criteria (collectively referred to as "second selected criterion"). For example, in some implementations, the second selected criterion is a rotational speed or range of rotational speeds of the output shaft that would be produced by the largest groove size of the driver pulley where the driver pulley, the driven pulley, and endless belt are in an unworn condition. Thus, an example criterion is an expected rotational speed that should be achieved by the output shaft in response to the adjustment made to the driver pulley. At 4024, a determination is made as to whether the speed of the output shaft satisfies the second selected criterion. If the comparison indicates that the measured rotational speed of the output shaft does not satisfy the second selected criterion, then a fault is determined at 4026. Thus, if the driver pulley, as adjusted, is unable to achieve the expected rotational speed of the output shaft, then a fault is indicated, and an undesirable, e.g., excessive, amount of wear may be indicated. In some instances, wear of one or both of the driver pulley or driven pulley or the endless belt of the pulley system may be the cause of the determined fault. If a fault is not determined at 4024, then the method 4000 moves to 4025 where the method 4000 ends.

At 4028, a determined fault is indicated, such as in the form of an alarm. The alarm may be provided to a user, such as an operator or technician, dealership, company, or other entity. Example alarms may include visual alarms (e.g., illumination of a light or display of a message on a screen), aural alarms (e.g., activation of a horn or production of some other audible sound), haptic alarms (e.g., production of a vibration), or a combination of these.

In some implementations, in addition to or alternatively, at 4030, a correction is applied to the pulley system in order to compensate for the wear of the pulley system. For example, in order to enable the pulley system to be able to produce a desired output shaft speed, a position of the idler pulley, e.g., a position of axis of rotation of the idler pulley relative to the input shaft or the output shaft of the pulley system is altered. In some implementations, the axis of rotation of the idler pulley is altered relative to the driver pulley (or axis of rotation thereof) or the driven pulley (or axis of rotation thereof) to accommodate for wear or an otherwise determined alteration to the performance of the pulley system indicated by one or both of the determinations at 4012 and 4024. In this way, the ability of the pulley system to produce a desired rotational speed of the output shaft is achieved. Further, in this way, maintenance of the pulley system is reduced, reducing operating costs of the machine that includes the pulley system, reducing machine downtime, and reducing labor costs associated with performing maintenance.

Although method 4000 includes both (1) increasing the effective diameter of the driver to a maximum size supported by the driver pulley in order to determine whether the resulting rotational speed of the output shaft satisfies at least one first criterion and (2) reducing the effective diameter of the driver pulley to a minimum size supported by the driver pulley in order to determine whether rotational speed of the output shaft satisfies at least one second criterion, the method may include a single one of these aspects in order to determine that a fault exists and apply a correction based on a single one of these aspects. Thus, in some implementations, a correction may be premised on both of these aspects, while, in other implementations, a correction may be premised on a single one of these aspects and still be operable to make an adjustment to the pulley system to improve the operation thereof and, hence, reduce maintenance costs.

FIG. 41 is a block diagram of an example computer system 4100 used to provide computational functionalities associated with described algorithms, methods, functions, processes, flows, and procedures described in the present disclosure, according to some implementations of the present disclosure. The illustrated computer 4102 is intended to encompass any computing device such as a server, a desktop computer, a controller (such as a microcontroller), a laptop/notebook computer, a wireless data port, a smart phone, a personal data assistant (PDA), a tablet computing device, or one or more processors within these devices, including physical instances, virtual instances, or both. The computer 4102 can include input devices such as keypads, keyboards, and touch screens that can accept user information. Also, the computer 4102 can include output devices that can convey information associated with the operation of the computer 4102. The information can include digital data, visual data, audio information, or a combination of information. The information can be presented in a graphical user interface (UI) (or GUI).

The computer 4102 can serve in a role as a client, a network component, a server, a database, a persistency, or components of a computer system for performing the subject matter described in the present disclosure. The illustrated computer 4102 is communicably coupled with a network 4130. In some implementations, one or more components of the computer 4102 can be configured to operate within different environments, including cloud-computing-based environments, local environments, global environments, and combinations of environments.

At a high level, the computer 4102 is an electronic computing device operable to receive, transmit, process, store, and manage data and information associated with the described subject matter. According to some implementations, the computer 4102 can also include, or be communicably coupled with, an application server, an email server, a web server, a caching server, a streaming data server, or a combination of servers.

The computer 4102 can receive requests over network 4130 from a client application (for example, executing on another computer 4102). The computer 4102 can respond to the received requests by processing the received requests using software applications. Requests can also be sent to the computer 4102 from internal users (for example, from a command console), external (or third) parties, automated applications, entities, individuals, systems, and computers.

Each of the components of the computer 4102 can communicate using a system bus 4103. In some implementations, any or all of the components of the computer 4102, including hardware or software components, can interface with each other or the interface 4104 (or a combination of both), over the system bus 4103. Interfaces can use an application programming interface (API) 4112, a service layer 4113, or a combination of the API 4112 and service layer 4113. The API 4112 can include specifications for routines, data structures, and object classes. The API 4112 can be either computer-language independent or dependent. The API 4112 can refer to a complete interface, a single function, or a set of APIs.

The service layer 4113 can provide software services to the computer 4102 and other components (whether illustrated or not) that are communicably coupled to the computer 4102. The functionality of the computer 4102 can be accessible for all service consumers using this service layer. Software services, such as those provided by the service layer 4113, can provide reusable, defined functionalities through a defined interface. For example, the interface can be software written in JAVA, C++, or a language providing data in extensible markup language (XML) format. While illustrated as an integrated component of the computer 4102, in alternative implementations, the API 4112 or the service layer 4113 can be stand-alone components in relation to other components of the computer 4102 and other components communicably coupled to the computer 4102. Moreover, any or all parts of the API 4112 or the service layer 4113 can be implemented as child or sub-modules of another software module, enterprise application, or hardware module without departing from the scope of the present disclosure.

The computer 4102 includes an interface 4104. Although illustrated as a single interface 4104 in FIG. 41, two or more interfaces 4104 can be used according to particular needs, desires, or particular implementations of the computer 4102 and the described functionality. The interface 4104 can be used by the computer 4102 for communicating with other systems that are connected to the network 4130 (whether illustrated or not) in a distributed environment. Generally, the interface 4104 can include, or be implemented using, logic encoded in software or hardware (or a combination of software and hardware) operable to communicate with the network 4130. More specifically, the interface 4104 can include software supporting one or more communication protocols associated with communications. As such, the network 4130 or the interface's hardware can be operable to communicate physical signals within and outside of the illustrated computer 4102.

The computer 4102 includes a processor 4105. Although illustrated as a single processor 4105 in FIG. 41, two or more processors 4105 can be used according to particular needs, desires, or particular implementations of the computer 4102 and the described functionality. Generally, the processor 4105 can execute instructions and can manipulate data to perform the operations of the computer 4102, including operations using algorithms, methods, functions, processes, flows, and procedures as described in the present disclosure.

The computer 4102 also includes a database 4106 that can hold data for the computer 4102 and other components connected to the network 4130 (whether illustrated or not). For example, database 4106 can be an in-memory, conventional, or a database storing data consistent with the present disclosure. In some implementations, database 4106 can be a combination of two or more different database types (for example, hybrid in-memory and conventional databases) according to particular needs, desires, or particular implementations of the computer 4102 and the described functionality. Although illustrated as a single database 4106 in FIG. 41, two or more databases (of the same, different, or combination of types) can be used according to particular needs, desires, or particular implementations of the computer 4102 and the described functionality. While database 4106 is illustrated as an internal component of the computer 4102, in alternative implementations, database 4106 can be external to the computer 4102.

The computer 4102 also includes a memory 4107 that can hold data for the computer 4102 or a combination of components connected to the network 4130 (whether illustrated or not). Memory 4107 can store any data consistent with the present disclosure. In some implementations, memory 4107 can be a combination of two or more different types of memory (for example, a combination of semiconductor and magnetic storage) according to particular needs, desires, or particular implementations of the computer 4102 and the described functionality. Although illustrated as a single memory 4107 in FIG. 41, two or more memories 4107 (of the same, different, or combination of types) can be used according to particular needs, desires, or particular implementations of the computer 4102 and the described functionality. While memory 4107 is illustrated as an internal component of the computer 4102, in alternative implementations, memory 4107 can be external to the computer 4102.

The application 4108 can be an algorithmic software engine providing functionality according to particular needs, desires, or particular implementations of the computer 4102 and the described functionality. For example, application 4108 can serve as one or more components, modules, or applications. Further, although illustrated as a single application 4108, the application 4108 can be implemented as multiple applications 4108 on the computer 4102. In addition, although illustrated as internal to the computer 4102, in alternative implementations, the application 4108 can be external to the computer 4102.

The computer 4102 can also include a power supply 4114. The power supply 4114 can include a rechargeable or non-rechargeable battery that can be configured to be either user- or non-user-replaceable. In some implementations, the power supply 4114 can include power-conversion and management circuits, including recharging, standby, and power management functionalities. In some implementations, the power-supply 4114 can include a power plug to allow the computer 4102 to be plugged into a wall socket or a power source to, for example, power the computer 4102 or recharge a rechargeable battery.

There can be any number of computers 4102 associated with, or external to, a computer system containing computer 4102, with each computer 4102 communicating over network 4130. Further, the terms "client," "user," and other appropriate terminology can be used interchangeably, as appropriate, without departing from the scope of the present disclosure. Moreover, the present disclosure contemplates that many users can use one computer 4102 and one user can use multiple computers 4102.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs. Each computer program can include one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal. The example, the signal can be a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The terms "data processing apparatus," "computer," and "electronic computer device" (or equivalent as understood by one of ordinary skill in the art) refer to data processing hardware. For example, a data processing apparatus can encompass all kinds of apparatus, devices, and machines for processing data, including by way of example, a programmable processor, a computer, or multiple processors or computers. The apparatus can also include special purpose logic circuitry including, for example, a central processing unit (CPU), a field programmable gate array (FPGA), or an application-specific integrated circuit (ASIC). In some implementations, the data processing apparatus or special purpose logic circuitry (or a combination of the data processing apparatus or special purpose logic circuitry) can be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example, LINUX, UNIX, WINDOWS, MAC OS, ANDROID, or IOS.

A computer program, which can also be referred to or described as a program, software, a software application, a module, a software module, a script, or code, can be written in any form of programming language. Programming languages can include, for example, compiled languages, interpreted languages, declarative languages, or procedural languages. Programs can be deployed in any form, including as stand-alone programs, modules, components, subroutines, or units for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files storing one or more modules, sub-programs, or portions of code. A computer program can be deployed for execution on one computer or on multiple computers that are located, for example, at one site or distributed across multiple sites that are interconnected by a communication network. While portions of the programs illustrated in the various figures may be shown as individual modules that implement the various features and functionality through various objects, methods, or processes, the programs can instead include a number of sub-modules, third-party services, components, and libraries. Conversely, the features and functionality of various components can be combined into single components as appropriate. Thresholds used to make computational determinations can be statically, dynamically, or both statically and dynamically determined.

The methods, processes, or logic flows described in this specification can be performed by one or more programmable computers executing one or more computer programs to perform functions by operating on input data and generating output. The methods, processes, or logic flows can also be performed by, and apparatus can also be implemented as, special purpose logic circuitry, for example, a CPU, an FPGA, or an ASIC.

Computers suitable for the execution of a computer program can be based on one or more of general and special purpose microprocessors and other kinds of CPUs. The elements of a computer are a CPU for performing or executing instructions and one or more memory devices for storing instructions and data. Generally, a CPU can receive instructions and data from (and write data to) a memory. A computer can also include, or be operatively coupled to, one or more mass storage devices for storing data. In some implementations, a computer can receive data from, and transfer data to, the mass storage devices including, for example, magnetic, magneto-optical disks, or optical disks. Moreover, a computer can be embedded in another device, for example, a mobile telephone, a personal digital assistant (PDA), a mobile audio or video player, a game console, a global positioning system (GPS) receiver, or a portable storage device such as a universal serial bus (USB) flash drive.

Computer-readable media (transitory or non-transitory, as appropriate) suitable for storing computer program instructions and data can include all forms of permanent/non-permanent and volatile/non-volatile memory, media, and memory devices. Computer-readable media can include, for example, semiconductor memory devices such as random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices. Computer-readable media can also include, for example, magnetic devices such as tape, cartridges, cassettes, and internal/removable disks. Computer-readable media can also include magneto-optical disks and optical memory devices and technologies including, for example, digital video disc (DVD), CD-ROM, DVD+/-R, DVD-RAM, DVD-ROM, HD-DVD, and BLURAY. The memory can store various objects or data, including caches, classes, frameworks, applications, modules, backup data, jobs, web pages, web page templates, data structures, database tables, repositories, and dynamic information. Types of objects and data stored in memory can include parameters, variables, algorithms, instructions, rules, constraints, and references. Additionally, the memory can include logs, policies, security or access data, and reporting files. The processor and the memory can be supplemented by, or incorporated in, special purpose logic circuitry.

Implementations of the subject matter described in the present disclosure can be implemented on a computer having a display device for providing interaction with a user, including displaying information to (and receiving input from) the user. Types of display devices can include, for example, a cathode ray tube (CRT), a liquid crystal display (LCD), a light-emitting diode (LED), and a plasma monitor. Display devices can include a keyboard and pointing devices including, for example, a mouse, a trackball, or a trackpad. User input can also be provided to the computer through the use of a touchscreen, such as a tablet computer surface with pressure sensitivity or a multi-touch screen using capacitive or electric sensing. Other kinds of devices can be used to provide for interaction with a user, including to receive user feedback including, for example, sensory feedback including visual feedback, auditory feedback, or tactile feedback. Input from the user can be received in the form of acoustic, speech, or tactile input. In addition, a computer can interact with a user by sending documents to, and receiving documents from, a device that is used by the user. For example, the computer can send web pages to a web browser on a user's client device in response to requests received from the web browser.

The term "graphical user interface," or "GUI," can be used in the singular or the plural to describe one or more graphical user interfaces and each of the displays of a particular graphical user interface. Therefore, a GUI can represent any graphical user interface, including, but not limited to, a web browser, a touch screen, or a command line interface (CLI) that processes information and efficiently presents the information results to the user. In general, a GUI can include a plurality of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server. Moreover, the computing system can include a front-end component, for example, a client computer having one or both of a graphical user interface or a Web browser through which a user can interact with the computer. The components of the system can be interconnected by any form or medium of wireline or wireless digital data communication (or a combination of data communication) in a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) (for example, using 802.11 a/b/g/n or 802.20 or a combination of protocols), all or a portion of the Internet, or any other communication system or systems at one or more locations (or a combination of communication networks). The network can communicate with, for example, Internet Protocol (IP) packets, frame relay frames, asynchronous transfer mode (ATM) cells, voice, video, data, or a combination of communication types between network addresses.

Wireless connections within the scope of the present disclosure include wireless protocols, such as, 802.15 protocols (e.g., a BLUETOOTH^{®}), 802.11 protocols, 802.20 protocols (e.g., WI-FI^{®}), or a combination of different wireless protocols.

The computing system can include clients and servers. A client and server can generally be remote from each other and can typically interact through a communication network. The relationship of client and server can arise by virtue of computer programs running on the respective computers and having a client-server relationship.

Cluster file systems can be any file system type accessible from multiple servers for read and update. Locking or consistency tracking may not be necessary since the locking of exchange file system can be done at application layer. Furthermore, Unicode data files can be different from non-Unicode data files.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the spirit and scope of the present disclosure.

Furthermore, any claimed implementation is considered to be applicable to at least a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

While the above describes example implementations of the present disclosure, these descriptions should not be viewed in a limiting sense. Rather, other variations and modifications may be made without departing from the scope and spirit of the present disclosure as defined in the appended claims.

## Claims

1. A method for controlling an adjustable pulley system to detect a fault condition of the adjustable pulley system that includes a driver pulley, a driven pulley, and an endless belt wrapped around the driver pulley and the driven pulley, the method comprising:
rotating an input shaft of the adjustable pulley system to a selected rotation speed;
altering an effective diameter of the driver pulley of the adjustable pulley system connected to the input shaft;
altering an effective diameter of the driven pulley of the adjustable pulley in response to alteration of the effective diameter of the driver pulley;
measuring a rotational speed of the output shaft of the pulley system;
comparing a rotational speed of an output shaft of the adjustable pulley system to a selected criterion, the driven pulley connected to the output shaft;
determining whether the rotational speed of the output shaft satisfies the selected criterion; and
altering a relationship between an idler pulley and the input shaft or the output shaft in response to the rotational speed of the output shaft not satisfying the selected criterion.

2. The method of claim 1, wherein altering the relationship between the idler pulley and the input shaft or the output shaft in response to the rotational speed of the output shaft not satisfying the selected criterion includes altering a position of the idler pulley in at least one direction relative to the input shaft or the output shaft.

3. The method of claim 1, wherein altering the effective diameter of the driver pulley includes altering a size of a circumferential groove of the driver pulley.

4. The method of claim 1, wherein altering the effective diameter of the driver pulley includes reducing the effective diameter of the driver pulley to the smallest effective diameter supported by the driver pulley.

5. The method of claim 4, wherein altering the effective diameter of the driven pulley of the adjustable pulley in response to alteration of the effective diameter of the driver pulley includes increasing the effective diameter of the driven pulley.

6. The method of claim 1, wherein altering the effective diameter of the driver pulley includes increasing the effective diameter of the driver pulley to the largest effective diameter supported by the driver pulley.

7. The method of claim 6, wherein altering the effective diameter of the driven pulley of the adjustable pulley in response to alteration of the effective diameter of the driver pulley includes reducing the effective diameter of the driven pulley.

8. An adjustable pulley system including:
a driver pulley;
an input shaft connected to the driver pulley;
a driven pulley;
an output shaft connected to the driven pulley;
an idler pulley;
an endless belt wrapped around the driver pulley and the driven pulley and engaged with the idler pulley; and
an electronic controller including:
one or more processors; and
a non-transitory computer-readable storage medium coupled to the one or more processors and storing programming instructions for execution by the one or more processors, the programming instructions instruct the one or more processors to:
rotate the input shaft to a selected rotation speed;
alter an effective diameter of the driver pulley connected to the input shaft;
alter an effective diameter of the driven pulley in response to alteration of the effective diameter of the driver pulley;
measure a rotational speed of the output shaft;
compare a rotational speed of an output shaft to a selected criterion;
determine whether the rotational speed of the output shaft satisfies the selected criterion; and
alter a relationship of the idler pulley relative to the input shaft or the output shaft in response to the rotational speed not satisfying the selected criterion.

9. The adjustable pulley system of claim 8, wherein the programming instructions to alter the relationship between the idler pulley and the input shaft or the output shaft in response to the rotational speed of the output shaft not satisfying the selected criterion include programming instructions that instruct the one or more processors to alter a position of the idler pulley relative to the input shaft or the output shaft.

10. The adjustable pulley system of claim 8, wherein the programming instructions to alter the effective diameter of the driver pulley include programming instructions that cause the one or more processors to alter a size of a circumferential groove of the driver pulley.

11. The adjustable pulley system of claim 10, wherein the programming instructions to alter the size of the circumferential groove include programming instructions that instruct the one or more processors to alter an offset of a first sheave portion of the driver pulley relative to the second sheave portion of the driver pulley.

12. The adjustable pulley system of claim 8, wherein the programming instructions to alter the effective diameter of the driver pulley include programming instructions that instruct the one or more processors to reduce the effective diameter of the driver pulley to the smallest effective diameter supported by the driver pulley.

13. The adjustable pulley system of claim 8, wherein the programming instructions to alter the effective diameter of the driver pulley include programming instructions that instruct the one or more processors to increase the effective diameter of the driver pulley to the largest effective diameter supported by the driver pulley.

14. The adjustable pulley system of claim 8, wherein the endless belt includes an inner surface and an outer surface, and wherein the idler pulley is engaged with the inner surface of the endless belt.

15. The adjustable pulley system of claim 8, wherein the endless belt includes an inner surface and an outer surface, and wherein the idler pulley is engaged with the outer surface of the endless belt.

## Amended claims

### Amended claims in accordance with Rule 137(2) EPC.

1. A method for controlling an adjustable pulley system (2000, 2100, 2200, 2300) to detect a fault condition of the adjustable pulley system (2000, 2100, 2200, 2300) that includes a driver pulley (2002), a driven pulley (2012), an idler pulley (2022) with variable position and an endless belt (2018) wrapped around the driver pulley (2002), the idler pulley (2022) and the driven pulley (2012), the method **characterized by** comprising:
rotating an input shaft (2008) of the adjustable pulley system (2000, 2100, 2200, 2300) to a selected rotation speed;
altering an effective diameter of the driver pulley (2002) of the adjustable pulley system (2000, 2100, 2200, 2300) connected to the input shaft (2008);
altering an effective diameter of the driven pulley (2012) of the adjustable pulley in response to alteration of the effective diameter of the driver pulley (2002);
measuring a rotational speed of the output shaft (2014) of the pulley system (2000, 2100, 2200, 2300);
comparing a rotational speed of an output shaft (2014) of the adjustable pulley system (2000, 2100, 2200, 2300) to a selected criterion, the driven pulley (2012) connected to the output shaft (2014);
determining whether the rotational speed of the output shaft (2014) satisfies the selected criterion; and
altering the position of the idler pulley (2022) in at least one direction relative to the input shaft (2008) or the output shaft (2014) between the idler pulley (2022) and the input shaft (2008) or the output shaft (2014) in response to the rotational speed of the output shaft (2014) not satisfying the selected criterion.

2. The method of claim 1, wherein altering the effective diameter of the driver pulley (2002) includes altering a size of a circumferential groove (210) of the driver pulley (2002).

3. The method of claim 1, wherein altering the effective diameter of the driver pulley (2002) includes reducing the effective diameter of the driver pulley (2002) to the smallest effective diameter supported by the driver pulley (2002).

4. The method of claim 4, wherein altering the effective diameter of the driven pulley (2012) of the adjustable pulley in response to alteration of the effective diameter of the driver pulley (2002) includes increasing the effective diameter of the driven pulley (2012).

5. The method of claim 1, wherein altering the effective diameter of the driver pulley (2002) includes increasing the effective diameter of the driver pulley (2002) to the largest effective diameter supported by the driver pulley (2002).

6. The method of claim 5, wherein altering the effective diameter of the driven pulley (2012) of the adjustable pulley in response to alteration of the effective diameter of the driver pulley (2002) includes reducing the effective diameter of the driven pulley (2012).

7. An adjustable pulley system (2000, 2100, 2200, 2300) including:
a driver pulley (2002);
an input shaft (2008) connected to the driver pulley (2002);
a driven pulley (2012);
an output shaft (2014) connected to the driven pulley (2012);
an idler pulley (2022) with a variable position; and
an endless belt (2018) wrapped around the driver pulley (2002) and the driven pulley (2012) and engaged with the idler pulley (2022);
wherein an effective diameter (2020) of the driven pulley (2012) is alterable in response to a force applied to the driven pulley (2012) by the endless belt (2018), **characterized by** comprising an electronic controller including:
one or more processors (4105); and
a non-transitory computer-readable storage medium coupled to the one or more processors (4105) and storing programming instructions for execution by the one or more processors (4105), the programming instructions instruct the one or more processors (4105) to:
rotate the input shaft (2008) to a selected rotation speed;
control an actuator (2004) to alter an effective diameter of the driver pulley (2002) connected to the input shaft (2008), such that the effective diameter of the driven pulley (2012) alters;
measure a rotational speed of the output shaft (2014);
compare a rotational speed of an output shaft (2014) to a selected criterion;
determine whether the rotational speed of the output shaft (2014) satisfies the selected criterion; and
to control an actuator (2023) to alter the position of the idler pulley (2022) relative to the input shaft (2008) or the output shaft (2014) in response to the rotational speed not satisfying the selected criterion.

8. The adjustable pulley system (2000, 2100, 2200, 2300) of claim 7, wherein the programming instructions to alter the effective diameter of the driver pulley (2002) include programming instructions that cause the one or more processors (4105) to alter a size of a circumferential groove (210) of the driver pulley (2002).

9. The adjustable pulley system (2000, 2100, 2200, 2300) of claim 8, wherein the programming instructions to alter the size of the circumferential groove (210) include programming instructions that instruct the one or more processor (4105)s to alter an offset of a first sheave portion of the driver pulley (2002) relative to the second sheave portion of the driver pulley (2002).

10. The adjustable pulley system (2000, 2100, 2200, 2300) of claim 7, wherein the programming instructions to alter the effective diameter of the driver pulley (2002) include programming instructions that instruct the one or more processor (4105)s to reduce the effective diameter of the driver pulley (2002) to the smallest effective diameter supported by the driver pulley (2002).

11. The adjustable pulley system (2000, 2100, 2200, 2300) of claim 7, wherein the programming instructions to alter the effective diameter of the driver pulley (2002) include programming instructions that instruct the one or more processor (4105)s to increase the effective diameter of the driver pulley (2002) to the largest effective diameter supported by the driver pulley (2002).

12. The adjustable pulley system (2000, 2100, 2200, 2300) of claim 7, wherein the endless belt (2018) includes an inner surface and an outer surface, and wherein the idler pulley (2022) is engaged with the inner surface of the endless belt (2018).

13. The adjustable pulley system (2000, 2100, 2200, 2300) of claim 7, wherein the endless belt (2018) includes an inner surface and an outer surface, and wherein the idler pulley (2022) is engaged with the outer surface of the endless belt (2018).
